# EUROPEAN PATENT APPLICATION

(11) **EP 4 001 237 A1**
(43) Date of publication of application: **25.05.2022**
(21) Application number: 20826146.1
(22) Date of filing: 26.05.2020
(51) Int. Cl.: C04B 22/08, C04B 22/10, C04B 22/16, C04B 24/02, C04B 24/12, C04B 24/26, C04B 24/38, C04B 28/08, C09D 7/43, C09D 7/47, C09D 7/61, C09D 1/10

(54) **BLAST FURNACE SLAG-TYPE PAINT**

(30) Priority: 20.06.2019 JP 2019114983
(71) Applicant: Fukko Co., Ltd., Yamanashi 406-0812 (JP)
(72) Inventor: SUGIYAMA, Mitsuaki, Fuefuki-shi Yamanashi 406-0812 (JP); SUGIYAMA, Nariaki, Fuefuki-shi Yamanashi 406-0812 (JP); TAKEI, Akira, Fuefuki-shi Yamanashi 406-0812 (JP)
(74) Representative: Glawe, Delfs, Moll
(86) International application number: PCT/JP2020/020771
(87) International publication number: WO 2020/255646

(57) **Abstract**

To provide a blast furnace slag-type paint using a liquid inorganic material composed of a fluid suspension.

A blast furnace slag-type two-part paint in which a stabilized aqueous suspension containing the following blast furnace slags is contained as the main agent, an alkaline liquid having dissolved therein sodium silicate, sodium carbonate, or potassium carbonate that induces a hydraulic reaction of the suspension serves as the hydraulic reaction inducer, and the main agent and the hydraulic reaction inducer are separately packaged.

<Components of the main agent>

(A) 0.5 to 42% by weight of a high-blast-furnace-slag-content blast furnace slag having a blast furnace slag content of 60% or more with respect to the total weight of the blast furnace slag;
(B) 0.1 to 20% by weight of a blocking agent containing a phosphorus-containing compound;
(C) 0.3 to 5%, preferably 0.3 to 2.5% of a blocking agent differing from a phosphorus-containing compound;
(D) water retention agent;
others.

## Description

### Technical Field

The present invention relates to a blast furnace slag-type two-part or one-part aqueous paint containing a blast furnace slag which can be cured at ordinary temperature as the main component and a liquid inorganic material composed of a liquid suspension containing a blast furnace slag as the principal component.

### Background Art

In general, "inorganic paint" refers to a paint that is not mainly composed of organic resins (artificially prepared resins such as acrylic, urethane, silicon, and fluorine resins), but is mainly composed of minerals (ceramic or silicon is often the main component).

However, all conventional inorganic paints are difficult to form a coating film since they are inferior in bonding strength (binder effect) and a film forming property at ordinary temperature with only inorganic materials, so resin components excellent in bonding strength and a film forming property at ordinary temperature are blended in large amount.

The present inventors have intensively studied to develop an alumina cement-based paint in which most of the components are composed of inorganic materials and the bonding strength (binder effect) and film-forming property do not depend on the organic resin and resultantly came up with the use of an aqueous suspension containing an alumina cement containing a hydraulic binder previously called "slurry" (a suspended body, which is a mixture of minerals, sludge, etc. in a liquid), namely, a liquid inorganic material composed of a fluid suspension, leading to completion of the alumina cement-based paint of the present invention.

Suitable examples of such a fluid suspension include EXALT (trade name) manufactured by KERNEOS (France). This EXALT can be said to be an alumina cement floating on water, and is not a powder since it is obtained by liquefying an alumina cement, and if EXALT is used, an unprecedented paint composed of a liquid alumina cement can be made.

The stabilization of the fluid suspension is performed by stopping the hydration of the hydraulic binder by adding a blocking agent (or an inhibitor). A known blocking agent containing a phosphorus-containing compound selected from optional compounds that can be reacted with at least one metaphosphoric acid, phosphorous acid, phosphoric acid, phosphonic acid and water to form any of these compounds is used to stabilize a hydraulic binder-based aqueous suspension containing an alumina cement.

Further, boric acid and a borate compound can be used as the blocking agent described above.

Generally, the cement powder has large particles (at least, 100 to 400 microns) and cannot be applied thinly. On the other hand, by liquefying (40 microns), it is possible to apply a thin coat, and by using this alumina cement-based paint, it is also possible to impart various designs to the coated surface.

### Prior Art Document

### Patent Document

Patent Document 1: U.S. Patent Publication No. 2014-0343194
Patent Document 2: Japanese Patent No. 6521474

### Summary of the Invention

### Problem to be Solved by the Invention

The present inventors have diligently studied the case where an alumina cement is replaced with a blast furnace slag in relation to the alumina cement-based paint, and as a result, the same effect as in the case of an alumina cement could be obtained even when a blast furnace slag was used, therefore, the present invention has an object of providng a liquid inorganic material composed of a liquid suspension containing a blast furnace slag as the principal component, and a blast furnace slag-type two-part or one-part aqueous paint using the fluid suspension.

That is, the fluid suspension remains liquid for a period of weeks to months, preferably at least one month, more preferably two months, or more, most preferably at least six months, meaning that even if it is stored at a temperature in the range of about 15°C (room temperature) to 55°C (high temperature), the liquid suspension remains intact. Of course, it does not separate during storage or transportation.

### Means for Solving the Problem

That is, the blast furnace slag-type two-part or one-part aqueous paint of the present invention is characterized in that a stabilized blast furnace slag aqueous suspension containing blast furnace slags described below is contained as the principal component of the main agent, an alkaline liquid having dissolved therein sodium silicate, sodium carbonate, or potassium carbonate that induces a hydraulic reaction of the suspension serves as the hydraulic reaction inducer, and the main agent and the hydraulic reaction inducer are packaged separately or together:

### <Components of the main agent>

(A) A high-blast-furnace-slag-content blast furnace slag suspension having a blast furnace slag content of 10 to 60% by weight or more with respect to the total weight of the blast furnace slag aqueous suspension, in an amount of 0.5% by weight to 42% by weight in the composition of the main agent

The blast furnace slag used here has the following components and properties (specific surface area, activity index, particle size) regardless of the type of the furnace to be produced.

**[Reference Table 1]**

| Composition example of steel slag (unit: %) | | | | | | |
|---|---|---|---|---|---|---|
| Type component | Blast furnace slag | Converter furnace system slag | Electric furnace system slag | | Andesite (reference) | Ordinary cement (reference) |
| | | | Oxidized slag | Reduced slag | | |
| CaO | 41.7 | 45.8 | 22.8 | 55.1 | 5.8 | 64.2 |
| SiO₂ | 33.8 | 11 | 12.1 | 18.8 | 59.6 | 22 |
| T-Fe | 0.4 | 17.4 | 29.5 | 0.3 | 3.1 | 3 |
| MgO | 7.4 | 6.5 | 4.3 | 7.3 | 2.8 | 1.5 |
| Al₂O₃ | 13.4 | 1.9 | 6.8 | 16.5 | 17.3 | 5.5 |
| S | 0.8 | 0.06 | 0.2 | 0.4 | - | 2 |
| P₂O₅ | 0.1 | 1.7 | 0.3 | 0.1 | - | - |
| MnO | 0.3 | 5.3 | 7.9 | 1 | 0.2 | - |

**[Reference Table 2]**

| Specific surface area, activity index, and particle size of blast furnace slag fine powder | | | | | | | | |
|---|---|---|---|---|---|---|---|---|
| | | JIS A 6206 standard product | | | | Non -standard product | | reference |
| | | 3000 | 4000 | 6000 | 8000 | 10000 | 20000 | Ordinary Portland cement |
| Specific surface area (cm²/g) | | 2750 or more and less than 3500 | 3500 or more and less than 5000 | 5000 or more and less than 7000 | 7,000 or more and less than 10,000 | 10930 | 21600 | ? |
| (note) Activity index (%) | Material age of 7 days | ? | 55 or more | 75 or more | 95 or more | 110 | 115 | 46.2 |
| | Material age of 28 days | 60 or more | 75 or more | 95 or more | 105 or more | 103 | 107 | 63.9 |
| | Material age of 91 days | 80 or more | 95 or more | ? | ? | ? | 106 | ? |
| Cumulative volume fraction Particle size (D50) (µm) | 15.2 | 14.9 | 8.3 | 4.5 | 3.7 | 1.8 | ? | |

| | | | | | | | | |
|---|---|---|---|---|---|---|---|---|
| Note) Activity index: The ratio of strength to mortar using ordinary cement. In JIS A 6206, the water binder ratio is 50% for a 1:3 mortar. Replace the target slag by 50%. In JASS5T, the water binder ratio is 30% for a 1:1.4 mortar. Replace the target powder by 10%. (Standard for high-strength cement) | | | | | | | | |

### (B) The amount of the blocking agent containing a phosphorus-containing compound in the blast furnace slag aqueous suspension is 0.1% by weight to 20% by weight.

### (C) The amount of the blocking agent differing from a phosphorus-containing compound in the blast furnace slag aqueous suspension, for example, the blocking agent composed of a boric acid or borate compound, is 0.3 to 5%, preferably 0.3 to 2.5%

### (D) Water retention agent

Here, the water retention agent includes not only substances simply having high water absorption and water retention such as organic fibers, porous minerals, polysaccharides and the like, but also oily substances such as organic solvents, organic resins and the like having an action of suppressing water evaporation.

### (E) Interfacial tension adjuster

Dispersing agents, leveling agents, defoaming agents, foam suppressing agents, wetting agents and the like are listed that are generally used as paint additives.

### (F) Viscosity (tenacious property) adjuster

The viscosity (tenacious property) adjuster here includes not only artificially synthesized chemical substances generally used in paints in recent years, but also naturally occurring substances that have been traditionally used in industries of plasterer materials, dyeing materials, lacquerware materials, leather processed materials, wood processed materials, processed food materials, and the like.

### (G) Color pigment

The term "color pigment" herein referred to means an inorganic pigment or an organic pigment added for the purpose of coloring, which is generally used in the fields of paints and inks, and is a solid powdered pigment or a processed pigment liquefied by dispersing in a solvent.

Further, a fired pigment used in glazes for pottery and porcelain is also a suitable color pigment because it is not discolored by chemicals and ultraviolet ray.

### (H) Functional pigment

The term "functional pigment" herein referred to means a pigment having optical functions such as brilliance, luminescence, fluorescence, light interference, transparency, reflection (absorption) of a specific wavelength, and the like.

In addition, it is a pigment having electrical functions as conductors or semiconductors such as graphite powders, metal powders, metal oxide powders and the like or a pigment with an antirust effect that has sacrificial corrosiveness or electrochemical functions of coordinating with a metal ion to form a complex or chelate structure to delay the corrosion rate.

### (I) Extender pigment

Here, the extender pigment includes fine particle fillers such as silica fume, fly ash and the like, which are added for the purpose of forming a solid coating film, in addition to the conventional increase in solid content for thickening the film and preventing thinning of the finished product, and also reaction-curable gypsum, alumina cements, blast furnace slags, silicates, calcium hydroxide, and the like, and further includes needle-like or scale-like crystalline minerals and fiber-shaped inorganic and organic substances added for the purpose of imparting toughness to a coating film.

### (J) Antibacterial agent, preservative, antirust agent

Here, the antibacterial agent, preservative, and antirust agent include not only chemically synthesized chemicals generally used for paints but also naturally derived substances such as polyphenols extracted from plants.

In addition, the antirust agent also includes a silane-based compound that makes the coating film in contact with a steel material hydrophobic in order to prevent a moist environment (covered with an electrolyte) in which rust is likely to occur, although the antirust agent does not have a direct antirust function.

### (K) Solvent

The solvent in the present invention means water, but also includes a mixed solution in which polyhydric alcohols, polysaccharides, and an organic solvent having a co-boiling effect are mixed with water to adjust evaporation and the boiling point, as the solvent.

In the blast furnace slag aqueous suspension which is the principal component of the main agent of the blast furnace slag-type two-part paint of the present invention, the blocking agent containing a phosphorus-containing compound is a blocking agent containing a phosphorus-containing compound selected from optional compounds capable of reacting with at least one metaphosphoric acid, phosphorous acid, phosphoric acid, phosphonic acid and water to form any of these compounds, and is also characterized in that a phosphorus-containing compound or a boric acid or borate compound is contained in an amount of 0.1% by weight to 20% by weight with respect to the total weight of the blast furnace slag.

In the blast furnace slag aqueous suspension which is the principal component of the main agent of the blast furnace slag-type two-part paint of the present invention, the compound capable of forming metaphosphoric acid, phosphorous acid, phosphoric acid or phosphonic acid is also characterized by being selected from phosphorus pentoxide, pyrophosphoric acid, tripolyphosphoric acid, aminotrimethylenephosphonic acid, 2-aminoethylphosphonic acid, 1-hydroxyethylidene-1,1-diphosphonic acid, ethylenediaminetetramethylenephosphonic acid, tetramethylenediaminetetramethylenephosphonic acid, hexamethylenediaminetetramethylenephosphonic acid, pentamethylene diethylenetriamine phosphonate, phostricarboxylic acid, N-(phosphonomethyl) iminodiacetic acid, 2-carboxyethylphosphonic acid, and 2-hydroxyphosphonocarboxylic acid, and also sodium metaborate, sodium tetraborate, and disodium octaboron tridecaoxide tetrahydrate which are boric acid and borate compounds.

In the blast furnace slag aqueous suspension which is the principal component of the main agent of the blast furnace slag-type two-part paint of the present invention, the blast furnace slag is an alumina-containing blast furnace slag, and is also characterized in that a relative weight of 0.5 to 20% by weight of a phosphorus-containing compound is contained in the blast furnace slag aqueous suspension.

In the blast furnace slag-type two-part paint of the present invention, the hydraulic reaction inducer that induces a hydraulic reaction of the main agent is also characterized by being composed of a substance which has high solubility in water containing sodium silicate, sodium carbonate, and potassium carbonate, and becomes a highly alkaline aqueous solution.

In the blast furnace slag-type two-part paint of the present invention, sodium silicate in the hydraulic reaction inducer that induces a hydraulic reaction of the main agent is a silicate known to coordinate as an anion to a multivalent metal ion in the aqueous solution, therefore, it is one having an effect of suppressing the elution of a calcium ion in the body and in the coating film (paint).

In the blast furnace slag-type two-part paint of the present invention, the hydraulic reaction inducer that induces a hydraulic reaction of the main agent is also characterized in that it does not use a calcium salt compound with which a free calcium ion that causes precipitation of efflorescence is likely to exist when made into an aqueous solution or a substance that changes to calcium hydroxide.

The blast furnace slag-type one-part paint of the present invention is characterized in that a stabilized blast furnace slag aqueous suspension containing blast furnace slags described below is contained as the principal component of the main agent, a hydraulic reaction inducer containing sodium silicate as the main component is used, and the main agent and the hydraulic reaction inducer are packaged together.

### <Principal components of the main agent>

(A) A blast furnace slag suspension containing blast furnace slags with an alumina content of 1.9% by weight to 16.5% by weight or more in an amount of 30% by weight or more with respect to the total weight of the aqueous suspension, in an amount of 0.5% by weight to 42% by weight in the composition of the main agent
(B) The amount of the blocking agent containing a phosphorus-containing compound in the blast furnace slag aqueous suspension is 0.1% by weight to 20% by weight.
(C) The amount of the blocking agent differing from a phosphorus-containing compound in the blast furnace slag aqueous suspension, for example, the blocking agent composed of a boric acid or borate compound, is 0.3 to 5%, preferably 0.3 to 2.5%
(D) Water retention agent
   Here, the water retention agent includes not only substances simply having high water absorption and water retention such as organic fibers, porous minerals, polysaccharides and the like, but also oily substances such as organic solvents, organic resins and the like having an action of suppressing water evaporation.
(E) Interfacial tension adjuster
   Dispersing agents, leveling agents, defoaming agents, foam suppressing agents, wetting agents and the like are listed that are generally used as paint additives.
(F) Viscosity (tenacious property) adjuster
   The viscosity (tenacious property) adjuster here includes not only artificially synthesized chemical substances generally used in paints in recent years, but also naturally occurring substances that have been traditionally used in industries of plasterer materials, dyeing materials, lacquerware materials, leather processed materials, wood processed materials, processed food materials, and the like.
(G) Color pigment
   The term "color pigment" herein referred to means an inorganic pigment or an organic pigment added for the purpose of coloring, which is generally used in the fields of paints and inks, and is a solid powdered pigment or a processed pigment liquefied by dispersing in a solvent.
   Further, a fired pigment used in glazes for pottery and porcelain is also a suitable color pigment because it is not discolored by chemicals and ultraviolet ray.
(H) Functional pigment
   The term "functional pigment" herein referred to means a pigment having optical functions such as brilliance, luminescence, fluorescence, light interference, transparency, reflection (absorption) of a specific wavelength, and the like.
   In addition, it is a pigment having electrical functions as conductors or semiconductors such as graphite powders, metal powders, metal oxide powders and the like or a pigment with an antirust effect that has sacrificial corrosiveness or electrochemical functions of coordinating with a metal ion to form a complex or chelate structure to delay the corrosion rate.
(I) Extender pigment
   Here, the extender pigment includes fine particle fillers such as silica fume, fly ash and the like, which are added for the purpose of forming a solid coating film, in addition to the conventional increase in solid content for thickening the film and preventing thinning of the finished product, and also reaction-curable gypsum, alumina cements, blast furnace slags, silicates, calcium hydroxide, and the like, and further includes needle-like or scale-like crystalline minerals and fiber-shaped inorganic and organic substances added for the purpose of imparting toughness to a coating film.
(J) Antibacterial agent, preservative, antirust agent
   Here, the antibacterial agent, preservative, and antirust agent include not only chemically synthesized chemicals generally used for paints but also naturally derived substances such as polyphenols extracted from plants.
   In addition, the antirust agent also includes a silane-based compound that makes the coating film in contact with a steel material hydrophobic in order to prevent a moist environment (covered with an electrolyte) in which rust is likely to occur, although the antirust agent does not have a direct antirust function.
(K) Solvent
   The solvent in the present invention means water, but also includes a mixed solution in which polyhydric alcohols, polysaccharides, and an organic solvent having a co-boiling effect are mixed with water to adjust evaporation and the boiling point, as the solvent.

### Effect of the Invention

The effects of the blast furnace slag-type paint of the present invention will be described in detail below.
(1) The performance of the blast furnace slag as the main agent (principal component), which is differing from that of general cements, can be used as it is in liquid form. (Normally, powdered hydraulic reaction substances such as the Portland cement cannot be kept liquid for a long period of time, and even solidified materials that have been hardened by normal use cannot be expected to have performances such as fire resistance, quick-strength performance, corrosion resistance, chemical resistance and the like.).
   (a) Unlike resins, it is possible to develop the strength of a blast furnace slag solidified body (pencil hardness of about 4H or more) just by mixing it with a liquid hydraulic reaction inducer at ordinary temperature without applying heat. As described above, the developed strength of the blast furnace slag is high, but in the case of resin-based paints, it is difficult to develop the strength unless heat is applied.
   (b) Since the main agent (principal component) is a blast furnace slag, the strength of the inorganic material is demonstrated, and a super-durable paint (coating film) can be formed.
   (c) Since the principal component is a blast furnace slag, it has a salt-shielding property, and is suitable for finishing structures on the seaside where a salt damage occurs and in areas where an antifreeze agent (calcium chloride) is frequently sprayed in cold weather.
   (d) The normal Portland cement is weak against an acid, but a blast furnace slag is strong against an acid and can prevent the neutralization of concrete due to influences by the acid rain, a CO₂ gas, a NOx gas, and a SOx gas.
   (e) Since the principal component is a blast furnace slag, it is not affected by ultraviolet ray (UV) and maintains a good coating film for a long period of time.
   (f) Since a blast furnace slag has high wear resistance, when it is painted on a wall surface, that is constantly exposed to dust by the wind, to form a coating film on the surface, it will be less likely to be scratched, and stains due to dust adhesion (biting into the coating film) can be prevented.
   (g) Since the principal component is a blast furnace slag, there is no combustion due to open flame. Therefore, since the coating film does not ignite due to the occurrence of a fire, it is possible to prevent the fire spread due to ignition from the coating film.
   (h) Unlike the organic resin-based paint which is mostly composed of organic substances, it is composed of an inorganic component that is hard to burn and does not gasify even at high heat, so paints and coating films that do not generate a gas even when exposed to high temperatures can be produced.
   (i) A finishing material using the normal Portland cement has a short work life after adding water (about 1 to 2 hours at ordinary temperature) and has poor workability, while the work life of the blast furnace slag-type two-part paint of the present invention is equivalent to the work life (8 hours or more) of a commercially available two-liquid reaction-curable paint, so the workability is good.

By limiting the alkaline curing agent composition that induces a hydraulic reaction to sodium silicate, it is possible to realize a one-part paint that facilitates on-site work and prevents mistakes in blending of the main agent and the curing agent (forgetting to add the curing agent).
(j) Phosphoric acid compounds have a reducing action (antioxidant action), and boric acid has a bactericidal action.

Furthermore, it has an action of coordinating with an iron ion of a phosphoric acid compound to form a complex, delaying the elution (corrosion) of a metal, and a reducing action of changing red rust (ferric oxide) into passive black rust (triiron tetroxide: Fe₃O₄). This not only contributes to the storage stability of the paint, but also can impart rust resistance to the coating film performance after film formation.

In view of the above action, it exerts a role as a preservative that suppresses the corrosion of organic compounds including water contained in the paint for a long period of time.

It also has an effect of suppressing discoloration (rust juice) due to derivation of trace iron contained in mineral powders such as naturally occurring fine aggregates, extender pigments and the like blended in the paint.

(2) Since a paint can be prepared in the form of liquid, it is not necessary to stir the cement-containing powder with water at the site. Of course, because of liquefying, a predetermined formulation can be obtained only by simply stirring with a hand mixer at the site.

On the other hand, when the inorganic material is a powder, it is necessary to stir it with a mortar mixer (large, heavy), and additionally, the powder generates dust, and it is also necessary to measure water, which imposes a heavy burden on craftworkers.

(3) A paint prepared in the form of liquid can be colored with a liquid pigment in a factory, and the accurate coloration can be attained. If the paint is a powder, it is difficult to disperse the pigment because the powder pigment is added and used at the construction site for coloring, and the accurate coloration takes a long period of time. Moreover, a powder pigment is usually difficult to disperse, and even if premixed in a factory, when the mixing time is short, the dispersion of the color pigment is poor and the aggregated pigments cannot be dissipated, as a result, streaks of the pigment are generated during construction and the color may be changed depending on the stirring time. On the other hand, a paint prepared in the form of liquid does not have such a problem, and stable color can be obtained by simple stirring.

(4) With conventional paints containing an organic resin as the principal component, it is impossible to apply when the water content of the coating base is high, the alkalinity is high, and the construction environment is under high humidity, while the blast furnace slag-type paint of the present invention can be applied under the above-mentioned conditions, and forms a coating film finished without any problem in terms of design and having sufficiently satisfied performance.

(5) The blast furnace slag-type paint of the present invention can obtain high hardness and high strength even in a coating film obtained by curing at ordinary temperature, but it has a nature of further increasing the hardness and the strength when heat is applied. By utilizing this property, it is possible to develop hardness and strength, which was conventionally said to be impossible, in conventional industrial products using organic resin-based paints composed of almost organic substances, and application in the present field is possible. In particular, the blast furnace slag-type paint of the present invention can obtain high hardness and high strength by heating at temperatures lower than 100°C, while the conventional organic resin-based paints composed of almost organic substances require heating at several hundred degrees Celsius in order to obtain high hardness and high strength. From the above, it has high utility value as an industrial paint in terms of performances and energy saving.

### Brief Description of Drawings

Fig. 1 shows a property of a silicate of coordinating as an anion such as an orthosilicate ion (SiO₄₄) or pyrosilicate ion (Si₂O₇₆) to a polyvalent metal ion (calcium ion, iron ion, aluminum ion, etc.) in an aqueous solution, to form a gelled structure.
Fig. 2 is a graph showing the wavelengths in the region of ultraviolet irradiated from a metal halide lamp.

### Modes for Carrying Out the Invention

Hereinafter, embodiments of the blast furnace slag-type two-component paint of the present invention will be described in detail with reference to examples.

In the blast furnace slag-type two-part paint of the present invention, a water dispersion type blast furnace slag which is a water dispersed body of a blast furnace slag and with which a hydraulic reaction is induced in the presence of an alkaline aqueous solution is contained as the principal component of the main agent.

The blast furnace slag contains lime (CaO) and silica (SiO₂) as the main component. The blast furnace slag contains alumina (Al₂O₃), magnesium oxide (MgO), and a small amount of sulfur (S), as the other components, and the blast furnace slag contains iron oxide (FeO), and magnesium oxide (MgO). In the case of the blast furnace slag, metal elements (such as iron) are incorporated in the form of oxides into the slag, but due to the short refining time and the high lime content, a part of lime as the auxiliary material remains undissolved in the form of free lime (free-CaO).

These components are naturally present in the earth crust, natural rocks, minerals, etc., and their chemical composition is similar to that of the normal Portland cement. The shape and physical properties of the blast furnace slag are similar to those of ordinary crushed stone or sand, but due to differences in the chemical composition and the cooling process, it is possible to have a wide range of properties peculiar to the slag. The present invention utilizes one of the broad properties of the blast furnace slag, that is, curing in the presence of an alkaline stimulus.

In the blast furnace slag aqueous suspension which is the principal component of the main agent of the blast furnace slag-type two-part paint of the present invention, the blocking agents includes phosphorus-containing compounds and borate compounds selected from optional compounds capable of reacting with at least one metaphosphoric acid, phosphorous acid, phosphoric acid, phosphonic acid, boric acid and water to form any of these compounds.

The blocking agent contains 0.1% by weight to 20% by weight of the phosphorus-containing compound with respect to the total weight of the blast furnace slag aqueous suspension, and can produce a stabilized suspension.

In the blast furnace slag aqueous suspension which is the principal component of the main agent of the blast furnace slag-type two-part paint of the present invention, the compound capable of forming metaphosphoric acid, phosphorous acid, phosphoric acid, phosphonic acid or boric acid can be selected from phosphorus pentoxide, pyrophosphoric acid, tripolyphosphoric acid, aminotrimethylenephosphonic acid, 2-aminoethylphosphonic acid, 1-hydroxyethylidene-1,1-diphosphonic acid, ethylenediaminetetramethylenephosphonic acid, tetramethylenediaminetetramethylenephosphonic acid, hexamethylenediaminetetramethylene phosphonate, pentamethylene diethylenetriamine phosphonate, phostricarboxylic acid, N-(phosphonomethyl) iminodiacetic acid, 2-carboxyethylphosphonic acid, 2-hydroxyphosphonocarboxylic acid, boric acid, sodium metaborate, sodium tetraborate, and disodium octaboron tridecaoxide tetrahydrate.

As the optional compounds capable of reacting with at least one phosphonic acid, metaphosphoric acid, phosphorous acid, phosphoric acid, boric acid and water to form any of these compounds carboxylic acids are mentioned. This carboxylic acid includes preferably citric acid, tartaric acid, amino acids such as aspartic acids etc. (selectable from the mineral acids and their salts: e.g., glutamic acid), mandelic acid, humic acid, fulvic acid, and quinic acid.

Of course, there is envisaged blending of at least one carboxylic acid with at least one compound selected from the optional compounds capable of reacting with at least one phosphonic acid, boric acid, metaphosphoric acid, phosphorous acid, phosphoric acid and water to form any of these compounds.

The blast furnace slag aqueous suspension can further contain a blocking agent differing from a phosphorus-containing compound, such as carboxylic acids, and the like.

Such a blocking agent can be blended in an amount of 0.3 to 5% by weight, preferably 0.3 to 2.5% by weight, with respect to the total weight of the blast furnace slag aqueous suspension.

The blast furnace slag aqueous suspension can also further contain a blocking agent differing from a phosphorus-containing compound, and in which case, the amount of a phosphorus-containing compound may be minimal in the presence of additional blocking agents.

In the aqueous suspension of the present invention, the minimum optimum amount of the phosphorus-containing compound in order to obtain good stability is considered to be inversely proportional to the content of alumina present in the blast furnace slag of the hydraulic binder. It was also found that the stabilization of the alumina-containing blast furnace slag lasted for 6 months or more even when the blast furnace slag aqueous suspension was stored at 50°C.

In the blast furnace slag-type two-component paint of the present invention, the stabilized blast furnace slag aqueous suspension is a blast furnace slag suspension containing a blast furnace slag having an alumina content of 1.9% by weight to 16.5% by weight or more in an amount of 30% by weight or more with respect to the total weight of the aqueous suspension, wherein a relative weight of 0.5 to 20% by weight of a phosphorus-containing compound and/or a borate compound is contained in the suspension.

Optional compounds are listed, which can be selected from metaphosphoric acid 3 (CAS registration number: 37267-86-0), orthophosphoric acid, phosphorous acid (mathematical formula 2) called a compound of the mathematical formula 1, phosphoric acid of the mathematical formula 1, phosphonic acid of the mathematical formula 3: HP(=O), and their p-hydrocarbyl derivatives, and can react with water to form any of these compounds.

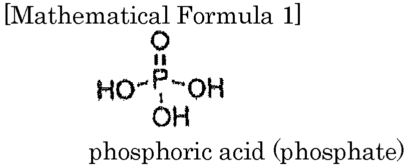

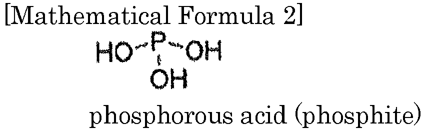

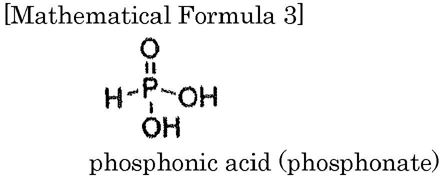

Further, the compound capable of reacting with water to form any of these compounds includes, in particular, metaphosphoric acid, phosphorous acid, phosphoric acid, phosphonic acid and hydronium ion (one capable of corresponding to the compound that can be formed by contacting with H), and phosphoric acid, and it can be converted to metaphosphoric acid by contacting with water.

In addition, the following compounds that may be hydrolyzed to give phosphoric acid can be mentioned.

For example, it can be hydrolyzed into phosphorus pentoxide, or anhydrous phosphoric acid of the mathematical formula 4, diphosphoric acid, pyrophosphoric acid called a compound of the mathematical formula 1, tripolyphosphoric acid of the mathematical formula 5, and phosphoric acid.

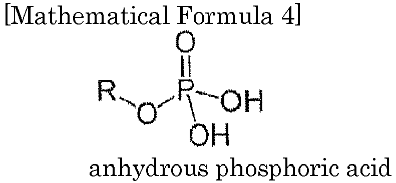

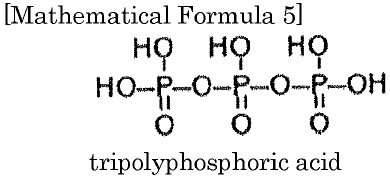

As the blocking agent differing from a phosphorus-containing compound, the boric acid and borate compound of the mathematical formula 6 includes sodium metaborate of the mathematical formula 7, sodium tetraborate of the mathematical formula 8, disodium octaboron tridecaoxide tetrahydrate of the mathematical formula 9, and the like.

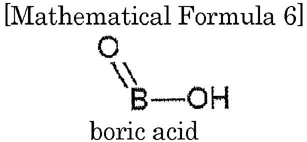

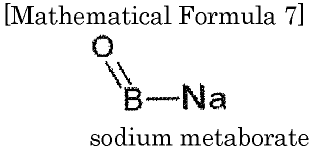

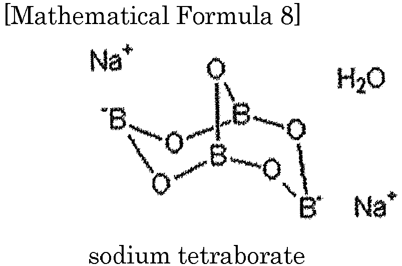

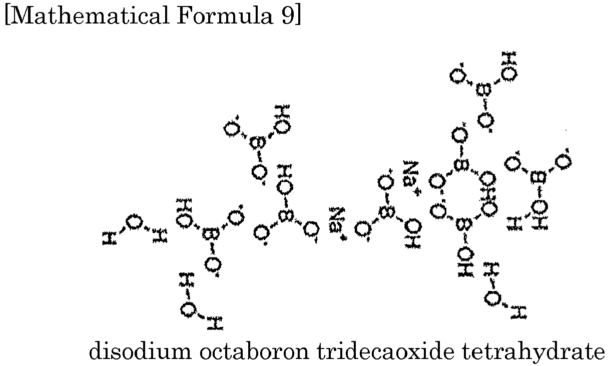

Also, as demonstrated in examples below, phosphorus-containing compounds and/or borate compounds act as the blocking agent. Thus, the dissolution of the blast furnace slag-based blast furnace slag aqueous suspension is blocked as described, the blocking is made possible at a relatively low volume. By using such a blocking agent, the blast furnace slag aqueous suspension is stable for a long period of time (1 month or more), and exhibits the effect even at a relatively high temperature (for example, 50°C).

The phosphorus-containing compound as the blocking agent can also significantly lower the pH value of the blast furnace slag aqueous suspension. Preferably, the pH value is desirably less than 9, not less than 7 and less than 8, especially less than 6.5, in order to obtain a stabilized blast furnace slag aqueous suspension.

In particular, it is conceivable that the relative weight of the phosphorus-containing compound and/or borate compound with respect to the total weight of the required blast furnace slag is required to be preferably about 1 to 10% by weight in order to obtain a life of at least 6 months.

Further, it is desirable that the content of the alumina-containing blast furnace slag used according to the present invention in the blast furnace slag aqueous suspension is in the range of 15% to 75% by weight, more preferably in the rage of 30% by weight to 72% by weight, with respect to the total weight of the blast furnace slag.

The chemical composition of the blast furnace slag used in the alumina-containing blast furnace slag suspension is preferably as follows.

**[Reference Table 3]**

| Component | Content (wt%) |
|---|---|
| CaO | 22.8 to 55.1 |
| SiO₂ | 11.0 to 33.8 |
| T-Fe (total iron content) | 0.3 to 29.5 |
| MgO | 4.3 to 7.4 |
| Al₂O₃ | 1.9 to 16.5 |
| S | 0.06 to 0.8 |
| P₂O₅ | 0.1 to 1.7 |
| MnO | 0.3 to 7.9 |

In the present invention, the hydraulic binder may further contain a calcium sulfate. The calcium sulphate can be derived from anhydrous or semi-hydrated gypsum, gypsum, or compounds selected from mixtures thereof.

The blast furnace slag aqueous suspension can contain 0 to 50% by weight, preferably 5 to 30% by weight of calcium sulfate, with respect to the total weight of the blast furnace slag aqueous suspension.

In the present invention, the combined use of the blast furnace slag and calcium sulfate can form a binder of ettringite.

The ettringite refers to a hydrate which is generated by reaction of an aluminate phase (tricalcium aluminate: 3CaO•Al₂O₃), SO₄₂- and H₂O during cement hydration in which SO₄₂- and H₂O are present. It is represented by the chemical formula: 3CaO•Al₂O₃•3CaSO₄•32H₂O.

The blast furnace slag aqueous suspension used in the present invention may contain additional additives such as water retention agents. These additives are preferably selected from water retention agents, interfacial tension adjusters, rheology agents (viscosity (tenacious property) adjuster) and bactericidal agents, and additionally, can include plasticizers, anti-foaming agents and thickening agents.

The water-retaining agent includes not only substances having merely high water absorption and water retention such as organic fibers, porous minerals, polysaccharides, and the like, but also oily substances such as organic solvents and organic resins having an action of suppressing water evaporation.

Further, the interfacial tension adjuster includes a dispersing agent, a leveling agent, a defoaming agent, a foam suppressing agent, a wetting agent and the like, which are generally used as additives for paints and inks.

In particular, as the dispersing agent which is suitable for use in the blast furnace slag aqueous suspension, there is Sokalan (registered trademark, manufactured by BASF Japan Co., Ltd.) or the like, and the blending ratio thereof is from 0.1 to 3% by weight, preferably 0.5 to 1% by weight with respect to the total weight of the blast furnace slag aqueous suspension, or from 0.1 to 5% by weight, preferably 0.6 to 1.8% by weight with respect to the total weight of the hydraulic binder.

The fluidizing agent is preferably selected from clays (xanthan gum such as bentonite, welan gum), and organic products such as starch-derived ethers, guar-derived ethers, polyacrylamide, carrageenan, agar, or mineral products, and may be a mixture thereof.

The blending ratio of the fluidizing agent is 0.1 to 1% by weight, preferably 0.25 to 0.5% by weight with respect to the total weight of the blast furnace slag aqueous suspension, or 0.2 to 2% by weight, preferably 0.25 to 1.4% by weight with respect to the total weight of the hydraulic binder.

The antibacterial or biocidal agents include compounds of the isothiazolinone family, such as methylisothiazolinone (MIT) and benzoisothiazolinone (BIT), and a combination thereof.

However, while the above compounds have excellent antibacterial or biocidal effects, there is concern about toxicity to the human body. As the countermeasures flavonoid type compounds belonging to plant-derived polyphenols having antibacterial or biocidal effects; benzoic acid, ellagitannin, catechol, chalcone, chalconarin, chalconaringenin, hydroquinone, and the like are mentioned.

The blending ratio of the antibacterial or biocidal agent is 0.005 to 0.1% by weight, preferably 0.001 to 0.02% by weight with respect to the total weight of the aqueous alumina cement suspension, or 0.01 to 0.2% by weight, preferably 0.02 to 0.04% by weight with respect to the total weight of the hydraulic binder.

Of course, the antibacterial agent or biocide can include photocatalytic reactants such as titanium oxide and the like having an action of decomposing an organic substance by oxidation, and metal ions such as a silver ion and the like.

High-performance water reducing agents are composed of polyphosphonates, highly polymerized polyethylene glycols, polycarboxylates, PCPs of highly polymerized polyethylene glycols, and polyacrylates, or copolymers of acrylic acid and alkoxyacrylic acids, and a mixture thereof.

The blast furnace slag aqueous suspension of the present invention can contain an organic resin. Therefore, it may be used as a bond composition containing the blast furnace slag aqueous suspension and at least one organic resin.

Preferably, this bond composition may contain from 0 to 90% by weight of the organic resin with respect to the blast furnace slag aqueous suspension.

Such organic resins include latex type polymers and copolymers, preferably polymer resins.

The blast furnace slag aqueous suspension of the present invention may contain a filler to form another composition.

Such fillers can be selected from minerals or essentially organic and siliceous compounds, and include blast furnace slags, carbonate compounds (calcium carbonate, dolomite), pigments, titanium oxide, pearlite or, light reflective fillers such as vermiculite (sand, quartz, fumed silica).

The pigments include, firstly, color pigments, which are inorganic pigments and organic pigments added for the purpose of coloring, which are generally used in the fields of paints and inks, and are solid powder pigments or processed pigments dispersed in solvents. Further, fired pigments used in glazes for pottery and porcelain are also suitable color pigments because they are not discolored by chemicals and ultraviolet ray.

Secondly, functional pigments are mentioned, where the functional pigments have optical functions such as brilliance, luminescence, fluorescence, light interference, transparency, reflection (absorption) of a specific wavelength, and the like. Further mentioned are pigments having electrical functions as conductors or semiconductors such as a graphite powder, a metal powder, a metal oxide powder and the like, and pigments with an antirust effect having electrochemical functions such as sacrificial corrosiveness, coordinating with a metal ion to form a complex or chelate structure to delay the corrosion rate, and the like.

Thirdly, extender pigments are mentioned. Here, the extender pigments include fine particle fillers such as silica fume, fly ash and the like, which are added for the purpose of forming a solid coating film, in addition to the conventional increase in solid content for thickening the film and preventing thinning of the finished product, and also reaction-curable gypsum, alumina cements, blast furnace slags, silicates, calcium hydroxide, and the like, and further include needle-like or scale-like crystalline minerals and fiber-shaped inorganic and organic substances added for the purpose of imparting toughness to a coating film.

The amount of the filler is 10% by weight to 30% by weight, preferably 1 to 50% by weight, with respect to the total weight of the composition, and the rest is formed from a blast furnace slag aqueous suspension.

To initiate the formation of a cured product of a blast furnace slag aqueous suspension or a bond composition, pH is simply 7 (preferably higher than this value, and a higher pH value is preferred, and the pH adjuster is needed to be added to increase the pH value of a medium at a value higher than 9; more rapidly) to regulate the unblocking reaction.

Possible combinations of the pH adjusters are composed of lithium, lithium hydroxide and lithium sulfates or carbonates, or sodium, and sulfates or carbonates or silicates such as fluorinated lime hydrate.

As another combination, sodium hydroxide or potassium hydroxide or sodium aluminate can be used as the pH adjuster, especially in combination with an accelerator such as sulfate, carbonate, chloride or fluoride type lithium salts or sodium salts or potassium salts.

Next, a method for producing the above-mentioned blast furnace slag aqueous suspension will be described. The method involves continuously taking the following steps.

As a first step, water is introduced into a mixing tank, and a blocking agent is added while stirring at a speed of 600 rpm or more, preferably higher 800 rpm, more preferably 1000 rpm by a stirrer equipped with an anti-aggregation blade, and one or more dispersing agents (single or plural) are added until the dissolution is completed.

Gradually, while maintain stirring while adding one or more hydraulic binders (plural is possible), the stirring speed was increased to 1000 rpm or higher, preferably 3000 rpm, and if necessary, other components, for example, optionally one or more fluidizing agents and disinfectants (plural is possible) were added and stirred preferably for 10 to 15 minutes, at least for 5 minutes.

When an organic resin with which the blast furnace slag aqueous suspension forms a bond composition is added, the organic resin was added directly at the end of the preparation of the blast furnace slag aqueous suspension or after the fact by mixing at 600 rpm.

When MFT adjustment (minimum film formation temperature adjustment) was required for the organic resin to be added, a film formation aid (plasticizer) was appropriately added to the resin so as not to cause solvent shock.

In this method, the amount of the blocking agent composed of at least one phosphorus-containing compound selected from optional compounds capable of reacting with one or more selected from metaphosphoric acid, phosphorous acid, phosphoric acid, phosphonic acid, boric acid and the like and water for form any of these compounds is preferably 0.1 to 15% by weight, more preferably 0.3 to 10% by weight, and particularly preferably 0.1 to 10% by weight, with respect to the total weight of the blast furnace slag aqueous suspension of a blast furnace slag and/or calcium sulfoaluminate cement to be added as described above.

The mixing conditions and the order of introduction of the components can substantially improve the quality of the blast furnace slag aqueous suspension, and preferably, the components are mixed together in the following order.
(1) Solvent (water)
(2) Blocking agent
(3) Dispersing agent (interfacial tension adjuster)
(4) Blast furnace slag (JISA 6206 standard product 4000)
(5) Viscosity (tenacious property) adjuster
(6) Antibacterial agent, preservative

That is, the procedure for mixing the above materials is as follows.
(1) A required amount of water is introduced into a mixing tank (bowl), then, a blade is stirred at 1000 rpm in a stirrer equipped with the blade at the upper position, and a blocking agent (or inhibitor) is additionally added, and mixed until the blocking agent is dissolved (up to 3 minutes).
(2) After adding a dispersing agent, one or more hydraulic binders (plural is possible) are added to optimize the dispersion, and the blade is placed on the surface of the blast furnace slag aqueous suspension during its uptake, and mixed for about 1 minute with the blade in this upper position.
(3) After that, the rotation speed is increased to 3000 rpm, the last component is added, and the blade is lowered to a lower position to mix at high speed for 15 minutes. The mixer is then turned off and the wall and the blade of the mixing tank are rubbed to remove the residual deposit.

These production conditions are effective for homogenizing the efficiently dispersed blast furnace slag aqueous suspension.

(4) A blocking agent is added to the blast furnace slag aqueous suspension or mineral slurry to stabilize it.

Then, the pH value is measured and stable monitoring is performed.

Measuring the pH value in this way is a good way to monitor the stability of the blast furnace slag aqueous suspension. An aqueous suspension stabilized with a blocking agent is considered to be unstable when its pH value increases significantly and/or reaches a pKa of (pKa value = 9.2). From this value, the setting of the oil pressure is started.

**[Reference Table 4]**

| Dosage (wt%)* | Slurry 1 | Slurry 2 | Slurry 3 | Slurry 4 | Slurry 5 | Slurry 6 | Slurry 7 |
|---|---|---|---|---|---|---|---|
| Solvent (water) | 36.92 | 38.29 | 39.04 | 38.87 | 38.45 | 58.68 | 39.30 |
| Boric acid (blocking agent) | 2.38 | - | - | - | - | - | - |
| Phosphoric acid (blocking agent) | - | 1.01 | 0.26 | 0.43 | 0.85 | - | - |
| Dispersing agent (interfacial tension adiuster) | 1.00 | 1.00 | 1.00 | 1.00 | 1.00 | 1.00 | 1.00 |
| Blast furnace slag | 59.38 | 59.38 | 59.38 | 59.38 | 59.38 | 40.00 | 59.38 |
| Viscosity (tenacious property) adiuster | 0.30 | 0.30 | 0.30 | 0.30 | 0.30 | 0.30 | 0.30 |
| Antibacterial agent, preservative | 0.02 | 0.02 | 0.02 | 0.02 | 0.02 | 0.02 | 0.02 |
| Sodium silicate (blocking agent) | - | - | - | - | - | 20.00 | - |
| total | 100.00 | 100.00 | 100.00 | 100.00 | 100.00 | 100.00 | 100.00 |

| | | | | | | | |
|---|---|---|---|---|---|---|---|
| * Dosage indicates the ratio to the total amount of aqueous suspension. | | | | | | | |

In a room temperature environment, the initial pH of the slurry 1 gradually increases to a range of 8 <pH <threshold 9, but is stable over several months.

In contrast, at a temperature of 50°C, such a mechanism is clearly accelerated. In fact, the increase in pH value can be observed from the very first day of storage, the threshold of 9 is achieved after 30 days and the slurry 1 is achieved on day 32.

When stored at room temperature, the accumulation time for the stabilized slurry easily exceeds 6 months. In contrast, the accumulation time is significantly reduced as soon as the storage conditions (temperature = 50°C) are changed.

In a room temperature environment, the initial pH of the slurry 2 gradually rises, and when observed within a period of 10 days thereafter, the pH value stabilizes at about 6.4, at which the slurry is completely stable.

Even at a temperature of 50°C, the pH value is extremely constant, centered on a value in the pH unit range of 5 to 6. For example, the slurry 2 is completely stable even after 45 days of storage at 50°C during the observation period.

In addition, the results showing the pH monitoring performed during the last month at 40 to 50°C show that the slurry condition and the pH value do not change. Therefore, it is completely stable even after 6 months when stored at 50°C.

When phosphoric acid is used as a stabilizer, it can be observed that the amount of phosphoric acid can be reduced to less than 0.5% of the total weight of the blast furnace slag aqueous suspension while maintaining an appropriate stabilization time at 50°C.

Various "ettringite-based slurries" were obtained by changing the sulfuric acid rate and the type of the sulfate used.

The stabilization system used is one in which phosphoric acid is administered at 1.2% by weight with respect to the total weight of the blast furnace slag aqueous suspension. The proportion of the hydraulic binder in the blast furnace slag aqueous suspension is 60% by weight with respect to the total weight of the blast furnace slag aqueous suspension.

By monitoring the pH value, it can be confirmed that all ettringite-based slurries are completely stabilized with phosphoric acid.

Next, a composition based on a combination of a blast furnace slag aqueous suspension and an organic resin was prepared.

In these examples, slurries 1 and 2, phosphoric acid and one latex type organic resin are stabilized and used, respectively.

The composition was stored at 50°C and the pH was measured periodically. After a 28-day period of storage at 50°C, the composition, which can be observed to be the only composition, has a pH below 9.2, thus is kept at a perfectly stable value. All other compositions are suspension-based compositions that have been stabilized prior to day 28, thus significantly reducing the stability range of the mixture, and it is suggested that up to 20% of the weight of the slurry can be introduced.

When stored at room temperature, the accumulation time for slurries stabilized with a blocking agent such as boric acid easily exceeds 6 months. In contrast, changes in the chemical environment significantly reduce the accumulation time.

To observe the stability of the composition at 50°C, the composition was stored at 50°C and the pH value was measured periodically.

The results obtained show very stable pH values in the range of 5-7 pH units from 40 days or more. During this time, there was no change when observed for any of the mixtures.

In conclusion, very good results were obtained and stabilized, at any storage temperature, slurry chemical environments, and reduce of addition of phosphoric acid, as compare with the slurry composition.

In addition, other alumina cement-based aqueous suspensions of alumina cement are also tested.

When sodium silicate is used as the stabilizer of the slurry 6, stability can be confirmed in the alkaline pH value range of 8 to 11, not depending on the storage temperature and the pH value range, in stability monitoring, unlike the case where boric acid or phosphoric acid of the slurries 1 to 5 is used as the stabilizer.

However, when stored in a container that maintains airtightness, stability can be confirmed for 6 months at ordinary temperature and 50°C, but when stored in a container which does not maintain airtightness and in which moisture evaporates, it becomes unstable in about 1 month because of generation of aggregates, solidification and the like.

This is considered to be a system that can maintain and stabilize the hydraulic reaction in an equilibrium state by remarkably suppressing the behavior of water molecules involved in the hydraulic reaction by turning the water molecules involved in the hydraulic reaction into a cluster structure or a weak gelled structure, differing from the system in which boric acid or phosphoric acid suppresses the property of the hydraulic reaction of a blast furnace slag that activates in an alkaline region by making it in an acidic region.

The sodium silicate dose in this system is preferably in the concentration range of 10 to 50% by weight with making the water in the blast furnace slag aqueous suspension into an aqueous sodium silicate solution.

If the concentration is less than 10% by weight, the cluster structure or weak gelled structure of water molecules is weak, and the equilibrium state of the hydraulic reaction cannot be maintained. Further, when sodium silicate is added including an action as an inducer of the hydraulic reaction, the hydraulic reaction cannot be completed if the concentration is less than 10% by weight.

In contrast, when the concentration exceeds 50% by weight, the activation in the alkaline region becomes strong, the equilibrium state of the hydraulic reaction is disrupted, and the reaction is promoted.

Next, stability monitoring will be described.

The slurry was observed for the change in pH as a function of time (days) at 50°C. For slurries based on the blast furnace slags (6,7), by calculating the ratio to 3.5% or 7% (2.5% or 5% with respect to the amount of hydraulic binder; the ratio of the dose of phosphoric acid used depending on the blast furnace slag aqueous suspension), pH was stable for 2 months (60 days).

As a control, it is possible to observe the use a dose of phosphoric acid, depending on the slurry 2.5% or 5% and the blast furnace slag aqueous suspension, based on the blast furnace slag-based aqueous suspension (that is, as the ratio of the amount of the hydraulic binder by calculating the ratio to 3.5% or 7%), affecting slurry stability. Regarding the ratio of the amount of the hydraulic binder, good stability of the slurry could be observed for 1.5 months (45 days), at a dose of 7%. In conclusion, it is understood that when using phosphoric acid as the blocking agent, these slurries can be stabilized over a period ranging from 20 days to 2 months, depending on the administration of phosphoric acid and the type of the blast furnace slag associated therewith.

As the blocking agent, a combination with phosphonic acid, phosphoric acid, carboxylic acid, that is, citric acid is used.

In the above example, a change in pH at 50°C for (days) hours was observed. The pH monitoring shows a first region corresponding to a very slight increase in pH level that stopped on day 25, and a subsequent gradual increase in pH level due to the onset of slurry destabilization. However, when using a combination of three blocking agents, it was observed that good stability was obtained with the system at 50°C for about 45 days.

The above is an explanation of that related to the liquid inorganic material consisting of the main agent (agent A) of the blast furnace slag-type two-part type containing a blast furnace slag as the main component or the one-part aqueous paint and the liquid suspension containing a blast furnace slag as the principal component according to the present invention, however, it is differing from the blast furnace slag-type two-part paint (two-liquid hydraulic reactive inorganic paint (Note)) referred to in the present invention.
(Note) When the present invention is classified by "Japanese Industrial Standards" based on the form and required performance of conventional finishing materials, it is similar to the JISK5658 building weather-resistant topcoat paint which is said to be "Weather-resistant topcoat paint for construction used for beauty finish coating of building concrete, cement/mortar surface, precast concrete, etc. (hereinafter, referred to as paint) will be specified. This standard is applied to a paint which uses a fluorine resin, a silicon resin or a polyurethane resin as the main raw material, and in which the main agent and the curing agent are mixed and cured." though differing because the main raw material is blast furnace slag, and is a material differing from the cement-based building finishing materials handled in the Japanese Industrial Standards JIS A6916 and JISA6909 (two-liquid hydraulic reactive inorganic paint).

In the present invention, the blast furnace slag-type two-part paint of the present invention is formed from a main agent (agent A) containing the blast furnace slag aqueous suspension described in detail above as the principal component, and a curing agent (agent B) composed of a hydraulic reaction inducer that induces a hydraulic reaction of the agent A.

In the production of the blast furnace slag-type two-part paint of the present invention, it is possible to additionally add the blocking agents, additives (dispersing agent, fluidizing agent, plasticizer, anti-foaming agent, thickening agent, water retention agent, and the like), biocidal agents, fillers, resins, and the like used in the above-mentioned blast furnace slag aqueous suspension, but in order to impart properties and performance as a paint, it is necessary to exercise the following methods, which will be explained below.

First, a detailed description of the curing agent (agent B) composed of the hydraulic reaction inducer of the blast furnace slag-type two-part paint of the present invention is shown below.

### <Selection of alkalinity-imparting substance (curing agent) and preparation of curing agent (paint formation)>

In the turbid state of the blast furnace slag aqueous suspension, it is a stable flowable (slurry-like) liquid without causing a hydraulic reaction.

Therefore, a substance that induces a hydraulic reaction is required.

It has been conventionally known that a blast furnace slag induces a hydraulic reaction by an alkaline stimulation.

However, there are few cases as a "hydraulic reaction inducer" that gives an alkaline stimulus, and although a sodium hydroxide aqueous solution is recommended in cases such as literatures, it is not preferable that sodium hydroxide, which is a deleterious substance, is handled in the production process, much less it cannot be used at a painting work site.

In particular, the product of the present invention assumes a two-liquid paint to be prepared in the field in which a main agent (agent A) containing the turbid liquid of a blast furnace slag as the principal component and an alkaline liquid that induces the hydraulic reaction of the turbid liquid of a blast furnace slag as the curing agent (agent B) are used and the main agent (agent A) and the curing agent (agent B) are packaged separately, therefore, the alkaline curing agent (hydraulic reaction inducer: agent B) comes into direct contact with the operator, causing an inappropriate work in terms of occupational safety.

In addition, since many building materials made of aluminum, which are weak against alkalinity, are used in buildings, it is necessary that they are alkaline curing agents (hydraulic reaction inducer: agent B) that do not invade (corrode) these building materials.

Further, it is natural that a substance that does not ionize calcium, which is a factor for generating white flower (efflorescence), is desirable as the substance exhibiting alkalinity.

Therefore, the alkaline curing agent (hydraulic reaction inducer: agent B) needs to be an alkaline liquid that does not contain a calcium salt.

Thus, not only from the viewpoint of inducing a hydraulic reaction, but also from the multifaceted viewpoint of providing excellent coating film performance and design with a safe and harmless paint by a simple work, the following substances that exhibit alkalinity, which are abundant in the world, were selected, and investigated to solve the above-described problem.

**[Table 1]**

| Aqueous solution that may give an alkaline stimulus that induces hydraulic reaction of turbid liquid of alumina cement | | | | | |
|---|---|---|---|---|---|
| No. | Name of substance | pH of aqueous solution | Concentration of aqueous solution | Generation of heat of dissolution | remarks |
| 1 | Sodium hydroxide | 14 | 20% concentration | Large | • Concentration adjustment using reagent |
| | | | | | • Implemented as a comparative example as a dangerous substance |
| 2 | Potassium hydroxide | 13 | 20% concentration | Large | • Concentration adjustment using reagent |
| | | | | | • Implemented as a comparative example as a dangerous substance |
| 3 | Calcium hydroxide | 12 | Saturated aqueous solution | Almost none | • Concentration adjustment using reagent |
| | | | | | • Implemented as a comparative example of calcium ionization |
| 4 | sodium carbonate | 12 | 20% concentration | Medium | • Concentration adjustment using reagent |
| 5 | Potassium carbonate | 11 | 20% concentration | Medium | • Concentration adjustment using reagent |
| 6 | Sodium silicate | 12 | 20% concentration | Almost none | • Concentration adjustment using reagent |
| 7 | | 12 | 40% concentration | Almost none | • Concentration adjustment using reagent |
| 8 | Sodium silicate (water glass) | 12 | 60% concentration | - | • Use reagents of specified con cen tration |
| 9 | ammonia | 10 | 25% concentration | - | • Concentration adjustment using reagent |
| | | | | | • Implemented as a comparative example as a dangerous substance |
| 10 | Sodium citrate | 9 | 5% concentration | Almost none | • Concentration adjustment using reagent |

### (1) Confirmation of safety

The presence or absence of danger was evaluated based on the concentration adjustment work in Table 1 and whether or not it was subject to legal regulations.

**[Table 2]**

| Presence or absence of danger | | | | | |
|---|---|---|---|---|---|
| No. | Name of substance | Heat of dissolution | odor | Existence of legal regulation | Judging danger to human body |
| 1 | Sodium hydroxide | Violent fever | Odorless | Drastic medicine stipulated in Poisonous and Deleterious Substances Control Law | Very dangerous |
| 2 | Potassium hydroxide | Violent fever | Odorless | Drastic medicine stipulated in Poisonous and Deleterious Substances Control Law | Very dangerous |
| 3 | Calcium hvdroxide | No fever | Odorless | No regulation | The risk is small |
| 4 | sodium carbonate | Some fever | Odorless | No regulation | The risk is small |
| 5 | Potassium carbonate | Some fever | Odorless | No regulation | The risk is small |
| 6 | Sodium silicate | No fever | Odorless | No regulation | The risk is small |
| 7 | | No fever | Odorless | No regulation | The risk is small |
| 8 | Sodium silicate (water glass) | - | Odorless | No regulation | The risk is small |
| 9 | ammonia | - | Pungent odor | Drastic medicine stipulated in Poisonous and Deleterious Substances Control Law | Very dangerous |
| 10 | Sodium citrate | Some fever | Odorless | No regulation | The risk is small |

| | | | | | |
|---|---|---|---|---|---|
| * Sodium hydroxide, potassium hydroxide, and ammonia, which are designated as Drastic medicine stipulated in Poisonous and Deleterious Substances Control Law, cannot be commercialized from the viewpoint of the Industrial Safety and Health Act and the like, in the present invention assuming the on-site preparation, even if they have the effect of the invention. | | | | | |

### (2) Alkaline substances that do not invade (corrode) aluminum

For comparison with the aqueous solution shown in Table 3, a slurry liquid obtained by adding 10 parts by weight of water to 20 parts by weight of ordinary Portland cement was allowed to contact with an aluminum plate (A1050) not subjected to the surface treatment and an aluminum sash frame coated with a sulfuric acid anodized film at the spot, and a change in the appearance after 24 hours was observed.

**[Table 3]**

| Corrosiveness to aluminum | | | | | |
|---|---|---|---|---|---|
| No. | Name of substance | pH of aqueous solution | Concentration of aqueous solution | Aluminum plate (A1050) (no surface treatment) | Aluminum sash frame (with anodized film) |
| 1 | Sodium hydroxide | 14 | 20% con cen tration | ×× (gas generation) | ×× |
| 2 | Potassium hydroxide | 13 | 20% con cen tration | ×× (gas generation) | ×× |
| 3 | Calcium hydroxide | 12 | Saturated aqueous solution | × | × |
| 4 | sodium carbonate | 12 | 20% con cen tration | △ | ∘ |
| 5 | Potassium carbonate | 11 | 20% con cen tration | × | △ |
| 6 | Sodium silicate | 12 | 20% con cen tration | ∘ | ∘ |
| 7 | | 12 | 40% con cen tration | ∘ | ∘ |
| 8 | Sodium silicate (water glass) | 12 | 60% con cen tration | ∘ | ∘ |
| 9 | ammonia | 10 | 25% con cen tration | × | ∘ |
| 10 | Sodium citrate | 9 | 5% concentration | ∘ | ∘ |
| 11 | Ordinary Portland cement | 14 | - | ×× (gas generation) | ×× |

| | | | | | |
|---|---|---|---|---|---|
| Evaluation criteria ∘ : No change △ : Slight discoloration × : Discoloration ×× : Dissolution * Sodium hydroxide, potassium hydroxide, calcium hydroxide, and ammonia have a high risk of invading (corroding) aluminum, and are therefore unsuitable as the curing agent (hydraulic reaction inducer) of the present invention. * Sodium hydroxide, potassium hydroxide, calcium hydroxide, and ammonia have a high risk of invading (corroding) aluminum, and are therefore unsuitable as the curing agent (hydraulic reaction inducer) of the present invention. | | | | | |

### (3) Ability to induce hydraulic reaction of blast furnace slag aqueous suspension containing hydraulic binder

Based on the evaluation results of above-mentioned (1) Confirmation of safety and (2) Alkaline substances that do not invade (corrode) aluminum, sodium carbonate, potassium carbonate, and sodium silicate containing water glass were evaluated as the alkaline liquid that induces the hydraulic reaction of a blast furnace slag aqueous suspension. As a comparative example, ammonia, sodium citrate, and ordinary Portland cement are added.

### Evaluation procedure

(a) 38.68% by weight of water, 1.0% by weight of a dispersing agent (interfacial tension adjuster), 0.3% by weight of a viscosity (tenacious property) adjuster, and 0.02% by weight of an antibacterial agent and preservative are added to 60.0% by weight of a blast furnace slag, to prepare an aqueous suspension of the composition of the slurry 7 described in Table 2 with a blast furnace slag concentration of 60% by weight.
(b) The alkaline solution shown in Table 3 above was added to the aqueous suspension prepared in (1) above, and mixed using a desktop disper, and the mixture was used as a sample.
(c) A partition is made on the glass plate using gum tape, and the above-described sample is poured into in a volume with which the wet film thickness is 500 µm (theoretical dry film thickness is about 150 µm), and allowed to stand still in a room of a temperature of 20 to 25°C and a relative humidity of 40 to 60%.
(d) For each sample, the cured state was determined over time.

**[Table 4]**

| | | | | | | | | | | | |
|---|---|---|---|---|---|---|---|---|---|---|---|
| Hydraulic reaction inducer for blast furnace slag aqueous suspension containing hydraulic binder | | | | | | | | | | | |

| | Concentration wt% | Example 1 | Example 2 | Example 3 | Example 4 | Example 5 | Comparative example 1 | Comparative example 2 | Comparative example 3 | Comparative example 4 | Comparative example 5 |
|---|---|---|---|---|---|---|---|---|---|---|---|
| Slurry 7 ^{(Note 1)} | 60 | 30.0 | 30.0 | 30.0 | 30.0 | 30.0 | 30.0 | 30.0 | 30.0 | 30.0 | |
| Sodium silicate | 20 | 50.0 | - | - | - | - | - | - | - | - | |
| Sodium silicate | 40 | - | 50.0 | | | | | | | | |
| Sodium silicate (water glass) | 60 | | | 50.0 | | | | | | | |
| sodium carbonate | 20 | | | | 50.0 | - | | | | | |
| Potassium carbonate | 20 | | | | | 50.0 | | | | | |
| ammonia | 25 | | | | | - | 50.0 | - | | | |
| Sodium citrate ^{(Note 2)} | 5 | | | | | | - | 50.0 | - | | |
| Sodium hvdroxide | 20 | | | | | | | - | 50.0 | - | |
| Potassium hydroxide | 20 | | | | | | | | - | 50.0 | - |
| Ordinary Portland cement | | | | | | | | | | - | 50.0 |
| water | | | | | | | | | | | 25.0 |
| total | | 80.0 | 80.0 | 80.0 | 80.0 | 80.0 | 80.0 | 80.0 | 80.0 | 80.0 | 75.0 |
| Alkaline substance/alumina cement | | 0.20 | 0.40 | 0.60 | 0.20 | 0.20 | 0.25 | 0.05 | 0.20 | 0.20 | |
| Curing reaction (time) | 0.25 | - | - | - | - | - | - | - | ××× | ××× | ××× |
| | 0.5 | ▲ | ▲ | ▲ | ×× | ×× | ×× | ×× | ×× | ×× | ×× |
| | 1.0 | ∘ | ∘ | ∘ | × | × | ×× | ×× | ×× | ×× | ×× |
| | 2.6 | ∘∘ | ∘∘ | ∘∘ | ▲ | ▲ | × | × | ×× | ×× | ×× |
| | 6.06.0 | | | | △ | △ | × | × | ×× | ×× | ×× |
| | 18.0 | | | | ∘ | △ | ▲ | × | × | × | × |
| | 24.0 | | | | ∘ | ∘ | △ | ▲ | × | × | × |
| | 72.0 | | | | ∘∘ | ∘ | △ | ▲ | × | × | × |

| | | | | | | | | | | | |
|---|---|---|---|---|---|---|---|---|---|---|---|
| Criteria ×××: Reaction start, Aggregate (crystal) formation ××: Sample adheres when touched with a finger ×: The sample does not adhere when touched with a finger, but finger marks remain. ▲: No finger marks left even when pressed with a finger △: When scratched with a nail, it is scraped into a powder, and when pressure is applied, it collapses. ∘: Even if it is scratched with a nail, it cannot be scraped and no trace is left. Also, it will not collapse even if pressure is applied. ∘∘: Does not dissolve even if water is dropped (Note 1): The concentration value indicates the concentration of the substance in the aqueous solution. (Note 2): At a concentration of 5 wt%, it exhibits pH 9 in the alkaline region. * From the results in Table 4 above, sodium silicate, sodium carbonate, and potassium carbonate in the examples can be used as a curing agent (hydraulic reaction inducer) regarding the reaction rate and curing time as a two-liquid reaction-curing paint. | | | | | | | | | | | |

Ammonia and sodium citrate in Comparative Examples 1 and 2 have a long curing time, and cannot give a sufficient cured coating film.

Further, with the sodium hydroxide, potassium hydroxide and ordinary Portland cement in Comparative Examples 3, 4 and 5, the hydraulic reaction starts in a short time and aggregated particles are generated by the hydraulic reaction.

The reaction behavior of sodium hydroxide and potassium hydroxide is the same as that of the hydraulic reaction when water is usually added to Portland cement.

From the above, it is judged that sodium silicate, sodium carbonate, and potassium carbonate are most suitable as the two-liquid hydraulic reactive inorganic paint curing agent (hydraulic reaction inducer) of the present invention.

### (4) Substances that do not ionize calcium

Sodium silicate, sodium carbonate, and potassium carbonate selected from the above results can be said to be desirable substances because they are not calcium salts.

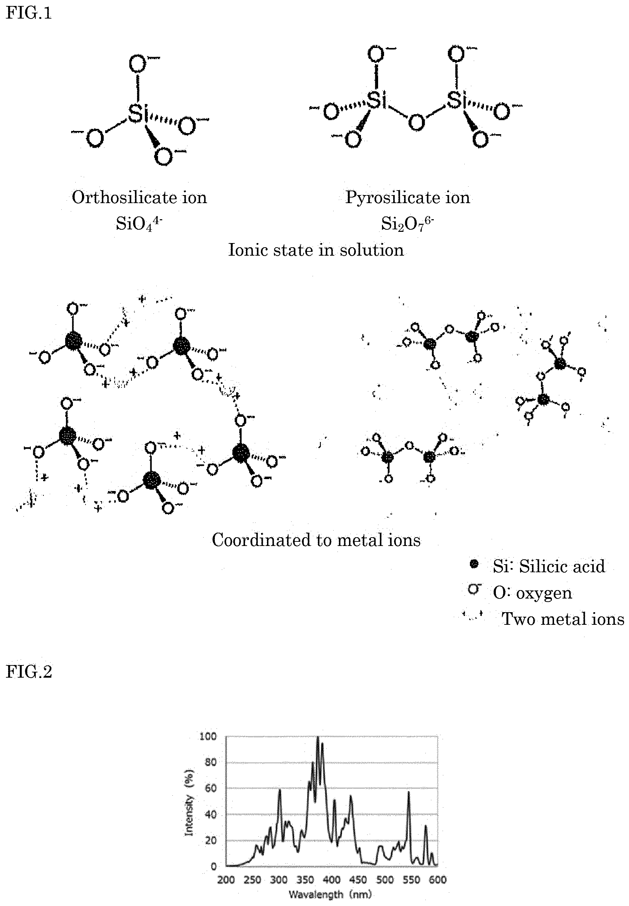

In particular, as shown in FIG. 1, a silicate such as sodium silicate is known to have a property of coordinating as an anion such as an orthosilicate ion (SiO₄⁴⁻), a pyrosilicate ion (Si₂O₇⁶⁻) or the like to a polyvalent metal ion (calcium ion, iron ion, aluminum ion and the like) in an aqueous solution to form a gelled structure, therefore, efflorescence inhibitors, reinforcing materials for deteriorated concrete, etc., containing the silicate as the principal component, for the purpose of suppressing crystallization of a calcium ion eluted from concrete, and using an effect of reinforcing the surface by reacting with a calcium ion in the concrete, based on the above-mentioned property, are already on the market.

In the present invention, it is judged to be a useful substance as the hydraulic reaction inducer (curing agent) for the blast furnace slag aqueous suspension of the present invention, for the purpose of imparting the above-mentioned property of a silicate to the coating film and suppressing a calcium ion eluted from calcium oxide contained in the blast furnace slag, which is the principal component of the main agent.

### (5) Preparation of hydraulic reaction inducer (curing agent) (paint formation)

Examples and comparative examples thereof are shown below.

**[Table 5]**

| Examples/Comparative Examples | | | | | | | | | |
|---|---|---|---|---|---|---|---|---|---|
| | | Example 6 | Example 7 | Example 8 | Example 9 | Example 10 | Example 11 | Example 12 | Example 13 |
| Sodium silicate | ^{(Note} 1) | 40.00 | | - | | 40.00 | - | - | - |
| Silicate soda No. 1 concentration = 60% (silicic acid conversion) | (Note 2) | | 66.67 | | | | 66.67 | | |
| sodium carbonate | ^{(Note} 3) | - | - | 20.00 | - | - | - | 20.00 | - |
| Potassium carbonate | (Note 4) | | - | - | 20.00 | - | - | - | 20.00 |
| Sodium hydroxide | ^{(Note} 5) | - | - | - | - | - | | - | - |
| Potassium hydroxide | ^{(Note} 6) | - | - | | - | - | - | - | |
| Nonionic cellulose ether fibrin derivative type water retaining/thickening agent | (Note 7) | | - | - | - | - | - | 2.00 | 2.00 |
| Sodium polyacrylate type thickening agent | (Note 8) | 1.00 | 0.50 | - | - | 1.00 | 0.50 | - | - |
| Urethane-modified polyether type thickening agent | ^{(Note} 9) | - | - | 2.00 | 2.00 | - | - | 3.00 | 3.00 |
| Mineral oil-based defoaming agent | ^{(Note} 10) | 0.05 | 0.05 | 0.05 | 0.05 | 0.05 | 0.05 | 0.05 | 0.05 |
| acrylic resin emulsion NV = 51%, MFT = 0°C | (Note 11) | - | - | - | - | 19.61 | 19.61 | 19.61 | 19.61 |
| Ordinary temperature crosslinkable acrylic styrene resin emulsion NV = 48%, MFT = 6°C | ^{(Note} 12) | - | - | - | - | - | - | - | - |
| Polyether-modified siloxane type surface tension adjuster | ^{(Note} 13) | 0.10 | 0.10 | 0.10 | 0.10 | 0.10 | 0.10 | 0.10 | 0.10 |
| High molecular weight block copolymer solution surface tension adiuster | (Note 14) | 0.10 | 0.10 | 0.10 | 0.10 | 0.10 | 0.10 | 0.10 | 0.10 |
| 2-Ethylhexyl glycol | ^{(Note} 15) | - | - | - | - | - | - | - | - |
| water | | 58.75 | 32.58 | 77.75 | 77.75 | 39.14 | 12.97 | 55.14 | 55.14 |
| total | | 100.00 | 100.00 | 100.00 | 100.00 | 100.00 | 100.00 | 100.00 | 100.00 |

**[Table 6]**

| | | Example 14 | Example 15 | Example 16 | Example 17 | Comparative example 6 | Comparative example 7 | Comparative Example 8 | Comparative Example 9 | Comparative example 10 | Comparative Example 11 |
|---|---|---|---|---|---|---|---|---|---|---|---|
| Sodium silicate | (Note 1) | 40.00 | - | - | - | - | - | - | - | - | - |
| Silicate Soda No. 1 concentration = 60% (silicic acid conversion) | (Note 2) | - | 66.67 | - | - | - | - | - | - | - | - |
| sodium carbonate | (Note 3) | - | - | 20.00 | - | - | - | - | - | - | - |
| Potassium carbonate | (Note 4) | - | - | - | 20.00 | - | - | - | - | - | - |
| Sodium hydroxide | ^{(Note} 5) | | - | - | - | 20.00 | - | 20.00 | - | 20.00 | - |
| Potassium hydroxide | ^{(Note} 6) | - | - | - | - | - | 20.00 | - | 20.00 | - | 20.00 |
| Nonionic cellulose ether fibrin derivative type water retaining/thickening agent | ^{(Note} 7) | - | - | - | - | 2.00 | 0.05 | 2.00 | 2.00 | 2.00 | 2.00 |
| Sodium polyacrylate type thickening agent | (Note 8) | 1.00 | 0.50 | - | - | 1.00 | 0.50 | - | - | - | - |
| Urethane-modified polyether type thickening agent | (Note 9) | - | - | 2.00 | 2.00 | - | - | 3.00 | 3.00 | 3.00 | 3.00 |
| Mineral oil-based defoaming agent | ^{(Note} 10) | 0.05 | 0.05 | 0.05 | 0.05 | 0.05 | 0.05 | 0.05 | 0.05 | 0.05 | 0.05 |
| Acrylic resin emulsion NV = 51%, MFT = 0°C | ^{(Note} 11) | - | - | - | - | - | - | 19.61 | 19.61 | - | - |
| Ordinary temperature crosslinkable acrylic styrene resin emulsion NV = 48%, MFT = 6°C | ^{(Note} 12) | 20.83 | 20.83 | 20.83 | 20.83 | - | - | - | - | 20.83 | 20.83 |
| Polyether-modified siloxane type surface tension adjuster | ^{(Note} 13) | 0.10 | 0.10 | 0.10 | 0.10 | 0.10 | 0.10 | 0.10 | 0.10 | 0.10 | 0.10 |
| High molecular weight block copolymer solution surface tension adiuster | (Note 14) | 0.10 | 0.10 | 0.10 | 0.10 | 0.10 | 0.10 | 0.10 | 0.10 | 0.10 | 0.10 |
| 2-Ethylhexyl glycol | ^{(Note} 15) | 1.04 | 1.04 | 1.04 | 1.04 | - | - | - | | 1.04 | 1.04 |
| water | | 36.88 | 10.71 | 55.88 | 55.88 | 76.75 | 79.20 | 55.14 | 55.14 | 52.88 | 52.88 |
| total | | 100.00 | 100.00 | 100.00 | 100.00 | 100.00 | 100.00 | 100.00 | 100.00 | 100.00 | 100.00 |

| | | | | | | | | | | | |
|---|---|---|---|---|---|---|---|---|---|---|---|
| (Note 1): Reagent; hydraulic reaction inducing substance; efflorescence inhibitor; water retention effect; manufactured by Wako Pure Chemical Industries, Ltd. (Note 2): Reagent; hydraulic reaction inducing substance, JIS K1408-1966 sodium silicate (silicate soda) No. 1; efflorescence inhibitor; water retention effect; manufactured by Wako Pure Chemical Industries, Ltd. (Note 3): Reagent; hydraulic reaction inducing substance; manufactured by Wako Pure Chemical Industries, Ltd. (Note 4): Reagent; hydraulic reaction inducing substance; manufactured by Wako Pure Chemical Industries, Ltd. (Note 5): Reagent; hydraulic reaction inducing substance; manufactured by Wako Pure Chemical Industries, Ltd. (Note 6): Reagent; hydraulic reaction inducing substance; manufactured by Wako Pure Chemical Industries, Ltd. (Note 7): fibrin derivative; thickening effect; water retention effect; viscoelasticity adjuster that imparts thixotropic viscosity; manufactured by AKZO NOBEL (Note 8): Thickening agent; sodium polyacrylate; viscosity control; high thickening type viscoelasticity adjuster that imparts Newtonian viscosity; manufactured by Toagosei Co., Ltd. (Note 9): Thickening agent; urethane-modified polyether; high-thickening type viscoelasticity adjuster that imparts Newtonian viscosity; manufactured by San Nopco Ltd. (Note 10): Mineral oil-based defoaming agent; manufactured by San Nopco Ltd. (Note 11): Acrylic resin emulsion; NV = 51%; MFT = 0°C; manufactured by Henkel Technologies Japan (Note 12): 1-liquid ordinary temperature crosslinkable acrylic styrene resin emulsion;, NV = 48%; MFT = 6°C; manufactured by BASF Japan. (Note 13): Silicon surfactant; polyether modified siloxane; surface tension adjuster; improving wettability and leveling property; manufactured by BYK (Note 14): wet dispersing agent; solution of high molecular weight block copolymer having pigment affinity group; surface tension adjuster; improving wettability and leveling property; manufactured by BYK (Note 15): Film-forming aid (ethylene glycol mono-2-ethylhexyl ether); film-forming aid; adjusting minimum film-forming temperature (MFT) of resin; manufactured by Nippon Nyukazai Co., Ltd. | | | | | | | | | | | |

The compositions shown in Tables 5 and 6 described above were manufactured by the following procedure, and it was evaluated whether or not they had properties as a curing agent for the two-liquid reaction-curable paint.
(a) Water and the alkalinity-imparting substance were mixed using a desktop disper, and the mixture was stirred until the alkalinity-imparting substance was completely dissolved.
(b) A defoaming agent and a surface tension adjuster were added while continuing stirring.
(c) A resin emulsion was added while continuing stirring.
(d) A film-forming aid was gradually added while continuing stirring so that the resin emulsion did not cause solvent shock.
(e) A thickening agent was added while continuing stirring.

The product obtained by the above procedure was aged for 18 hours until the effect of the film-forming aid was obtained, and used as a sample.

**[Table 7]**

| | Example 6 | Example 7 | Example 8 | Example 9 | Example 10 | Example 11 | Example 12 | Example 13 |
|---|---|---|---|---|---|---|---|---|
| State during production | ∘ | ∘ | ∘ | ∘ | ∘ | ∘ | ∘ | ∘ |
| State immediately after production | ∘ | ∘ | ∘ | ∘ | ∘ | ∘ | ∘ | ∘ |
| State after 1 week of production | ∘ | ∘ | ∘ | ∘ | △ | △ | △ | △ |

**[Table 8]**

| | Example 14 | Example 15 | Example 16 | Example 17 | Comparative example 6 | Comparative example 7 | Comparative Example 8 | Comparative Example 9 | Comparative example 10 | Comparative Example 11 |
|---|---|---|---|---|---|---|---|---|---|---|
| State during production | ∘ | ∘ | ∘ | ∘ | ∘ ^{(Note 1)} | ∘ ^{(Note 1)} | △ | △ | △ | △ |
| State immediately after production | ∘ | ∘ | ∘ | ∘ | ∘ | ∘ | △ | △ | △ | △ |
| State after 1 week of production ^{(Note 2)} | △ | △ | △ | △ | ∘ | ∘ | ▲ | ▲ | × | × |

| | | | |
|---|---|---|---|
| Judgment criteria | | | |
| State during production --- | ∘: Flowable liquid or tenacious liquid without aggregates | △: Aggregation occurred | ×: Gel-like with no flowability (Note 1) : Significant heat generation |
| State immediately after production --- | ∘: Flowable liquid or tenacious liquid without aggregation | △: Aggregation occurred | ×: Gel-like with no flowability |
| State after 1 week of production --- | ∘: Flowable liquid or tenacious liquid without aggregation | △: Separation is observed, but it becomes a uniform liquid when stirred. | |
| | ▲: There are aggregates even after stirring (Note 2) : Put in a container that can be sealed and leave it indoors for 1 week. | ▲: Does not become liquid even when stirred | |

| | | | |
|---|---|---|---|
| * From the above results, it is judged that Examples 6 to 17 can be used as a curing agent for a two-liquid reaction-curing paint. | | | |

On the other hand, in Comparative Examples 6 to 11, although Comparative Examples 6 and 7 did not generate aggregates or form a gel, heat generation during stirring was observed, so that a production problem was found rather than paint formation (flowable liquefaction).

In Comparative Examples 8 to 11, the dispersion (emulsion) of the resin particles tended to be unstable to cause aggregation, and the paint formation (flowable liquefaction) could not be made.

### <Preparation of main agent containing blast furnace slag aqueous suspension as principal component (paint formation)>

Preparation of the main agent of a blast furnace slag-type two-part paint in which the principal component is a blast furnace slag using a blast furnace slag suspension prepared by dispersing a blast furnace slag in water (paint formation) will be described below.

The following is an example of the composition optimized as the main agent of a blast furnace slag-type two-part paint (two-liquid reaction-curable paint).

### • Paint liquid property

Paints were produced with the paint formulations shown in Tables 9 to 12, and the properties of the paint liquid immediately after the production and the storage stability after allowing to stand still indoors for 0 to 30 days were confirmed.

### Evaluation criteria

### Paint liquid property

∘: A uniform liquid without aggregation and having tenacious property (Note)
△: A uniform liquid without aggregation, but not having tenacious property (Note)
×: Shows liquidity, but has poor flowability and has no tenacious property (Note)
   Note) The tenacious property here refers to a viscous flowable liquid having Newtonian and thixotropic properties, differing from a dilatancy-viscous slurry liquid.

### Storage stability

∘∘: A uniform liquid without aggregation, having flowability
∘: A uniform liquid without aggregation, tending to thicken, but when stirred, it becomes a flowable tenacious liquid.
△: A uniform liquid without aggregation, with high thickening, and even when stirred, flowability is poor.
×: A non-tenacious liquid that has aggregation, with high thickening, and even when stirred, flowability is absent, or aggregation occurs.

**[Table 9]**

| | | Example 18 | Example 19 | Example 20 | Example 21 | Example 22 | Example 23 | Example 24 | Example 25 | Example 26 | Example 27 | Example 28 |
|---|---|---|---|---|---|---|---|---|---|---|---|---|
| Slurry 1, Blast furnace slag concentration = 59.38% | (Note 1) | 42.10 | 42.10 | - | - | - | - | - | - | - | - | 42.10 |
| Slurry 2, Blast furnace slag concentration = 59.38% | (Note 1) | - | - | 42.10 | - | - | - | - | 42.10 | - | - | - |
| Slurry 3, Blast furnace slag concentration = 59.38% | (Note 1) | - | - | - | 42.10 | - | - | - | - | 42.10 | - | - |
| Slurry 4, Blast furnace slag concentration = 59.38% | (Note 1) | - | - | - | - | 42.10 | - | - | - | - | - | - |
| Slurry 5, Blast furnace slag concentration = 59.38% | (Note 1) | - | - | - | - | - | - | - | - | - | 42.10 | - |
| Slurry 6, Blast furnace slag concentration = 40.00% | (Note 1) | - | - | - | - | - | 62.50 | 62.50 | - | - | - | - |
| Slurry 7, Blast furnace slag concentration = 59.38% | (Note 1) | - | - | - | - | - | - | - | - | - | - | - |
| Titanium oxide, color pigment | (Note 2) | 25.00 | 25.00 | 25.00 | 25.00 | 25.00 | 7.70 | 25.00 | 25.00 | 25.00 | 25.00 | 25.00 |
| Titanium oxide, color processing pigment Concentration 70 to 80% | (Note 3) | | | | | | | | | | | |
| Fine powder silica | (Note 4) | 7.50 | - | - | - | - | - | 5.15 | 7.50 | 7.50 | 5.00 | 2.50 |
| Latent hydraulic fine aggregate | (Note 5) | | - | - | - | - | - | - | - | - | - | - |
| Fine powder calcium carbonate | (Note 6) | 7.50 | 15.00 | 12.50 | 7.50 | 5.00 | - | - | 7.50 | 7.50 | 5.00 | 2.50 |
| Sepiolite Hydrous magnesium silicate | (Note 7) | 1.00 | 0.10 | 0.10 | 0.10 | 0.10 | 0.10 | 0.10 | 0.10 | 0.10 | 0.10 | 0.10 |
| Attapulgite stone | (Note 8) | 1.00 | 0.20 | 0.20 | 0.20 | 0.20 | 0.20 | 0.20 | 0.20 | 0.20 | 0.20 | 0.20 |
| High molecular weight block copolymer | (Note 9) | 1.00 | 0.10 | 0.10 | 0.10 | 0.10 | 0.10 | 0.10 | 0.10 | 0.10 | 0.10 | 0.10 |
| Polyether-modified siloxane | (Note 10) | 1.00 | 0.10 | 0.10 | 0.10 | 0.10 | 0.10 | 0.10 | 0.10 | 0.10 | 0.10 | 0.10 |
| Naphthalene sulfonic acid/formaldehyde condensate sodium salt | (Note 11) | 0.01 | - | - | - | - | - | - | - | - | - | - |
| Cellulose ether type fibrin derivative Thickening effect/water retention effect Thixotropic viscosity | (Note 12) | 0.50 | 0.05 | 0.05 | 0.05 | 0.05 | 0.05 | 0.05 | 0.05 | 0.05 | 0.05 | 0.05 |
| Sodium polyacrylate type thickening agent | (Note 13) | 2.00 | - | - | - | - | - | - | - | - | - | - |
| Urethane modified polyether type thickening agent | (Note 14) | 2.00 | 1.00 | 1.00 | 1.00 | 1.00 | 1.00 | 1.00 | 1.00 | 1.00 | 1.00 | 1.00 |
| Mineral oil-based defoaming agent | (Note 15) | 0.50 | 0.10 | 0.10 | 0.10 | 0.10 | 0.10 | 0.10 | 0.10 | 0.10 | 0.10 | 0.10 |
| Nonionic powder foam suppressing agent | (Note 16) | 0.50 | - | - | - | - | - | - | - | - | - | - |
| Organic nitrogen-sulfur-based compound Antibacterial agent | (Note 17) | 0.30 | 0.30 | 0.30 | 0.30 | 0.30 | 0.30 | 0.30 | 0.30 | 0.30 | 0.30 | 0.30 |
| Silicon-based compounds | (Note 18) | 0.50 | 0.50 | 0.50 | 0.50 | 0.50 | 0.50 | 0.50 | 0.50 | 0.50 | 0.50 | 0.50 |
| One-liquid ordinary temperature crosslinkable acrylic styrene resin emulsion NV = 48%, MFT = 35°C | (Note 19) 0.48 | - | 5.21 | 10.42 | 15.63 | 20.83 | 26.05 | - | - | - | - | - |
| Acrylic resin emulsion NV = 51%, MFT = 0°C | (Note 20) 0.51 | - | - | - | - | - | - | 4.90 | 9.80 | 14.71 | 19.61 | 24.51 |
| Fluorine resin emulsion NV = 51%, MFT = 30°C | (Note 21) 0.51 | - | - | - | - | - | - | - | - | - | - | - |
| Boric acid | (Note 22) | - | - | - | - | - | - | - | - | - | - | - |
| Tetrasodium pyrophosphate | (Note 23) | - | - | - | - | - | - | - | - | - | - | - |
| Ethylene glycol mono 2-ethylhexyl ether | (Note 24) | - | 0.26 | 0.52 | 0.78 | 1.00 | 1.30 | - | - | - | - | - |
| water | | 7.59 | 9.98 | 7.01 | 6.54 | 3.62 | - | - | 5.65 | 0.74 | 0.84 | 0.94 |
| total | | 100.00 | 100.00 | 100.00 | 100.00 | 100.00 | 100.00 | 100.00 | 100.00 | 100.00 | 100.00 | 100.00 |
| Blast furnace slag content % | | 25.00 | 25.00 | 25.00 | 25.00 | 25.00 | 25.00 | 25.00 | 25.00 | 25.00 | 25.00 | 25.00 |
| Resin content (solid content conversion) % | | 0.00 | 2.50 | 5.00 | 7.50 | 10.00 | 12.50 | 2.50 | 5.00 | 7.50 | 10.00 | 12.50 |
| Resin content (solid content)/blast furnace slag content | | 0.00 | 0.1 | 0.20 | 0.30 | 0.40 | 0.50 | 0.10 | 0.20 | 0.30 | 0.40 | 0.50 |
| Paint liquid property | | ∘ | ∘ | ∘ | ∘ | ∘ | ∘ | ∘ | ∘ | ∘ | ∘ | ∘ |
| Storage stability | 0 days | ∘∘ | ∘∘ | ∘∘ | ∘∘ | ∘∘ | ∘∘ | ∘∘ | ∘∘ | ∘∘ | ∘∘ | ∘∘ |
| | 10 days | ∘∘ | ∘∘ | ∘∘ | ∘∘ | ∘∘ | ∘∘ | ∘∘ | ∘∘ | ∘∘ | ∘∘ | ∘∘ |
| | 20 days | ∘∘ | ∘∘ | ∘∘ | ∘∘ | ∘∘ | ∘∘ | ∘∘ | ∘∘ | ∘∘ | ∘∘ | ∘∘ |
| | 30 days | ∘∘ | ∘∘ | ∘∘ | ∘∘ | ∘∘ | ∘∘ | ∘∘ | ∘∘ | ∘∘ | ∘∘ | ∘∘ |

(Note 1): Blast furnace slag aqueous suspension; See Table 2 for details.
(Note 2): Powdered titanium oxide; color pigment; manufactured by Ishihara Sangyo Co., Ltd.
(Note 3): Dispersive titanium oxide; color processing pigment; manufactured by Yokohama Kasei Co., Ltd.
(Note 4): silica stone; fine aggregate; extender pigment
(Note 5): Latent hydraulic fine aggregate; blast furnace slag; extender pigment; manufactured by DC
(Note 6): Calcium carbonate; fine aggregate; extender pigment
(Note 7): Sepiolite (hydrous magnesium silicate); water retention; coating film reinforcing agent using fiber, manufactured by Showa KDE Co., Ltd.
(Note 8): Attapulgite stone; thickening effect; water retention effect; thixotropic viscosity; reinforcement using needle-like crystal; manufactured by ENGELHARD
(Note 9): Wet dispersing agent; surface tension adjustment; wetting property improvement; leveling property improvement; dispersibility improvement; color separation prevention; manufactured by BYK
(Note 10): Silicon surfactant; surface tension adjustment; wetting property improvement; leveling property improvement; dispersibility improvement; color separation prevention; manufactured by BYK
(Note 11): JIS A 6204; high-performance water reducing agent (1 type); manufactured by Kao Corporation
(Note 12): Nonionic cellulose ether type fibrin derivative; thickening effect; water retention effect; thixotropic viscosity; manufactured by AKZO NOBEL
(Note 13): Thickening agent; sodium polyacrylate; viscosity control; Newtonian viscosity; manufactured by Toagosei Co., Ltd.
(Note 14): Thickening agent; urethane-modified polyether; high thickening type viscoelasticity adjuster that imparts Newtonian viscosity; manufactured by San Nopco Ltd.
(Note 15): Mineral oil-based defoaming agent; manufactured by San Nopco Ltd.
(Note 16): Nonionic powder type defoaming/foam suppressing agent; manufactured by San Nopco Ltd.
(Note 17): Organic nitrogen-sulfur-based compound; antibacterial agent; manufactured by Osaka Gas Chemicals Co., Ltd.
(Note 18): Silicon-based compound; hydrophobicity-imparting agent; imparting anti-rust effect
(Note 19): 1-component ordinary temperature crosslinkable acrylic styrene resin emulsion; NV = 48%; MFT = 6°C; film formation assistance; initial water retention; drying crack prevention; manufactured by BASF Japan
(Note 20): Acrylic resin emulsion; NV = 51%; MFT = 0°C; film formation assistance; initial water retention; dry crack prevention; manufactured by Henkel Technologies Japan
(Note 21): Fluorine resin emulsion; NV = 51%; MFT = 30°C; film formation assistance; initial water retention; dry crack prevention; manufactured by Asahi Glass Co., Ltd.
(Note 22): Reagent; bactericidal action; antiseptic effect; delayed hydraulic reaction; manufactured by Wako Pure Chemical Industries, Ltd.
(Note 23): Reagent; hydraulic reaction inducing substance; reducing action; antiseptic effect; anti-rust effect; delayed hydraulic reaction;
manufactured by Wako Pure Chemical Industries, Ltd. (Note 24): Evaporation suppression of water for adjusting the minimum film forming temperature (MFT) of film forming aid (plasticizer) resin; manufactured by Nippon Nyukazai Co., Ltd.

**[Table 10]**

| | | Example 29 | Example 30 | Example 31 | Example 32 | Example 33 | Example 34 | Example 35 | Example 36 | Example 37 | Example 38 | Example 39 |
|---|---|---|---|---|---|---|---|---|---|---|---|---|
| Slurry 1, Blast furnace slag concentration = 59.38%, Boric acid = 2.38% | (Note 1) | - | - | - | - | 42.10 | - | - | - | - | - | - |
| Slurry 2, Blast furnace slag concentration = 59.38%, Phosphoric acid =1.01% | (Note 1) | - | 42.10 | - | - | - | - | - | - | - | - | - |
| Slurry 3, Blast furnace slag concentration = 59.38%, Phosphoric acid = 0.26% | (Note 1) | - | - | 42.10 | - | - | - | - | - | - | - | - |
| Slurry 4, Blast furnace slag concentration = 59.38%, Phosphoric acid = 0.43% | (Note 1) | - | - | - | 42.10 | - | - | - | - | - | - | - |
| Slurry 5, Blast furnace slag concentration = 59.38%, Phosphoric acid = 0.85% | (Note 1) | - | - | - | - | - | - | - | - | - | - | - |
| Slurry 6, Blast furnace slag concentration = 40.00%, Na silicate = 20.00% | (Note 1) | 62.50 | - | - | - | - | 62.50 | 62.50 | 62.50 | 62.50 | 62.50 | 62.50 |
| Slurry 7, Blast furnace slag concentration = 59.38%, Blocking agent = 0.00% | (Note 1) | - | - | - | - | - | - | - | - | - | - | - |
| Titanium oxide, color pigment | (Note 2) | 25.00 | 25.00 | 25.00 | 25.00 | 25.00 | - | - | - | - | - | - |
| Titanium oxide, color processing pigment Concentration 70 to 80% | (Note 3) | - | - | - | - | - | 11.36 | 11.93 | 12.00 | 14.50 | 14.47 | 13.97 |
| Fine powder silica | (Note 4) | - | 4.50 | 2.00 | 1.50 | - | - | - | - | - | - | - |
| Latent hydraulic fine aggregate | (Note 5) | - | - | - | - | - | - | - | - | - | - | - |
| Fine powder calcium carbonate | (Note 6) | - | 4.50 | 2.00 | 1.50 | - | - | - | - | - | - | - |
| Sepiolite Hydrous magnesium silicate | (Note 7) | 0.10 | 0.10 | 0.10 | 0.10 | 0.10 | 2.00 | 2.00 | 2.00 | 0.10 | 0.10 | 0.10 |
| Attapulgite stone | (Note 8) | 0.20 | 0.20 | 0.20 | 0.20 | 0.20 | 0.20 | 0.20 | 0.20 | 0.20 | 0.20 | 0.20 |
| High molecular weight block copolymer | Note 9 | 0.10 | 0.10 | 0.10 | 0.10 | 0.10 | 0.10 | 0.10 | 0.10 | 0.10 | 0.10 | 0.10 |
| Polyethermodified siloxane | (Note 10) | 0.10 | 0.10 | 0.10 | 0.10 | 0.10 | 0.10 | 0.10 | 0.10 | 0.10 | 0.10 | 0.10 |
| Naphthalene sulfonic acid/formaldehyde condensate sodium salt | (Note 11) | - | - | - | - | - | - | - | - | - | - | - |
| Cellulose ether type fibrin derivative Thickening effect/water retention effect Thixotropic viscosity | (Note 12) | 0.05 | 0.05 | 0.05 | 0.05 | 0.05 | 0.05 | 0.05 | 0.05 | 0.05 | 0.05 | 0.05 |
| Sodium polyacrylate type thickening agent | (Note 13) | - | - | - | - | - | - | - | - | - | - | - |
| Urethane modified polyether type thickening agent | (Note 14) | 1.00 | 1.00 | 1.00 | 1.00 | 1.00 | 0.50 | 0.50 | 0.50 | 1.00 | 1.00 | 1.00 |
| Mineral oil-based defoaming agent | (Note 15) | 0.10 | 0.10 | 0.10 | 0.10 | 0.10 | 0.10 | 0.10 | 0.10 | 0.10 | 0.10 | 0.10 |
| Nonionic powder foam suppressing agent | (Note 16) | - | - | - | - | - | - | - | - | - | - | - |
| Organic nitrogen-sulfur-based compound Antibacterial agent | (Note 17) | 0.30 | 0.30 | 0.30 | 0.30 | 0.30 | 0.30 | 0.30 | 0.30 | 0.30 | 0.30 | 0.30 |
| Silicon-based compounds | (Note 18) | 0.50 | 0.50 | 0.50 | 0.50 | 0.50 | 0.50 | 0.50 | 0.50 | 0.50 | 0.50 | 0.50 |
| One-liquid ordinary temperature resin crosslinkable acrylic styrene emulsion NV=48°/, MFT=35°C | (Note 19) 0.48 | - | - | - | - | - | 15.63 | 10.42 | 5.21 | - | - | - |
| Acrylic resin emulsion NV= 51%, MFT=0°C | (Note 20) 0.51 | - | - | - | - | - | - | - | - | 14.71 | 9.80 | 4.90 |
| Fluorine resin emulsion NV=51%, MFT=30°C | (Note 21) 0.51 | 4.90 | 9.80 | 14.71 | 19.61 | 24.51 | 4.90 | 9.80 | 14.71 | 4.90 | 9.80 | 14.71 |
| Boric acid | (Note 22) | - | - | - | - | - | - | - | - | - | - | - |
| Tetrasodium pyrophosphate | (Note 23) | - | - | - | - | - | - | - | - | - | - | - |
| Ethylene glycol mono 2-ethylhexyl ether | (Note 24) | 0.49 | 0.98 | 1.47 | 1.96 | 2.45 | 1.76 | 1.50 | 1.73 | 0.94 | 0.98 | 1.47 |
| water | | 4.66 | 10.67 | 10.27 | 5.88 | 3.49 | - | - | - | - | - | - |
| total | | 100.00 | 100.00 | 100.00 | 100.00 | 100.00 | 100.00 | 100.00 | 100.00 | 100.00 | 100.00 | 100.00 |
| Blast furnace slag content | % | 12.50 | 25.00 | 25.00 | 25.00 | 25.00 | 25.00 | 25.00 | 25.00 | 25.00 | 25.00 | 25.00 |
| Resin content (solid content conversion) | % | 2.50 | 5.00 | 7.50 | 10.00 | 12.50 | 10.00 | 10.00 | 10.00 | 10.00 | 10.00 | 10.00 |
| Resin content (solid content)/blast furnace slag content | | 020 | 0.2 | 0.30 | 0.40 | 0.50 | 0.40 | 0.40 | 0.40 | 0.40 | 0.40 | 0.40 |
| Paint liquid property | | ∘ | ∘ | ∘ | ∘ | ∘ | ∘ | ∘ | ∘ | ∘ | ∘ | ∘ |
| . Storage stability | 0 days | ∘∘ | ∘∘ | ∘∘ | ∘∘ | ∘∘ | ∘∘ | ∘∘ | ∘∘ | ∘∘ | ∘∘ | ∘∘ |
| | 10 days | ∘∘ | ∘∘ | ∘∘ | ∘∘ | ∘∘ | ∘∘ | ∘∘ | ∘∘ | ∘∘ | ∘∘ | ∘∘ |
| | 20 days | ∘∘ | ∘∘ | ∘∘ | ∘∘ | ∘∘ | ∘∘ | ∘∘ | ∘∘ | ∘∘ | ∘∘ | ∘∘ |
| | 30 days | ∘∘ | ∘∘ | ∘∘ | ∘∘ | ∘∘ | ∘∘ | ∘∘ | ∘∘ | ∘∘ | ∘∘ | ∘∘ |

(Note 1): Blast furnace slag aqueous suspension; See Table 2 for details.
(Note 2): Powdered titanium oxide; color pigment; manufactured by Ishihara Sangyo Co., Ltd.
(Note 3): Dispersive titanium oxide; color processing pigment; manufactured by Yokohama Kasei Co., Ltd.
(Note 4): Silica stone; fine aggregate; extender pigment
(Note 5): Latent hydraulic fine aggregate; blast furnace slag; extender pigment; manufactured by DC
(Note 6): Calcium carbonate; fine aggregate; extender pigment
(Note 7): Sepiolite (hydrous magnesium silicate); water retention; coating film reinforcing agent using fiber; manufactured by Showa KDE Co., Ltd.
(Note 8): Attapulgite stone; thickening effect, water retention effect, thixotropic viscosity; manufactured by ENGELHARD
(Note 9): Wet dispersing agent; surface tension adjustment; wetting property improvement; leveling property improvement; dispersibility improvement; color separation prevention; manufactured by BYK
(Note 10): Silicon surfactant; surface tension adjustment; wetting property improvement; levelling property improvement; dispersibility improvement; color separation prevention; manufactured by BYK
(Note 11): JIS A 6204; high-performance water reducing agent (1 type); manufactured by Kao Corporation
(Note 12): Nonionic cellulose ether-based fibrin derivative; thickening effect; water retention effect; thixotropic viscosity; manufactured by AKZONOBEL
(Note 13): Thickening agent; sodium polyacrylate; viscosity control Newtonian viscosity; manufactured by Toagosei Co., Ltd.
(Note 14): Thickening agent; urethane-modified polyether; high thickening type viscoelasticity adjuster that imparts Newtonian viscosity; manufactured by San Nopco Ltd.
(Note 15): Mineral oil-based defoaming agent; manufactured by San Nopco Ltd.
(Note 16): Nonionic powder type defoaming/foam suppressing agent; manufactured by San Nopco Ltd.
(Note 17): Organic nitrogen sulfur-based compound; antibacterial agent; manufactured by Osaka Gas Chemicals Co., Ltd.
(Note 18): Silicon-based compound; hydrophobicity-imparting agent; imparting anti-rust effect
(Note 19): 1-liquid ordinary temperature crosslinkable acrylic styrene resin emulsion; NV = 48%; MFT = 6°C; film formation assistance; initial water retention; dry crack prevention; manufactured by BASF Japan
(Note 20): Acrylic resin emulsion; NV = 51%; MFT = 0°C; film formation assistance; initial water retention; dry crack prevention; manufactured by Henkel Technologies Japan
(Note 21): Fluorine resin emulsion; NV = 51% MFT = 30°C; film formation assistance; initial water retention; dry crack prevention; manufactured by Asahi Glass Co., Ltd.
(Note 22): Reagent; bactericidal action; antiseptic effect; delayed hydraulic reaction; manufactured by Wako Pure Chemical Industries, Ltd.
(Note 23): Reagent; hydraulic reaction inducing substance; reducing action; antiseptic effect; anti-rust effect; delayed hydraulic reaction; manufactured by Wako Pure Chemical Industries, Ltd.
(Note 24): Film-forming aid (plasticizer); adjusting the minimum film-forming temperature (MFT) of resin; water evaporation suppression; manufactured by Nippon Nyukazai Co., Ltd.

**[Table 11]**

| | Example 40 | Example 41 | Example 42 | Example 43 | Example 44 | Example 45 | Example 46 | Example 47 | Example 48 | Example 49 | Example 50 | Example 51 | |
|---|---|---|---|---|---|---|---|---|---|---|---|---|---|
| Slurry 1 Blast furnace (Note slag = 59.38%, Boric 1) acid = 2.38% | 42.10 | 42.10 | 42.10 | 42.10 | 42.10 | 42.10 | 0.00 | 0.00 | 0.00 | 0.00 | 0.00 | 0.00 | |
| Slurry 2 Blast furnace (Note slag = 59.38%, 1) Phosphoric acid = 1.01% | 0.00 | 0.00 | 0.00 | 0.00 | 0.00 | 0.00 | 0.00 | 0.00 | 0.00 | 0.00 | 0.00 | 0.00 | |
| Slurry 3 Blast furnace (Note slag = 59.38%, 1) Phosphoric acid = 0.26% | 0.00 | 0.00 | 0.00 | 0.00 | 0.00 | 0.00 | 0.00 | 0.00 | 0.00 | 0.00 | 0.00 | 0.00 | |
| Slurry 4 Blast furnace (Note slag = 59.38%, 1) Phosphoric acid = 0.43% | 0.00 | 0.00 | 0.00 | 0.00 | 0.00 | 0.00 | 0.00 | 0.00 | 0.00 | 0.00 | 0.00 | 0.00 | |
| Slurry 5 Blast furnace (Note slag = 59.38%, 1) Phosphoric acid = 0.85% | 0.00 | 0.00 | 0.00 | 0.00 | 0.00 | 0.00 | 0.00 | 0.00 | 0.00 | 0.00 | 0.00 | 0.00 | |
| Slurry 6 Blast furnace (Note slag = 40.00%, Na 1) silicate = 20.00% | 0.00 | 0.00 | 0.00 | 0.00 | 0.00 | 0.00 | 0.00 | 0.00 | 0.00 | 0.00 | 0.00 | 0.00 | |
| Slurry 7 Blast furnace (Note slag = 59.38%, Blocking 1) agent = 0.00% | 0.00 | 0.00 | 0.00 | 0.00 | 0.00 | 0.00 | 21.05 | 21.05 | 21.05 | 21.05 | 21.05 | 21.05 | |
| Titanium oxide, color (Note pigment (powder) 2) | 25.00 | 25.00 | 25.00 | 25.00 | 25.00 | 25.00 | 25.00 | 25.00 | 25.00 | 25.00 | 25.00 | 25.00 | |
| Fine powder silica (Note 3) | 7.50 | 7.50 | 7.00 | 8.00 | 8.00 | 8.00 | 5.00 | 5.00 | 5.00 | 5.00 | 5.00 | 5.00 | |
| Alumina cement (Note aqueous suspension 4) 60% | 0.00 | 0.00 | 0.00 | 0.00 | 0.00 | 0.00 | 20.84 | 20.84 | 20.84 | 0.00 | 0.00 | 0.00 | |
| Alumina cement (Note 5) | 0.00 | 0.00 | 0.00 | 0.00 | 0.00 | 0.00 | 0.00 | 0.00 | 0.00 | 12.50 | 12.50 | 12.50 | |
| Fine powder calcium (Note carbonate 6) | 7.50 | 7.50 | 7.00 | 8.00 | 8.00 | 8.00 | 5.00 | 5.00 | 5.00 | 5.00 | 5.00 | 5.00 | |
| Sepiolite (Note Hydrous Magnesium 7) Silate | 0.10 | 0.10 | 0.10 | 0.10 | 0.10 | 0.10 | 0.10 | 0.10 | 0.10 | 0.10 | 0.10 | 0.10 | |
| Attapulgite stone (Note 8) | 0.20 | 0.20 | 0.20 | 0.20 | 0.20 | 0.20 | 0.20 | 0.20 | 0.20 | 0.20 | 0.20 | 0.20 | |
| KC Flock W-50 (Note 9) | 1.00 | 2.50 | 5.00 | 0.00 | 0.00 | 0.00 | 0.00 | 0.00 | 0.00 | 0.00 | 0.00 | 0.00 | |
| KC Flock W-400G (Note 10) | 0.00 | 0.00 | 0.00 | 1.00 | 2.50 | 5.00 | 0.00 | 0.00 | 0.00 | 0.00 | 0.00 | 0.00 | |
| High molecular weight (Note block copolymer 11) | 0.10 | 0.10 | 0.10 | 0.10 | 0.10 | 0.10 | 0.10 | 0.10 | 0.10 | 0.10 | 0.10 | 0.10 | |
| Polyether-modified (Note siloxane 12) | 0.10 | 0.10 | 0.10 | 0.10 | 0.10 | 0.10 | 0.10 | 0.10 | 0.10 | 0.10 | 0.10 | 0.10 | |
| Naphthalene sulfonic (Note acid/formaldehyde 13) condensate sodium salt | 0.01 | 0.01 | 0.01 | 0.01 | 0.01 | 0.01 | 0.05 | 0.05 | 0.05 | 0.05 | 0.05 | 0.05 | |
| Cellulose ether-based (Note fibrin derivative 14) Thickening effect/water retention effect Thixotropic viscosity | 0.00 | 0.00 | 0.00 | 0.05 | 0.05 | 0.05 | 0.05 | 0.05 | 0.05 | 0.05 | 0.05 | 0.05 | |
| Sodium polyacrylate (Note type thickening agent 15) | 1.00 | 1.00 | 1.00 | 0.00 | 0.00 | 0.00 | 0.00 | 0.00 | 0.00 | 0.00 | 0.00 | 0.00 | |
| Urethane-modified (Note polyether type 16) thickening agent | 1.00 | 1.00 | 1.00 | 1.00 | 1.00 | 1.00 | 1.00 | 1.00 | 1.00 | 1.00 | 1.00 | 1.00 | |
| Mineral oil-based (Note defoaming agent 17) | 0.10 | 0.10 | 0.10 | 0.10 | 0.10 | 0.10 | 0.10 | 0.10 | 0.10 | 0.10 | 0.10 | 0.10 | |
| Nonionic powder foam (Note suppressing agent 18) | 0.50 | 0.50 | 0.50 | 0.50 | 0.50 | 0.50 | 0.50 | 0.50 | 0.50 | 0.50 | 0.50 | 0.50 | |
| Organic nitrogen- (Note sulfur-based compound 19) Antibacterial agent | 0.30 | 0.30 | 0.30 | 0.30 | 0.30 | 0.30 | 0.30 | 0.30 | 0.30 | 0.30 | 0.30 | 0.30 | |
| Silicon-based (Note compound 20) | 0.50 | 0.50 | 0.50 | 0.50 | 0.50 | 0.50 | 0.50 | 0.50 | 0.50 | 0.50 | 0.50 | 0.50 | |
| Acrylic resin emulsion (Note MFT = 0°C; NV= 51% 21) | 0.00 | 0.00 | 0.00 | 0.00 | 0.00 | 0.00 | 14.71 | 14.71 | 14.71 | 14.71 | 14.71 | 14.71 | |
| Boric acid (Note 22) | 0.50 | 0.50 | 0.40 | 0.40 | 0.40 | 0.40 | 1.47 | 2.94 | 0.00 | 1.47 | 0.00 | 0.00 | |
| Tetrasodium (Note pyrophosphate 23) | 0.00 | 0.00 | 0.00 | 0.00 | 0.00 | 0.00 | 0.00 | 0.00 | 2.94 | 0.00 | 1.47 | 2.94 | |
| water | 12.99 | 11.49 | 9.99 | 12.94 | 11.44 | 8.94 | 3.93 | 2.46 | 2.46 | 12.27 | 12.27 | 10.80 | |
| total | 100.50 | 100.50 | 100.40 | 100.40 | 100.40 | 100.40 | 100.00 | 100.00 | 100.00 | 100.00 | 100.00 | 100.00 | |
| Blast furnace slag % content | 25.00 | 25.00 | 25.00 | 25.00 | 25.00 | 25.00 | 12.50 | 12.50 | 12.50 | 12.50 | 12.50 | 12.50 | |
| Resin content (solid % content conversion) | 0.00 | 0.00 | 0.00 | 0.00 | 0.00 | 0.00 | 7.50 | 7.50 | 7.50 | 7.50 | 7.50 | 7.50 | |
| Alumina cement % | 0.00 | 0.00 | 0.00 | 0.00 | 0.00 | 0.00 | 12.50 | 12.50 | 12.50 | 12.50 | 12.50 | 12.50 | |
| Resin (solid)/alumina + blast furnace slag | 0.00 | 0.00 | 0.00 | 0.00 | 0.00 | 0.00 | 13.10 | 13.10 | 13.10 | 13.10 | 13.10 | 13.10 | |
| Moisture in boric acid/main agent | 0.05 | 0.05 | 0.05 | 0.05 | 0.05 | 0.05 | 0.05 | 0.11 | 0.00 | 0.05 | 0.00 | 0.00 | |
| Moisture in tetrasodium pyrophosphate/main agent | 0.00 | 0.00 | 0.00 | 0.00 | 0.00 | 0.00 | 0.00 | 0.00 | 0.11 | 0.00 | 0.05 | 0.11 | |
| Moisture content in main agent | 29.83 | 28.33 | 26.83 | 29.78 | 28.28 | 25.78 | 27.89 | 26.42 | 26.42 | 27.90 | 27.90 | 26.43 | |
| Paint liquid property | ∘ | ∘ | ∘ | ∘ | ∘ | ∘ | ∘ | ∘ | ∘ | ∘ | ∘ | ∘ | |
| Storage stability | 0 days | ∘∘ | ∘∘ | ∘∘ | ∘∘ | ∘∘ | ∘∘ | ∘∘ | ∘∘ | ∘∘ | ∘∘ | ∘∘ | ∘∘ |
| | 10 days | ∘∘ | ∘∘ | ∘∘ | ∘∘ | ∘∘ | ∘∘ | ∘ | ∘∘ | ∘∘ | ∘∘ | ∘∘ | ∘∘ |
| | 20 days | ∘∘ | ∘∘ | ∘∘ | ∘∘ | ∘∘ | ∘∘ | ∘ | ∘∘ | ∘∘ | ∘ | ∘∘ | ∘∘ |
| | 30 days | ∘∘ | ∘∘ | ∘∘ | ∘∘ | ∘∘ | ∘∘ | ∘ | ∘∘ | ∘∘ | ∘ | ∘∘ | ∘∘ |

(Note 1): Blast furnace slag aqueous suspension; See Table 2 for details.
(Note 2): Powdered titanium oxide; color pigment; manufactured by Ishihara Sangyo Co., Ltd.
(Note 3): Scapolite; fine aggregate; extender pigment
(Note 4): EXALT 60H; alumina cement aqueous suspension; manufactured by KERNEOS (France)
(Note 5): Turnal White; alumina cement powder; manufactured by KERNBOS (France)
(Note 6): Calcium carbonate; fine aggregate; extender pigment
(Note 7): Sepiolite (hydrous magnesium silicate); water retention; coating film reinforcing agent using fiber; manufactured by Showa KDE Co., Ltd.
(Note 8): Attapulite stone; thickening effect, water retention effect, thixotropic viscosity; manufactured by ENGELHARD
(Note 9): Cellulose powder; water retention; coating film reinforcing agent using fiber; average fiber length = 45 pm; manufactured by Nippon Paper Industries Co., Ltd.
(Note 10): Cellulose powder; water retention; coating film reinforcing agent using fiber; average fiber length = 24 pm; manufactured by Nippon Paper Industries Co., Ltd.
(Note 11): Wet dispersing agent; surface tension adjustment; wetting property improvement; leveling property improvement; dispersibility improvement; color separation prevention; manufactured by BYK
(Note 12): Silicon surfactant; surface tension adjustment; wetting property improvement; levelling property improvement; dispersibility improvement; color separation prevention; manufactured by BYK
(Note 13): JIS A 6204; high-performance water reducing agent (1 type); manufactured by Kao Corporation
(Note 14): Non-ionic cellulose ether-based fibrin derivative; thickening effect; water retention effect; thixotropic viscosity; manufactured by AKZO NOBEL
(Note 15): Thickening agent; sodium polyacrylate; viscosity control; Newtonian viscosity; manufactured by Toagosei Co., Ltd.
(Note 16): Thickening agent; urethane-modified polyether; high thickening type viscoelasticity adjuster that imparts Newtonian viscosity; manufactured by San Nopco Ltd.
(Note 17): Mineral oil-based defoaming agent; manufactured by San Nopco Ltd.
(Note 18): Nonionic powder type defoaming/foam suppressing agent; manufactured by San Nopco Ltd.
(Note 19): Organic nitrogen-sulfur-based compound; antibacterial agent; manufactured by Osaka Gas Chemicals Co., Ltd.
(Note 20): Silicon-based compound; hydrophobicity-imparting agent; imparting anti-rust effect
(Note 21): Acrylic resin emulsion; NY = 51%; MFT = 0°C; film formation assistance; initial water retention; dry crack prevention; manufactured by Henkel Technologies Japan
(Note 22): Reagent; bactericidal action; antiseptic effect; delayed hydraulic reaction; solubility in water = 5.6 g/100 mL (20°C); manufactured by Wako Pure Chemical Industries, Ltd.
(Note 23): Reagent; hydraulic reaction inducing substance; reducing action; antiseptic effect; anti-rust effect; delayed hydraulic reaction; solubility in water = 5.9 g/100 mL (20°C); manufactured by Wako Pure Chemical Industries, Ltd.

**[Table 12]**

| | Comparative Example 13 | Comparative Example 14 | Comparative Example 15 | Comparative example 16 | Comparative Example 17 | Comparative Example 18 | Comparative Example 19 | Comparative example 20 | Comparative Example 21 | Comparative Example 22 | Comparative Example 23 | |
|---|---|---|---|---|---|---|---|---|---|---|---|---|
| Slurry 1 Blast furnace slag = 59.38%, Boric acid (Note 1) = 2.38% | 42.10 | 42.10 | 42.10 | 42.10 | 42.10 | 0.00 | 0.00 | 0.00 | 0.00 | 0.00 | 0.00 | |
| Slurry 2 Blast furnace slag = 59.38%, (Note 1) Phosphoric acid= 1.01% | 0.00 | 0.00 | 0.00 | 0.00 | 0.00 | 0.00 | 0.00 | 0.00 | 0.00 | 0.00 | 0.00 | |
| Slurry 3 Blast furnace slag = 59.38%, (Note 1) Phosphoric acid = 0.26% | 0.00 | 0.00 | 0.00 | 0.00 | 0.00 | 0.00 | 0.00 | 0.00 | 0.00 | 0.00 | 0.00 | |
| Slurry 4 Blast furnace slag = 59.38%, (Note 1) Phosphoric acid = 0.43% | 0.00 | 0.00 | 0.00 | 0.00 | 0.00 | 0.00 | 0.00 | 0.00 | 0.00 | 0.00 | 0.00 | |
| Slurry 5 Blast furnace slag = 59.38%, (Note 1) Phosphoric acid = 0.85% | 0.00 | 0.00 | 0.00 | 0.00 | 0.00 | 0.00 | 0.00 | 0.00 | 0.00 | 0.00 | 0.00 | |
| Slurry 6 Blast furnace slag = 40.00%, Na silicate (Note 1) = 20.00% | 0.00 | 0.00 | 0.00 | 0.00 | 0.00 | 0.00 | 0.00 | 0.00 | 0.00 | 0.00 | 0.00 | |
| Slurry 7 Blast furnace slag = 59.38%, Blocking (Note 1) agent = 0.00% | 0.00 | 0.00 | 0.00 | 0.00 | 0.00 | 21.05 | 21.05 | 21.05 | 21.05 | 21.05 | 21.05 | |
| Titanium oxide, color (Note 2) pigment | 25.00 | 0.00 | 25.00 | 25.00 | 25.00 | 25.00 | 25.00 | 25.00 | 25.00 | 25.00 | 25.00 | |
| Titanium oxide, color (Note 3) processsing pigment concentration 70 to 80% | 0.00 | 30.00 | 0.00 | 0.00 | 0.00 | 0.00 | 0.00 | 0.00 | 0.00 | 0.00 | 0.00 | |
| Fine powder silica (Note 4) | 7.50 | 7.50 | 4.50 | 4.50 | 4.50 | 5.00 | 5.00 | 5.00 | 5.00 | 5.00 | 5.00 | |
| Alumina Cement (Note 5) aqueous suspension 60% | 0.00 | 0.00 | 0.00 | 0.00 | 0.00 | 20.84 | 20.84 | 20.84 | 0.00 | 0.00 | 0.00 | |
| Alumina cement (Note 6) | 0.00 | 0.00 | 0.00 | 0.00 | 0.00 | 0.00 | 0.00 | 0.00 | 12.50 | 12.50 | 12.50 | |
| Fine powder calcium (Note 7) carbonate | 7.50 | 7.50 | 4.50 | 4.50 | 4.50 | 5.00 | 5.00 | 5.00 | 5.00 | 5.00 | 5.00 | |
| Sepiolite Hydrous magnesium (Note 8) silate | 0.00 | 0.00 | 0.00 | 0.00 | 0.00 | 0.10 | 0.10 | 0.10 | 0.10 | 0.10 | 0.10 | |
| Attapulgite stone (Note 9) | 0.00 | 0.00 | 0.00 | 0.00 | 0.00 | 0.20 | 0.20 | 0.20 | 0.20 | 0.20 | 0.20 | |
| High molecular weight (Note 10) block copolymer | 0.00 | 0.00 | 0.00 | 0.00 | 0.00 | 0.10 | 0.10 | 0.10 | 0.10 | 0.10 | 0.10 | |
| Polyether-modified (Note 11) siloxane | 0.00 | 0.00 | 0.00 | 0.00 | 0.00 | 0.10 | 0.10 | 0.10 | 0.10 | 0.10 | 0.10 | |
| Naphthalene sulfonic acid/formaldehyde (Note 12) condensate sodium salt | 0.05 | 0.05 | 0.05 | 0.05 | 0.05 | 0.05 | 0.05 | 0.05 | 0.05 | 0.05 | 0.05 | |
| Cellulose ether-based fibrin derivative Thickening effect/water (Note 13) retention effect Thixotropic viscosity | 0.50 | 0.50 | 0.50 | 0.50 | 0.50 | 0.05 | 0.05 | 0.05 | 0.05 | 0.05 | 0.05 | |
| Sodium polyacrylate type (Note 14) thickening agent | 0.00 | 0.00 | 0.00 | 0.00 | 0.00 | 0.00 | 0.00 | 0.00 | 0.00 | 0.00 | 0.00 | |
| Urethane-modified polyether type (Note 15) thickening agent | 0.00 | 0.00 | 0.00 | 0.00 | 0.00 | 1.00 | 1.00 | 1.00 | 1.00 | 1.00 | 1.00 | |
| Mineral oil-based (Note 16) defoaming agent | 0.00 | 0.00 | 0.00 | 0.00 | 0.00 | 0.10 | 0.10 | 0.10 | 0.10 | 0.10 | 0.10 | |
| Nonionic powder foam (Note 17) suppressing agent | 0.50 | 0.50 | 0.50 | 0.50 | 0.50 | 0.50 | 0.50 | 0.50 | 0.50 | 0.50 | 0.50 | |
| Organic nitrogen-sulfur based compound (Note 18) antibacterial agent | 0.30 | 0.30 | 0.30 | 0.30 | 0.30 | 0.30 | 0.30 | 0.30 | 0.30 | 0.30 | 0.30 | |
| Silicon-based compound (Note 19) | 0.50 | 0.50 | 0.50 | 0.50 | 0.50 | 0.50 | 0.50 | 0.50 | 0.50 | 0.50 | 0.50 | |
| One-liquid ordinary (Note 20) temperature crosslinkable acrylic styrene resin emulsion 48% NV = 48%, MFT = 35°C | 0.00 | 0.00 | 0.00 | 0.00 | 0.00 | 0.00 | 0.00 | 0.00 | 0.00 | 0.00 | 0.00 | |
| Acrylic resin emulsion (Note 21) NV= 51%, MFT =0°C 51% | 0.00 | 0.00 | 0.00 | 19.61 | 0.00 | 14.71 | 14.71 | 14.71 | 14.71 | 14.71 | 14.71 | |
| Fluorine resin emulsion (Note 22) NV=51%, MFT = 30°C 51% | 0.00 | 0.00 | 0.00 | 0.00 | 19.61 | 0.00 | 0.00 | 0.00 | 0.00 | 0.00 | 0.00 | |
| Boric acid (Note 23) | 0.00 | 0.00 | 0.00 | 0.00 | 0.00 | 0.00 | 1.25 | 0.00 | 0.00 | 0.00 | 0.55 | |
| Tetrasodium (Note 24) pyrophosphate | 0.00 | 0.00 | 0.00 | 0.00 | 0.00 | 0.00 | 0.00 | 1.25 | 0.00 | 1.25 | 0.55 | |
| Ethylene glycol mono 2-(Note 25) ethylhexyl ether | - | - | 1.04 | 0.98 | 1.96 | - | - | - | - | - | - | |
| Ordinary Portland cement | 0.00 | 0.00 | 0.00 | 0.00 | 0.00 | 0.00 | 0.00 | 0.00 | 0.00 | 0.00 | 0.00 | |
| Water | 16.05 | 11.05 | 0.18 | 1.46 | 048 | 5.40 | 4.15 | 4.15 | 13.74 | 12.49 | 12.64 | |
| total | 100.00 | 100.00 | 100.00 | 100.00 | 100.00 | 100.00 | 100.00 | 100.00 | 100.00 | 100.00 | 100.00 | |
| Blast furnace slag % content | 25.00 | 25.00 | 25.00 | 25.00 | 25.00 | 12.50 | 12.50 | 12.50 | 12.50 | 12.50 | 12.50 | |
| Alumina cement % | 0.00 | 0.00 | 0.00 | 0.00 | 0.00 | 12.50 | 12.50 | 12.50 | 12.50 | 12.50 | 12.50 | |
| Inorganic binder % | 25.00 | 25.00 | 25.00 | 25.00 | 25.00 | 25.00 | 25.00 | 25.00 | 25.00 | 25.00 | 25.00 | |
| Resin content (solid % content conversion) | | 0.00 | 0.00 | 10.00 | 10.00 | 10.00 | 7.50 | 7.50 | 7.50 | 7.50 | 7.50 | 7.50 |
| Resin content (solid content)/blast furnace slag content | | 0.00 | 0.00 | 0.40 | 0.40 | 0.40 | 0.60 | 0.60 | 0.60 | 0.60 | 0.60 | 0.60 |
| Resin (solid)/alumina + blast furnace slag | | 0.00 | 0.00 | 0.40 | 0.40 | 0.40 | 0.30 | 0.30 | 0.30 | 0.30 | 0.30 | 0.30 |
| Moisture in boric acid/main agent | | 0.03 | 0.04 | 0.04 | 0.04 | 0.04 | 0.00 | 0.04 | 0.00 | 0.00 | 0.00 | 0.02 |
| Moisture in tetrasodium pyrophosphate/main agent | | 0.00 | 0.00 | 0.00 | 0.00 | 0.00 | 0.00 | 0.00 | 0.04 | 0.00 | 0.04 | 0.02 |
| Moisture content in % main agent | | 32.89 | 27.89 | 27.85 | 27.91 | 26.93 | 29.36 | 28.11 | 28.11 | 29.37 | 28.12 | 28.27 |
| Paint liquid property | | △ | △ | △ | △ | △ | ∘ | ∘ | ∘ | ∘ | ∘ | ∘ |
| Storage stability | 0 days | ∘∘ | ∘∘ | ∘∘ | ∘∘ | ∘∘ | ∘∘ | ∘∘ | ∘∘ | ∘∘ | ∘∘ | ∘∘ |
| | 10 days | ∘∘ | ∘∘ | ∘∘ | ∘∘ | ∘∘ | ▲ | ∘ | ∘ | ∘ | ∘ | ∘ |
| | 20 days | ∘∘ | ∘∘ | ∘∘ | ∘∘ | ∘∘ | ▲ | △ | △ | △ | ∘ | ∘ |
| | 30 days | ∘∘ | ∘∘ | ∘∘ | ∘∘ | ∘∘ | × | △ | △ | ▲ | △ | △ |

(Note 1): Blast furnace slag aqueous suspension; See Table 2 for details.
(Note 2): Powdered titanium oxide; color pigment; manufactured by Ishihara Sangyo Co., Ltd.
(Note 3): Dispersive titanium oxide; color processing pigment; manufactured by Yokohama Kasei Co., Ltd.
(Note 4): Magnet fine aggregate; extender pigment
(Note 5): EXALT 60H; alumina cement aqueous suspension; manufactured by KBRNEOS (France)
(Note 6): Turnal white; alumina cement; manufactured by KERNEOS (France)
(Note 7): Calcium carbonate; fine aggregate; extender pigment
(Note 8) Sepiolite (hydrous magnesium silicate); water retention; coating film reinforcing agent using fiber; manufactured by Showa KDE Co., Ltd.
(Note 9): Attapulgite stone; thickening effect; water retention effect; thixotropic viscosity; reinforcement using needle-like crystal; manufactured by ENGEL 1ARD
(Note 10): Wet dispersing agent; surface tension adjustment; wetting property improvement; leveling property improvement; dispersibility improvement; color separation prevention; manufactured by BYK
(Note 11): Silicon surfactant; surface tension adjustment; wetting property improvement; leveling property improvement; dispersibility improvement; color separation prevention; manufactured by BYK
(Note 12): JIS A 6204; high-performance water reducing agent (1 type); manufactured by Kao Corporation
(Note 13): Nonionic cellulose ether type fibrin derivative; thickening effect; water retention effect; thixotropic viscosity; manufactured by AKZO NOBEL
(Note 14): Thickening agent; sodium polyacrylate; viscosity control; Newtonian viscosity; manufactured by Toagosei Co., Ltd.
(Note 15): Thickening agent; urethane-modified polyether; high thickening type viscoelasticity adjuster that imparts Newtonian viscosity.; manufactured by San Nopco Ltd.
(Note 16): Mineral oil-based defoaming agent; manufactured by San Nopco Ltd.
(Note 17): Nonionic powder type defoaming/foam suppressing agent; manufactured by San Nopco Ltd.
(Note 18): Organic nitrogen-sulfur-based compound; antibacterial agent; manufactured by Osaka Gas Chemicals Co., Ltd.
(Note 19): Silicon-based compound; hydrophobicity-imparting agent; imparting anti-rust effect; film formation assistance; initial water retention; drying crack prevention; manufactured by BASF Japan
(Note 20): 1-liquid ordinary temperature crosslinkable acrylic styrene resin emulsion, NV = 48%, MFT = 6°C; film formation assistance; initial water retention; dry crack prevention; manufactured by BASF Japan Co., Ltd.
(Note 21): Acrylic resin emulsion, NV = 51%, MFT = 0°C; film formation assistance; initial water retention; dry crack prevention; manufactured by Henkel Technologies Java
(Note 22): Fluorine resin emulsion; NV = 51%, MFT = 30°C; film formation assistance; initial water retention; dry crack prevention; manufactured by Asahi Glass Co., Ltd.
(Note 23): Reagent; bactericidal action; antiseptic effect; delayed hydraulic reaction; manufactured by Wako Pure Chemical Industries, Ltd.
(Note 24): Reagent; hydraulic reaction inducing substance; reducing action; antiseptic effect; anti-rust effect; delayed hydraulic reaction; manufactured by Wako Pure Chemical Industries, Ltd.
(Note 25): Adjusting the minimum film formation temperature (MFT) of film formation aid (plasticizer) resin; suppression of water evaporation; manufactured by Nippon Nyukazai Co., Ltd.

* According to the above fact, if a color agent is simply added to the water-dispersion type blast furnace slag as in Comparative Examples 13 and 14, in order to obtain a coating liquid property as the main agent of the blast furnace slag-type two-part paint (two-liquid reaction-curing paint), the coating liquid property is inappropriate since dilatancy viscosity is strong.

By adding a surfactant and a thickening agent containing a viscosity control agent as in the compositions of Examples 18 to 51, and further, by adding a resin emulsion and the like, a tenacious liquid that develops Newtonian and thixotropic properties according to the shear rate is obtained, and the optimum coating property is obtained.

For the paint liquid, preparing the above-described viscous liquid having Newtonian property and thixotropy property is an important factor, for preventing dripping when applied to a vertical wall, for smoothness of the finished surface, and for developing good painting workability.

When an alumina cement, which is a hydraulic fine aggregate, is added to the extender pigment, storage stability is improved by using boric acid or tetrasodium pyrophosphate alone or in combination as a blocking agent.

The deterioration of storage stability is due to the fact that adding a hydraulic alumina cement to the water-dispersion type blast furnace slag suspension that induces a hydraulic reaction in an alkaline condition causes instability by shifting to the alkaline side, therefore, it can be solved by adding boric acid (solubility in water: 5 to 6 g/100 ml, 20°C) or a phosphorus compound tetrasodium pyrophosphate (solubility in water: 5 to 6 g/100 mL, 20°C), which is a blocking agent for the water-dispersion type blast furnace slag, in an amount that causes oversaturation (Examples 46 to 51).

Storage stability is not maintained when the blocking agent is not added or the concentration does not reach the oversaturated state (Comparative Examples 18 to 23).

### <Property of mixed liquid of main agent and curing agent>

### (1) Pot life (work life)

The pot life (work life) of the coating liquid (mixed liquid of the main agent and the curing agent) that combines the above-mentioned example of the hydraulic reaction inducer (curing agent) and the example of the main agent of the blast furnace slag aqueous suspension is confirmed.

The confirmation method is carried out according to the following procedure
(1) Test method
   According to JIS K5600-2-6: 1999 "Paint General Test Method, Part 2: Paint Property/Stability, Section 6: pot life"
(2) Pass/fail judgment criteria
   According to JIS K5659-7-7: 2008 "Pot life of weather resistant paint for steel structure"
(3) According to the JIS standard, the pot life (work life) is evaluated at 5 hours, but in this case, the evaluation was also performed at
   8 hours and 24 hours in consideration of the usage time in the construction work.

**[Table 13]**

| | | Example 52 | Example 53 | Example 54 | Example 55 | Example 56 | Example 57 | Example 58 | Example 59 | Example 60 | Example 61 | Example 62 | Example 63 |
|---|---|---|---|---|---|---|---|---|---|---|---|---|---|
| Main agent (agent A) composition (Principal component blast furnace slag aqueous suspension) | | Example 18 | Example 18 | Example 18 | Example 18 | Example 18 | Example 18 | Example 18 | Example 18 | Example 18 | Example 18 | Example 18 | Example 18 |
| Curing agent (agent B) composition (Alkaline hydraulic reaction inducer) | | Example 6 | Example 7 | Example 8 | Example 9 | Example 10 | Example 11 | Example 12 | Example 13 | Example 14 | Example 15 | Example 16 | Example 17 |
| Blending ratio | Main agent (agent A) | 100.00 | 100.00 | 100.00 | 100.00 | 100.00 | 100.00 | 100.00 | 100.00 | 100.00 | 100.00 | 100.00 | 100.00 |
| | Curing agent (agent B) | 31.25 | 18.66 | 62.50 | 62.50 | 31.25 | 18.66 | 62.50 | 62.50 | 31.25 | 18.66 | 62.50 | 62.50 |
| Blast furnace slag content in mixed liquid | | 25.00 | 25.00 | 25.00 | 25.00 | 25.00 | 25.00 | 25.00 | 25.00 | 25.00 | 25.00 | 25.00 | 25.00 |
| Alkaline substance content in mixed liquid | | 12.50 | 12.50 | 12.50 | 12.50 | 12.50 | 12.50 | 12.50 | 12.50 | 12.50 | 12.50 | 12.50 | 12.50 |
| Alkaline substance con ten t/inorganic hydraulic component | | 0.50 | 0.50 | 0.50 | 0.50 | 0.50 | 0.50 | 0.50 | 0.50 | 0.50 | 0.50 | 0.50 | 0.50 |
| Pot life (work life) | 5 hours | usable | usable | usable | usable | usable | usable | usable | usable | usable | usable | usable | usable |
| | 8 hours | usable | usable | usable | usable | usable | usable | usable | usable | usable | usable | usable | usable |
| | 24 hours | usable | usable | unusable | unusable | usable | usable | unusable | unusable | usable | usable | unusable | unusable |

**[Table 14]**

| | | Example 64 | Example 65 | Example 66 | Example 67 | Example 68 | Example 69 | Example 70 | Example 71 | Example 72 | Example 73 | Example 74 | Example 75 |
|---|---|---|---|---|---|---|---|---|---|---|---|---|---|
| Main agent (agent A) composition (Principal component blast furnace slag aqueous suspension) | | Example 19 | Example 20 | Example 21 | Example 22 | Example 23 | Example 24 | Example 25 | Example 26 | Example 27 | Example 28 | Example 29 | Example 30 |
| Curing agent (agent B) composition (Alkaline hydraulic reaction inducer) | | Example 6 | Example 6 | Example 6 | Example 6 | - | - | Example 6 | Example 6 | Example 6 | Example 6 | - | Example 6 |
| Blending ratio | Main agent (agent A) | 100.00 | 100.00 | 100.00 | 100.00 | 100.00 | 100.00 | 100.00 | 100.00 | 100.00 | 100.00 | 100.00 | 100.00 |
| | Curing agent (agent B) | 31.25 | 31.25 | 31.25 | 31.25 | 0.00 | 0.00 | 31.25 | 31.25 | 31.25 | 31.25 | 0.00 | 31.25 |
| Blast furnace slag content in mixed liquid | | 25.00 | 25.00 | 25.00 | 25.00 | 25.00 | 25.00 | 25.00 | 25.00 | 25.00 | 25.00 | 25.00 | 25.00 |
| Alkaline substance content in mixed liquid | | 12.50 | 12.50 | 12.50 | 12.50 | 12.50 | 12.50 | 12.50 | 12.50 | 12.50 | 12.50 | 12.50 | 12.50 |
| Alkaline substance con ten t/inorganic hydraulic component | | 0.50 | 0.50 | 0.50 | 0.50 | 0.50 | 0.50 | 0.50 | 0.50 | 0.50 | 0.50 | 0.50 | 0.50 |
| Pot life (work life) | 5 hours | usable | usable | usable | usable | usable | usable | usable | usable | usable | usable | usable | usable |
| | 8 hours | usable | usable | usable | usable | usable | usable | usable | usable | usable | usable | usable | usable |
| | 24 hours | usable | usable | usable | usable | usable | usable | usable | usable | usable | usable | usable | usable |

**[Table 15]**

| | | Example 76 | Example 77 | Example 78 | Example 79 | Example 80 | Example 81 | Example 82 | Example 83 | Example 84 | Example 85 | Example 86 | Example 87 |
|---|---|---|---|---|---|---|---|---|---|---|---|---|---|
| Main agent (agent A) composition (Principal component blast furnace slag aqueous suspension) | | Example 31 | Example 32 | Example 33 | Example 34 | Example 35 | Example 36 | Example 37 | Example 38 | Example 39 | Example 40 | Example 41 | Example 42 |
| Curing agent (agent B) composition (Alkaline hydraulic reaction inducer) | | Example 6 | Example 6 | Example 6 | - | - | - | - | - | - | Example 6 | Example 6 | Example 6 |
| Blending ratio | Main agent (agent A) | 100.00 | 100.00 | 100.00 | 100.00 | 100.00 | 100.00 | 100.00 | 100.00 | 100.00 | 100.00 | 100.00 | 100.00 |
| | Curing agent (agent B) | 31.25 | 31.25 | 31.25 | 0.00 | 0.00 | 0.00 | 0.00 | 0.00 | 0.00 | 31.25 | 31.25 | 31.25 |
| Blast furnace slag content in mixed liquid | | 25.00 | 25.00 | 25.00 | 25.00 | 25.00 | 25.00 | 25.00 | 25.00 | 25.00 | 25.00 | 25.00 | 25.00 |
| Alkaline substance content in mixed liquid | | 12.50 | 12.50 | 12.50 | 12.50 | 12.50 | 12.50 | 12.50 | 12.50 | 12.50 | 12.50 | 12.50 | 12.50 |
| Alkaline substance con ten t/inorganic hydraulic component | | 0.50 | 0.50 | 0.50 | 0.50 | 0.50 | 0.50 | 0.50 | 0.50 | 0.50 | 0.50 | 0.50 | 0.50 |
| Pot life (work life) | 5 hours | usable | usable | usable | usable | usable | usable | usable | usable | usable | usable | usable | usable |
| | 8 hours | usable | usable | usable | usable | usable | usable | usable | usable | usable | usable | usable | usable |
| | 24 hours | usable | usable | usable | usable | usable | usable | usable | usable | usable | usable | usable | usable |

**[Table 16]**

| | | | Example 88 | Example 89 | Example 90 | Example 91 | Example 92 | Example 93 | Example 94 | Example 95 | Example 96 | Example 97 | Example 98 | Example 99 |
|---|---|---|---|---|---|---|---|---|---|---|---|---|---|---|
| Main agent (agent A) composition | Example | | Example 43 | Example 44 | Example 45 | Example 46 | Example 47 | Example 48 | Example 49 | Example 50 | Example 51 | - | - | - |
| | Slurry 7 59.38% ^{(Note 1)} | | 0.00 | 0.00 | 0.00 | 0.00 | 0.00 | 0.00 | 0.00 | 0.00 | 0.00 | 42.10 | 42.10 | 42.10 |
| | Water 60.00% glass (Note ²⁾ | | 0.00 | 0.00 | 0.00 | 0.00 | 0.00 | 0.00 | 0.00 | 0.00 | 0.00 | 20.83 | 20.83 | 20.83 |
| | Boric acid (Note ³⁾ | | 0.00 | 0.00 | 0.00 | 3.00 | 1.50 | 0.00 | 1.50 | 2.00 | 1.00 | 3.00 | 1.50 | 0.00 |
| | Tetrasodium pyrophosphate (Note ⁴⁾ | | 0.00 | 0.00 | 0.00 | 0.00 | 1.50 | 3.00 | 1.50 | 1.00 | 2.00 | 0.00 | 1.50 | 3.00 |
| | water | | 0.00 | 0.00 | 0.00 | 0.00 | 0.00 | 0.00 | 0.00 | 0.00 | 0.00 | 34.07 | 34.07 | 34.07 |
| Curing agent (agent B) composition (Alkaline hydraulic reaction inducer) | | | Example 6 | Example 6 | Example 6 | Example 6 | Example 6 | Example 6 | Example 6 | Example 6 | Example 6 | - | - | - |
| Blending ratio | | Main agent (agent A) | 100.00 | 100.00 | 100.00 | 103.00 | 103.00 | 103.00 | 103.00 | 103.00 | 103.00 | 100.00 | 100.00 | 100.00 |
| | | Curing agent (agent B) | 31.25 | 31.25 | 31.25 | 31.25 | 31.25 | 31.25 | 31.25 | 31.25 | 31.25 | 0.00 | 0.00 | 0.00 |
| Blast furnace slag content in mixed liquid | | | 25.00 | 25.00 | 25.00 | 12.50 | 12.50 | 12.50 | 12.50 | 12.50 | 12.50 | 25.00 | 25.00 | 25.00 |
| Alumina cement content in mixed liquid | | | 0.00 | 0.00 | 0.00 | 12.50 | 12.50 | 12.50 | 12.50 | 12.50 | 12.50 | 0.00 | 0.00 | 0.00 |
| Alkaline substance content in mixed liquid | | | 12.50 | 12.50 | 12.50 | 12.50 | 12.50 | 12.50 | 12.50 | 12.50 | 12.50 | 12.50 | 12.50 | 12.50 |
| Alkaline substance content/Alumina cement content | | | 0.50 | 0.50 | 0.50 | 0.50 | 0.50 | 0.50 | 0.50 | 0.50 | 0.50 | 0.50 | 0.50 | 0.50 |
| Pot life (work life) | | 5 hours | usable | usable | usable | usable | usable | usable | usable | usable | usable | usable | usable | usable |
| | | 8 hours | usable | usable | usable | usable | usable | usable | usable | usable | usable | usable | usable | usable |
| | | 24 hours | usable | usable | usable | usable | usable | usable | usable | usable | usable | usable | usable | usable |

| | | | | | | | | | | | | | | |
|---|---|---|---|---|---|---|---|---|---|---|---|---|---|---|
| (Note 1) : Blast furnace slag aqueous suspension; See Table 2 for details. (Note 2) : JIS standard specified concentration reagent; manufactured by Wako Pure Chemical Industries, Ltd.; See Table 3 for details. (Note 3) : Reagent; manufactured by Wako Pure Chemical Industries, Ltd. (Note 4) : Reagent; manufactured by Wako Pure Chemical Industries, Ltd. | | | | | | | | | | | | | | |

**[Table 17]**

| | | Comparative Example 24 | Comparative Example 25 | Comparative Example 26 | Comparative example 5 |
|---|---|---|---|---|---|
| Main agent (agent A) composition (Principal component blast furnace slag aqueous suspension) | | Example 18 | Example 18 | - | - |
| Curing agent (agent B) composition (Alkaline hydraulic reaction inducer) | | Comparative example 6 | Comparative example 7 | - | - |
| Alumina cement ^{(Note 1)} | | - | - | 50.00 | - |
| Ordinary Portland cement | | - | - | - | 50.00 |
| water | | - | - | 25.00 | 25.00 |
| Blending ratio | Main agent (agent A) | 100.00 | 100.00 | - | - |
| | Curing agent (agent B) | 31.25 | 31.25 | - | - |
| Blast furnace slag content in mixed liquid | | 25.00 | 25.00 | - | - |
| Alkaline substance content in mixed liquid | | 12.50 | 12.50 | - | - |
| Alkaline substance content/Alumina cement content | | 0.50 | 0.50 | - | - |
| Pot life (work life) | 5 hours | unusable | unusable | unusable ^{(Note 2)} | unusable ^{(Note 2)} |
| | 8 hours | - | - | - | - |
| | 24 hours | - | - | - | - |

| | | | | | |
|---|---|---|---|---|---|
| (Note 1): Turnal white (powder alumina cement); manufactured by KERNEOS (France) (Note 2): Solidified (solid) state within 3 hours (Note 1): Turnal white (powder alumina cement); manufactured by KERNEOS (France) (Note 2): Solidified (solid) state within 3 hours | | | | | |

* From the above examples, it could be confirmed that a pot life (work life) sufficient for a two-liquid ordinary temperature reaction curing type paint is obtained, in a combination of the main agent and the curing agent of the main agent composition containing as the main component the blast furnace slag aqueous suspension and the curing agent composition containing as the main component sodium carbonate, potassium carbonate and sodium silicate as the alkaline hydraulic reaction inducer, suggested in the present invention.

On the other hand, in the curing agent composition containing as the main component sodium hydroxide and potassium hydroxide as the alkaline hydraulic reaction inducer of the comparative example, the pot life (work life) is not compatible with JIS K5659-7-7: 2008, "Pot life of weather resistant paint for steel structure", and cannot be used in actual painting work.

Furthermore, the water dispersion of ordinary Portland cement or the water dispersion of a blast furnace slag completes the apparent curing (solidification) reaction before the pot life (work life) required for the two-liquid ordinary temperature reaction curing type paint.

In the above examples, it is clarified that the pot life (work life) is significantly extended in combination with the curing agent composition containing as the main component sodium silicate, which is an alkaline hydraulic reaction inducer, and it expresses the characteristics of the present invention, and in the following sections, paint formation with two agents as the paint form was suggested under the title of "alumina cement-based two-part paint" in the present invention, but it is also explained that it is possible to form a paint with one agent.

Therefore, the present invention is not limited to the two-part paint (two-liquid ordinary temperature reaction curing type paint), but the one-part paint (one-liquid ordinary temperature reaction curing (self-crosslinking or self-curing) type paint) is also included.

### (2) Explanation of one-part paint (one-liquid ordinary temperature reaction curing type (self-crosslinking type or self-curing type) paint)

(1) Evaluation procedure
   (a) Storage stability
      The sample prepared above is placed in a container that can be closed tightly and stored in a room (temperature 23 ± 2°C and relative humidity 50 ± 5%) for 1, 2 or 3 months, and the appearance of the sample liquid is observed.
   (b) Painting workability
      The coating workability with a brush, a roller, and an air spray was confirmed for the sample liquid having a storage period of 1, 2, and 3 months.
   (c) Confirmation of hydraulic reaction of blast furnace slag of hydraulic binder
      A sample liquid with a storage period of 1, 2 or 3 months was applied to a slate plate using an air spray and cured indoors (temperature 23 ± 2°C and relative humidity 50 ± 5%) for 7 days, to obtain a test specimen, which was then subjected to a one-week boiling test.
      Further, the adhesiveness after the boiling test was measured in accordance with JIS K5600-5-6: 1999, paint general test method, Part 5: Mechanical properties of the coating film, Section 6: Adhesiveness (cross-cut method).
      (The tape used at a number of grids of 25 squares and a grid spacing of 4 mm was a packing cloth tape with high adhesive strength out of the standard.)

As a comparative example, a slate plate coated with a mortar using ordinary Portland cement, a plate coated with a mortar using a blast furnace slag, and a plate coated with an acrylic urethane resin emulsion-based paint available from another company according to the coating specification recommended by the manufacturer were added for each boiling test, and the test was carried out.

(Note) In the coating film in which the hydraulic reaction of an inorganic substance blast furnace slag has advanced sufficiently, no abnormality will occur even if it is still immersed in boiling water, while in the coating film formed of a resin, abnormalities in the appearance such as swelling, peeling and the like occur at an early stage, and based on this past finding, a boiling test was carried out to confirm the blast furnace slag hydraulic reaction.

**[Table 18]**

| | Example 52 | Example 53 | Example 56 | Example 57 | Example 60 | Example 61 | Example 64 | Example 65 | Example 66 | Example 67 | Example 68 | Example 69 | | |
|---|---|---|---|---|---|---|---|---|---|---|---|---|---|---|
| Binder component (Blast furnace slag or alumina cement) | Slurry 6 | Example 29 | Slurry 7 | Example 23 | Example 24 | Example 34 | Example 35 | Example 36 | Example 37 | Example 38 | Example 39 | Example 46 | | |
| Curing reaction inducer component (Sodium silicate) | - | - | Example 7 | - | - | - | - | - | - | - | - | Example 6 | | |
| Binder/Curing reaction inducer | 10/0 | 10/0 | 10/4.45 | 10/0 | 10/0 | 10/0 | 10/0 | 10/0 | 10/0 | 10/0 | 10/0 | 10/3.13 | | |
| Blast furnace slag content in wt% mixed liquid | 40.00 | 25.00 | 40.00 | 25.00 | 25.00 | 25.00 | 25.00 | 25.00 | 25.00 | 25.00 | 25.00 | 12.50 | | |
| Alumina cement content in wt% mixed liquid | 0.00 | 0.00 | 0.00 | 0.00 | 0.00 | 0.00 | 0.00 | 0.00 | 0.00 | 0.00 | 0.00 | 12.50 | | |
| Sodium silicate content in wt% mixed liquid | | | 20.00 | 12.50 | 20.00 | 12.50 | 12.50 | 12.50 | 12.50 | 12.50 | 12.50 | 12.50 | 12.50 | 12.50 |
| Sodium silicate content/binder component | | | 0.50 | 0.50 | 0.50 | 0.50 | 0.50 | 0.50 | 0.50 | 0.50 | 0.50 | 0.50 | 0.50 | 0.50 |
| Storage stability | | next day | No abnormality | No abnormality | No abnormality | No abnormality | No abnormality | No abnormality | No abnormality | No abnormality | No abnormality | No abnormality | No abnormality | No abnormality |
| | | 1 month | No abnormality | No abnormality | No abnormality | No abnormality | No abnormality | No abnormality | No abnormality | No abnormality | No abnormality | No abnormality | No abnormality | No abnormality |
| | | 2 months | No abnormality | No abnormality | No abnormality | No abnormality | No abnormality | No abnormality | No abnormality | No abnormality | No abnormality | No abnormality | No abnormality | No abnormality |
| | | 3 months | No abnormality | No abnormality | No abnormality | No abnormality | No abnormality | No abnormality | No abnormality | No abnormality | No abnormality | No abnormality | No abnormality | No abnormality |
| Painting workability | Next day of storage | Brush | No problem | No problem | No problem | No problem | No problem | No problem | No problem | No problem | No problem | No problem | No problem | No problem |
| | | roller | No problem | No problem | No problem | No problem | No problem | No problem | No problem | No problem | No problem | No problem | No problem | No problem |
| | | Air spray ^{(Note 1)} | No problem | No problem | No problem | No problem | No problem | No problem | No problem | No problem | No problem | No problem | No problem | No problem |
| | Storage for 1 month | Brush | No problem | No problem | No problem | No problem | No problem | No problem | No problem | No problem | No problem | No problem | No problem | No problem |
| | | roller | No problem | No problem | No problem | No problem | No problem | No problem | No problem | No problem | No problem | No problem | No problem | No problem |
| | | Air spray ^{(Note 1)} | No problem | No problem | No problem | No problem | No problem | No problem | No problem | No problem | No problem | No problem | No problem | No problem |
| | Storag e for 2 month s | Brush | No problem | No problem | No problem | No problem | No problem | No problem | No problem | No problem | No problem | No problem | No problem | No problem |
| | | roller | No problem | No problem | No problem | No problem | No problem | No problem | No problem | No problem | No problem | No problem | No problem | No problem |
| | | Air spray ^{(Note 1)} | No problem | No problem | No problem | No problem | No problem | No problem | No problem | No problem | No problem | No problem | No problem | No problem |
| | Storag e for 3 month s | Brush | No problem | No problem | No problem | No problem | No problem | No problem | No problem | No problem | No problem | No problem | No problem | No problem |
| | | roller | No problem | No problem | No problem | No problem | No problem | No problem | No problem | No problem | No problem | No problem | No problem | No problem |
| | | Air spray ^{(Note 1)} | No problem | No problem | No problem | No problem | No problem | No problem | No problem | No problem | No problem | No problem | No problem | No problem |
| Confirmatio n of | | Appearance after boiling | No abnormality | No abnormality | No abnormality | No abnormality | No abnormality | No abnormality | No abnormality | No abnormality | No abnormality | No abnormality | No abnormality | No abnormality |
| hydraulic reaction | Next day of storage | Adhesivenes s before boiling ^{(Note 2)} | Classification :0 | Classification :0 | Classification :0 | Classification :0 | Classification :0 | Classification :0 | Classification :0 | Classification :0 | Classification :0 | Classification :0 | Classification :0 | Classification :0 |
| | | Adhesivenes s after boiling ^{(Note 2)} | Classification :0 | Classification :0 | Classification :0 | Classification :0 | Classification :0 | Classification :0 | Classification :0 | Classification :0 | Classification :0 | Classification :0 | Classification :0 | Classification :0 |
| | Storag e for 1 month | Appearance after boiling | No abnormality | No abnormality | No abnormality | No abnormality | No abnormality | No abnormality | No abnormality | No abnormality | No abnormality | No abnormality | No abnormality | No abnormality |
| | | Adhesivenes s before boiling ^{(Note 2)} | Classification :0 | Classification :0 | Classification :0 | Classification :0 | Classification :0 | Classification :0 | Classification :0 | Classification :0 | Classification :0 | Classification :0 | Classification :0 | Classification :0 |
| | | Adhesivenes s after boiling ^{(Note 2)} | Classification :0 | Classification :0 | Classification :0 | Classification :0 | Classification :0 | Classification :0 | Classification :0 | Classification :0 | Classification :0 | Classification :0 | Classification :0 | Classification :0 |
| | Storag e for 2 month s | Appearance after boiling | No abnormality | No abnormality | No abnormality | No abnormality | No abnormality | No abnormality | No abnormality | No abnormality | No abnormality | No abnormality | No abnormality | No abnormality |
| | | Adhesivenes s before boiling ^{(Note 2)} | Classification :0 | Classification :0 | Classification :0 | Classification :0 | Classification :0 | Classification :0 | Classification :0 | Classification :0 | Classification :0 | Classification :0 | Classification :0 | Classification :0 |
| | | Adhesivenes s after boiling ^{(Note 2)} | Classification :0 | Classification :0 | Classification :0 | Classification :0 | Classification :0 | Classification :0 | Classification :0 | Classification :0 | Classification :0 | Classification :0 | Classification :0 | Classification :0 |
| | Storag e for 3 month s | Appearance after boiling | No abnormality | No abnormality | No abnormality | No abnormality | No abnormality | No abnormality | No abnormality | No abnormality | No abnormality | No abnormality | No abnormality | No abnormality |
| | | Adhesivenes s before boiling^{(Note 2)} | Classification :0 | Classification :0 | Classification :0 | Classification :0 | Classification :0 | Classification :0 | Classification :0 | Classification :0 | Classification :0 | Classification :0 | Classification :0 | Classification :0 |
| | | Adhesivenes s after boiling ^{(Note 2)} | Classification :0 | Classification :0 | Classification :0 | Classification :0 | Classification :0 | Classification :0 | Classification :0 | Classification :0 | Classification :0 | Classification :0 | Classification :0 | Classification :0 |

| | | | | | | | | | | | | | | |
|---|---|---|---|---|---|---|---|---|---|---|---|---|---|---|
| (Note 1): Use an air spray with a diameter of 1.5 mm. (Note 2): Classification evaluation conforms to Table 1 of JIS K5600-5-6-8-3. (Note 1): Use an air spray with a diameter of 2.0 mm. (Note 2): Classification evaluation conforms to Table 1 of JIS K5600-5-6-8-3. | | | | | | | | | | | | | | |

**[Table 19]**

| | | Example 70 | Example 71 | Example 72 | Example 73 | Example 74 | Example 75 | Comparative Example 24 | Comparative Example 25 | Comparative Example 26 | Comparative Example 27 | Comparative Example 28 | Comparative Example 29 | |
|---|---|---|---|---|---|---|---|---|---|---|---|---|---|---|
| Main agent composition (Blast furnace slag or alumina cement) | | Example 46 | Example 47 | Example 48 | Example 49 | Example 50 | Example 51 | Slurry 7 | Slurry 7 | - | - | - | | |
| Alumina cement aqueous suspension ^{(Note 1)} | | - | - | - | - | - | - | - | - | 37.00 | - | - | | |
| Alumina cement ^{(Note 2)} | | - | - | - | - | - | - | - | - | - | 22.20 | - | | |
| Ordinary Portland cement ^{(Note 3)} | | - | - | - | - | - | - | - | - | - | - | 22.20 | | |
| No. 7 silica sand ^{(Note 4)} | | - | - | - | - | - | - | - | - | 63.00 | 66.70 | 66.70 | | |
| water | | - | - | - | - | - | - | - | - | - | 11.10 | 11.10 | ^{(Note 7)} Painting specifications for acrylic urethane resin emulsion type paints manufacture d by other companies | |
| Curing reaction inducer component (Sodium silicate or other curing reaction inducer component) | | Example 6 | Example 6 | Example 6 | Example 6 | Example 6 | Example 6 | Example 8 | Example 9 | Example 8 | - | - | | |
| Binder/Curing reaction inducer | | 10/3.13 | 10/3.13 | 10/3.13 | 10/3.13 | 10/3.13 | 10/3.13 | 10/10 | 10/10 | 10/5.55 | 10/0 | 10/0 | | |
| Blast furnace slag content in wt% mixed liquid | | 12.50 | 12.50 | 12.50 | 12.50 | 12.50 | 12.50 | 40.00 | 40.00 | 0.00 | 22.73 | 22.73 | | |
| Alumina cement content in wt% mixed liquid | | 12.50 | 12.50 | 12.50 | 12.50 | 12.50 | 12.50 | 0.00 | 0.00 | 22.20 | 0.00 | 0.00 | | |
| Sodium silicate content in wt% mixed liquid | | 12.50 | 12.50 | 12.50 | 12.50 | 12.50 | 12.50 | 0.00 | 0.00 | 0.00 | 0.00 | 0.00 | | |
| Other curing reaction wt% inducer components | | 0.00 | 0.00 | 0.00 | 0.00 | 0.00 | 0.00 | 20.00 | 20.00 | 11.10 | 0.00 | 0.00 | | |
| Curing reaction inducer component/binder component | | 0.50 | 0.50 | 0.50 | 0.50 | 0.50 | 0.50 | 0.50 | 0.50 | 0.50 | 0.00 | 0.00 | | |
| Storage stability | next day | No abnormality | No abnormality | No abnormality | No abnormality | No abnormality | No abnormality | Solidification | Solidification | Solidification | Solidification | Solidification | No abnormality | |
| | | 1 month | No abnormality | No abnormality | No abnormality | No abnormality | No abnormality | No abnormality | - | - | - | - | - | No abnormality |
| | | 2 months | No abnormality | No abnormality | No abnormality | No abnormality | No abnormality | No abnormality | - | - | - | - | - | No abnormality |
| | | 3 months | No abnormality | No abnormality | No abnormality | No abnormality | No abnormality | No abnormality | - | - | - | - | - | No abnormality |
| | Next day of storage | Brush | No problem | No problem | No problem | No problem | No problem | No problem | Not workable | Not workable | Not workable | Not workable | Not workable | No problem |
| | | roller | No problem | No problem | No problem | No problem | No problem | No problem | Not workable | Not workable | Not workable | Not workable | Not workable | No problem |
| | | Air spray ^{(Note 5)} | No problem | No problem | No problem | No problem | No problem | No problem | Not workable | Not workable | Not workable | Not workable | Not workable | No problem |
| | Storag e for 1 month | Brush | No problem | No problem | No problem | No problem | No problem | No problem | - | - | - | - | - | No problem |
| Painting workability | | roller | No problem | No problem | No problem | No problem | No problem | No problem | - | - | - | - | - | No problem |
| | | Air spray ^{(Note 5)} | No problem | No problem | No problem | No problem | No problem | No problem | - | - | - | - | - | No problem |
| | Storag e for 2 month s | Brush | No problem | No problem | No problem | No problem | No problem | No problem | - | - | - | - | - | No problem |
| | | roller | No problem | No problem | No problem | No problem | No problem | No problem | - | - | - | - | - | No problem |
| | | Air spray ^{(Note 5)} | No problem | No problem | No problem | No problem | No problem | No problem | - | - | - | - | - | No problem |
| | Storag e for 3 month s | Brush | No problem | No problem | No problem | No problem | No problem | No problem | - | - | - | - | - | No problem |
| | | roller | No problem | No problem | No problem | No problem | No problem | No problem | - | - | - | - | - | No problem |
| | | Air spray ^{(Note 5)} | No problem | No problem | No problem | No problem | No problem | No problem | - | - | - | - | - | No problem |
| Confirmatioo n of hydraulic reaction ^{(Note 4)} | Next day of storage | Appearance after boiling | No abnormality | No abnormality | No abnormality | No abnormality | No abnormality | No abnormality | - | - | - | - | - | Swelling/peel ing |
| | | Adhesivenes s before boiling ^{(Note 6)} | Classification :0 | Classification :0 | Classification :0 | Classification :0 | Classification :0 | Classification :0 | - | - | - | - | - | Classification :0 |
| | | Adhesivenes s after boiling ^{(Note 6)} | Classification :0 | Classification :0 | Classification :0 | Classification :0 | Classification :0 | Classification :0 | | - | - | - | - | Classification :5 |
| | Storag e for 1 month | Appearance after boiling | No abnormality | No abnormality | No abnormality | No abnormality | No abnormality | No abnormality | | | | | | Swelling/peel ing |
| | | Adhesivenes s before boiling ^{(Note 6)} | Classification :0 | Classification :0 | Classification :0 | Classification :0 | Classification :0 | Classification :0 | | | | | | Classification :0 |
| | | Adhesivenes s after boiling ^{(Note 6)} | Classification :0 | Classification :0 | Classification :0 | Classification :0 | Classification :0 | Classification :0 | | | | | | Classification :5 |
| | Storag e for 2 month s | Appearance after boiling | No abnormality | No abnormality | No abnormality | No abnormality | No abnormality | No abnormality | | | | | | Swelling/peel ing |
| | | Adhesivenes s before boiling ^{(Note 6)} | Classification :0 | Classification :0 | Classification :0 | Classification :0 | Classification :0 | Classification :0 | A test specimen could not be prepared, thus, the test could not be conducted | A test specimen could not be prepared, thus, the test could not be conducted. | A test specimen could not be prepared, thus, the test could not be conducted. | A test specimen could not be prepared, thus, the test could not be conducted. | A test specimen could not be prepared, thus, the test could not be conducted. | Classification :0 |
| | | Adhesivenes s after boiling ^{(Note 6)} | Classification :0 | Classification :0 | Classification :0 | Classification :0 | Classification :0 | Classification :0 | | | | | | Classification :5 |
| | Storag e for 3 month s | Appearance after boiling | No abnormality | No abnormality | No abnormality | No abnormality | No abnormality | No abnormality | | | | | | Swelling/peel ing |
| | | Adhesivenes s before boiling ^{(Note 6)} | Classification :0 | Classification :0 | Classification :0 | Classification :0 | Classification :0 | Classification :0 | | | | | | Classification :0 |
| | | Adhesivenes s after boiling ^{(Note 6)} | Classification :0 | Classification :0 | Classification :0 | Classification :0 | Classification :0 | Classification :0 | | | | | | Classification :5 |

| | | | | | | | | | | | | | | |
|---|---|---|---|---|---|---|---|---|---|---|---|---|---|---|
| (Note 1): EXALT 60H; alumina cement aqueous suspension; manufactured by KERNEOS (France) (Note 2): Turnal White; powdered alumina cement manufactured by KERNEOS (France) (Note 3): Commercially available ordinary Portland cement (Note 4): Regarding confirmation of the hydraulic reaction, the sample solidified and the test specimen could not be prepared in Comparative Examples 24 to 28. (Note 5): Use an air spray with a diameter of 2.0 mm. (Note 6): Classification evaluation conforms to Table 1 of JIS K5600-5-6-8-3. (Note 7): Manufactured by Nippon Paint Co., Ltd. Undercoat: Nippe Perfect Filler Topcoat: Eau De Fresh U100-2 The painting method conforms to the manufacturer's painting specifications (Note 1): EXALT 60H; alumina cement aqueous suspension; manufactured by KERNEOS (France) (Note 2): Turnal White; powdered alumina cement manufactured by KERNEOS (France) (Note 3): Commercially available ordinary Portland cement (Note 4): Regarding confirmation of the hydraulic reaction, the sample solidified and the test specimen could not be prepared in Comparative Examples 24 to 28. (Note 5): Use an air spray with a diameter of 2.0 mm. (Note 6): Classification evaluation conforms to Table 1 of JIS K5600-5-6-8-3. (Note 7): Manufactured by Nippon Paint Co., Ltd. Undercoat: Nippe Perfect Filler Topcoat: Eau De Fresh U100-2 The painting method conforms to the manufacturer's painting specifications | | | | | | | | | | | | | | |

* In the above examples, a mixed liquid of the main component composition containing as the main component a blast furnace slag aqueous suspension containing a hydraulic binder and the alkaline curing agent composition that induces a hydraulic reaction containing as the main component sodium silicate had no problem in painting even after 3 months, and there was no abnormality even when immersed in boiling water.

This means that the potential hydraulic reactivity of the blast furnace slag did not disappear for 3 months, and further, the effect of the main agent containing as the main component solid silicate of inducing a hydraulic reaction worked, and the resulting coating film formed a coating film having a property similar to that of a cement-based solidified product, differing from the organic coating film containing a resin as the main component, as compared with the comparative example.

Based on the above description, a paint liquid obtained by mixing the main agent composition containing as the main component a blast furnace slag aqueous suspension containing a hydraulic binder and the alkaline curing agent composition that induces a hydraulic reaction containing as the main component solid silicate can be reaction-cured in the form of one-part product, suggesting that it can be a one-part paint (one-liquid ordinary temperature reaction curing type (self-crosslinking type or self-curing type) paint) on the paint market.

### (3) Performance of the coating film to be characteristic

### (1) Adhesiveness to wet surface

According to the "Standard Specifications for Construction Work/Explanation thereof, JASS18 Painting Work", the moisture content of the painted substrate is strictly restricted, and application to the substrate under wet condition is said to be impermissible.

However, since the present developed paint contains a blast furnace slag, which is a hydraulic reaction component, as the principal component, adhesiveness to the substrate under wet condition can be sufficiently ensured.

Using the mixed liquid of the main agent and curing agent described in Tables 13 to 16 above as a sample, a mortar obtained by blending ordinary Portland cement/No. 7 silica sand/water = 1 part/3 parts/0.5 parts was painted when it was still in humid condition, and the adhesiveness was confirmed on the next day and after 7 days.

### (a) Evaluation procedure

The mortar was kneaded at the ratio described above, poured into a mold with a depth of 20 mm, and allowed to stand still in a room (temperature 23 ± 2°C and relative humidity 50 ± 5%) for 3 hours.

After confirming solidification by finger touch (Note 1), the samples in tables 13 to 16 were applied with a brush in an amount of 400 g/m²/twice, and the adhesiveness on the next day and after 7 days was confirmed according to JIS K5600-5-6: 1999, Paint general test method, part 5: mechanical properties of coating film, Section 6: adhesiveness (cross-cut method) (Note 2).

Furthermore, the appearance of the coating film after 7 days was observed.

(Note 1) In addition to the checking by finger touch, an error level of over 15% was confirmed on the concreate-mortar moisture meter HI-520-2 (measurement range: mortar: 0 to 15%) manufactured by by Kett Science Laboratory Co., Ltd..

Usually, when an organic resin paint is applied to a concrete or mortar substrate, the moisture content of the substrate is set to 10% or less according to "Building Works Standard Specification/Explanation, JASS18 Painting Work".

(Note 2) The tape used was a packing cloth tape with strong adhesive strength outside this standard. (carried out at a number of grids of 25 squares, and a grid spacing of 4 mm).

### (b) Judgment criteria

### • Appearance

The presence or absence of abnormalities in gloss, color tone, wrinkles and the like in the coating film is confirmed by visual observation.
∘: No abnormality
×: Abnormalities such as loss of gloss, change and irregularity in color tone, wrinkles, and the like are observed.

### • Adhesiveness

It is according to classification described in JIS K5600-5-6: 1999, Paint general test method, Part 5: Mechanical properties of coating film, Section 6: Adhesiveness (cross-cut method), 8-3, Table 1.

As a comparative example, an acrylic urethane resin emulsion-based paint (Note) of another company was added.

(Note) manufactured by Nippon Paint Co., Ltd.

Undercoat: Nippe Perfect Filler

Topcoat: Eau De Fresh U100-2

The painting method conforms to the manufacturer's painting specifications.

**[Table 20]**

| | Example 52 | Example 53 | Example 54 | Example 55 | Example 56 | Example 57 | Example 58 | Example 59 | Example 60 | Example 61 | Example 62 | Example 63 | |
|---|---|---|---|---|---|---|---|---|---|---|---|---|---|
| Main agent (agent A) composition (Principal component blast furnace slag aqueous suspension) | Example 18 | Example 18 | Example 18 | Example 18 | Example 18 | Example 18 | Example 18 | Example 18 | Example 18 | Example 18 | Example 18 | Example 18 | |
| Curing agent (agent B) composition (Alkaline hydraulic reaction inducer) | | Example 6 | Example 7 | Example 8 | Example 9 | Example 10 | Example 11 | Example 12 | Example 13 | Example 14 | Example 15 | Example 16 | Example 17 |
| Blendin g ratio | Main agent (agent A) | 100.00 | 100.00 | 100.00 | 100.00 | 100.00 | 100.00 | 100.00 | 100.00 | 100.00 | 100.00 | 100.00 | 100.00 |
| | Curin g agent (agent B) | 31.25 | 18.66 | 62.50 | 62.50 | 31.25 | 18.66 | 62.50 | 62.50 | 31.25 | 18.66 | 62.50 | 62.50 |
| Blast furnace slag content in mixed liquid | | 25.00 | 25.00 | 25.00 | 25.00 | 25.00 | 25.00 | 25.00 | 25.00 | 25.00 | 25.00 | 25.00 | 25.00 |
| Alkaline substance content in mixed liquid | | 12.50 | 12.50 | 12.50 | 12.50 | 12.50 | 12.50 | 12.50 | 12.50 | 12.50 | 12.50 | 12.50 | 12.50 |
| Alkaline substance content/inorganic hydraulic component | | 0.50 | 0.50 | 0.50 | 0.50 | 0.50 | 0.50 | 0.50 | 0.50 | 0.50 | 0.50 | 0.50 | 0.50 |
| Adhesion after 1 day | | Classificatio n: 0 | Classificatio n: 0 | Classificatioo n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 |
| Adhesion after 7 days | | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 |
| Appearance of coating film after 7 days | | ∘ | ∘ | ∘ | ∘ | ∘ | ∘ | ∘ | ∘ | ∘ | ∘ | ∘ | ∘ |

**[Table 21]**

| | | Example 64 | Example 65 | Example 66 | Example 67 | Example 68 | Example 69 | Example 70 | Example 71 | Example 72 | Example 73 | Example 74 | Example 75 |
|---|---|---|---|---|---|---|---|---|---|---|---|---|---|
| Main agent (agent A) composition (Principal component blast furnace slag aqueous suspension) | | Example 19 | Example 20 | Example 21 | Example 22 | Example 23 | Example 24 | Example 25 | Example 26 | Example 27 | Example 28 | Example 29 | Example 30 |
| Curing agent (agent B) composition (Alkaline hydraulic reaction inducer) | | Example 6 | Example 6 | Example 6 | Example 6 | - | - | Example 6 | Example 6 | Example 6 | Example 6 | - | Example 6 |
| Blendin g ratio | Main agent (agent A) | 100.00 | 100.00 | 100.00 | 100.00 | 100.00 | 100.00 | 100.00 | 100.00 | 100.00 | 100.00 | 100.00 | 100.00 |
| | Curin g agent (agent B) | 31.25 | 31.25 | 31.25 | 31.25 | 0.00 | 0.00 | 31.25 | 31.25 | 31.25 | 31.25 | 0.00 | 31.25 |
| Blast furnace slag content in mixed liquid | | 25.00 | 25.00 | 25.00 | 25.00 | 25.00 | 25.00 | 25.00 | 25.00 | 25.00 | 25.00 | 25.00 | 25.00 |
| Alkaline substance content in mixed liquid | | 12.50 | 12.50 | 12.50 | 12.50 | 12.50 | 12.50 | 12.50 | 12.50 | 12.50 | 12.50 | 12.50 | 12.50 |
| Alkaline substance content/inorganic hydraulic component | 0.50 | 0.50 | 0.50 | 0.50 | 0.50 | 0.50 | 0.50 | 0.50 | 0.50 | 0.50 | 0.50 | 0.50 | |
| Adhesion after 1 day | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | |
| Adhesion after 7 days | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | |
| Appearance of coating film after 7 days | ∘ | ∘ | ∘ | ∘ | ∘ | ∘ | ∘ | ∘ | ∘ | ∘ | ∘ | ∘ | |

**[Table 22]**

| | | Example 76 | Example 77 | Example 78 | Example 79 | Example 80 | Example 81 | Example 82 | Example 83 | Example 84 | Example 85 | Example 86 | Example 87 |
|---|---|---|---|---|---|---|---|---|---|---|---|---|---|
| Main agent (agent A) composition (Principal component blast furnace slag aqueous suspension) | | Example 31 | Example 32 | Example 33 | Example 34 | Example 35 | Example 36 | Example 37 | Example 38 | Example 39 | Example 40 | Example 41 | Example 42 |
| Curing agent (agent B) composition (Alkaline hydraulic reaction inducer) | | Example 6 | Example 6 | Example 6 | - | - | - | - | - | - | Example 6 | Example 6 | Example 6 |
| Blending ratio | Main agent (agent A) | 100.00 | 100.00 | 100.00 | 100.00 | 100.00 | 100.00 | 100.00 | 100.00 | 100.00 | 100.00 | 100.00 | 100.00 |
| | Curing agent (agent B) | 31.25 | 31.25 | 31.25 | 0.00 | 0.00 | 0.00 | 0.00 | 0.00 | 0.00 | 31.25 | 31.25 | 31.25 |
| Blast furnace slag content in mixed liquid | | 25.00 | 25.00 | 25.00 | 25.00 | 25.00 | 25.00 | 25.00 | 25.00 | 25.00 | 25.00 | 25.00 | 25.00 |
| Alkaline substance content in mixed liquid | | 12.50 | 12.50 | 12.50 | 12.50 | 12.50 | 12.50 | 12.50 | 12.50 | 12.50 | 12.50 | 12.50 | 12.50 |
| Alkaline substance content/inorganic hydraulic component | 0.50 | 0.50 | 0.50 | 0.50 | 0.50 | 0.50 | 0.50 | 0.50 | 0.50 | 0.50 | 0.50 | 0.50 | |
| Adhesion after 1 day | Classification: 0 | Classification: 0 | Classification: 0 | Classification: 0 | Classification: 0 | Classification: 0 | Classification: 0 | Classification: 0 | Classification: 0 | Classification: 0 | Classification: 0 | Classification: 0 | |
| Adhesion after 7 days | Classification: 0 | Classification: 0 | Classification: 0 | Classification: 0 | Classification: 0 | Classification: 0 | Classification: 0 | Classification: 0 | Classification: 0 | Classification: 0 | Classification: 0 | Classification: 0 | |
| Appearance of coating film after 7 days | ∘ | ∘ | ∘ | ∘ | ∘ | ∘ | ∘ | ∘ | ∘ | ∘ | ∘ | ∘ | |

**[Table 23]**

| | | Example 88 | Example 89 | Example 90 | Example 91 | Example 92 | Example 93 | Example 94 | Example 95 | Example 96 | Example 97 | Example 98 | Example 99 |
|---|---|---|---|---|---|---|---|---|---|---|---|---|---|
| Main agent (agent A) composition | Example | Example 43 | Example 44 | Example 45 | Example 46 | Example 47 | Example 48 | Example 49 | Example 50 | Example 51 | - | - | - |
| | Slurr 59.38% y7^{(Note 1)} | 0.00 | 0.00 | 0.00 | 0.00 | 0.00 | 0.00 | 0.00 | 0.00 | 0.00 | 42.10 | 42.10 | 42.10 |
| | Water 60.00% glass ^{(Note 2)} | 0.00 | 0.00 | 0.00 | 0.00 | 0.00 | 0.00 | 0.00 | 0.00 | 0.00 | 20.83 | 20.83 | 20.83 |
| | Boric acid ^{(Note 3)} | 0.00 | 0.00 | 0.00 | 3.00 | 1.50 | 0.00 | 1.50 | 2.00 | 1.00 | 3.00 | 1.50 | 0.00 |
| | Tetrasodium pyrophosphate ^{(Note 4)} | 0.00 | 0.00 | 0.00 | 0.00 | 1.50 | 3.00 | 1.50 | 1.00 | 2.00 | 0.00 | 1.50 | 3.00 |
| | water | 0.00 | 0.00 | 0.00 | 0.00 | 0.00 | 0.00 | 0.00 | 0.00 | 0.00 | 34.07 | 34.07 | 34.07 |
| Curing agent (agent B) composition (Alkaline hydraulic reaction inducer) | | Example 6 | Example 6 | Example 6 | Example 6 | Example 6 | Example 6 | Example 6 | Example 6 | Example 6 | - | - | - |
| Blending ratio | Main agent (agent A) | 100.00 | 100.00 | 100.00 | 103.00 | 103.00 | 103.00 | 103.00 | 103.00 | 103.00 | 100.00 | 100.00 | 100.00 |
| | Curing agent (agent B) | 31.25 | 31.25 | 31.25 | 31.25 | 31.25 | 31.25 | 31.25 | 31.25 | 31.25 | 0.00 | 0.00 | 0.00 |
| Blast furnace slag content in mixed liquid | | 25.00 | 25.00 | 25.00 | 12.50 | 12.50 | 12.50 | 12.50 | 12.50 | 12.50 | 25.00 | 25.00 | 25.00 |
| Alumina cement content in mixed liquid | | 0.00 | 0.00 | 0.00 | 12.50 | 12.50 | 12.50 | 12.50 | 12.50 | 12.50 | 0.00 | 0.00 | 0.00 |
| Alkaline substance content in mixed liquid | | 12.50 | 12.50 | 12.50 | 12.50 | 12.50 | 12.50 | 12.50 | 12.50 | 12.50 | 12.50 | 12.50 | 12.50 |
| Alkaline substance content/Alumina cement content | | 0.50 | 0.50 | 0.50 | 0.50 | 0.50 | 0.50 | 0.50 | 0.50 | 0.50 | 0.50 | 0.50 | 0.50 |
| Adhesion after 1 day | | Classification: 0 | Classification: 0 | Classification: 0 | Classification: 0 | Classification: 0 | Classification: 0 | Classification: 0 | Classification: 0 | Classification: 0 | Classification: 0 | Classification: 0 | Classification: 0 |
| Adhesion after 7 days | | Classification: 0 | Classification: 0 | Classification: 0 | Classification: 0 | Classification: 0 | Classification: 0 | Classification: 0 | Classification: 0 | Classification: 0 | Classification: 0 | Classification: 0 | Classification: 0 |
| Appearance of coating film after 7 days | | ∘ | ∘ | ∘ | ∘ | ∘ | ∘ | ∘ | ∘ | ∘ | ∘ | ∘ | ∘ |

| | | | | | | | | | | | | | |
|---|---|---|---|---|---|---|---|---|---|---|---|---|---|
| (Note 1) : Blast furnace slag aqueous suspension; See Table 2 for details. (Note 2) : JIS standard specified concentration reagent; manufactured by Wako Pure Chemical Industries, Ltd.; See Table 3 for details. (Note 3) : Reagent; manufactured by Wako Pure Chemical Industries, Ltd. (Note 4) : Reagent; manufactured by Wako Pure Chemical Industries, Ltd. | | | | | | | | | | | | | |

**[Table 24]**

| | | Comparative Example 29 |
|---|---|---|
| Main agent (agent A) composition (Principal component blast furnace slag aqueous suspension) | | ^{Note:} Painting specifications for acrylic urethane resin emulsion type paints manufactured by other companies |
| Curing agent (agent B) composition (Alkaline hydraulic reaction inducer) | | |
| Alumina cement | | |
| Ordinary Portland cement | | |
| ater | | |
| Blending ratio | Main agent (agent A) | |
| | Curing agent (agent B) | |
| Blast furnace slag content in mixed liquid | | |
| Alkaline substance content in mixed liquid | | |
| Alkaline substance content/Alumina cement content | | |
| Adhesion after 1 day | | Classification: 5 |
| Adhesion after 7 days | | Classification: 4 |
| Appearance of coating film after 7 days | | × |

| | | |
|---|---|---|
| Note: manufactured by Nippon Paint Co., Ltd. Undercoat: Nippe Perfect Filler Topcoat: Eau De Fresh U100-2 The painting method conforms to the manufacturer's painting specifications | | |

* Because of the above-described matter, if the present developed paint was painted under humid condition wherein the painted substrate had high water content, it exhibited sufficient adhesiveness, resulting in no abnormality in design.

It means that the present developed paint is a finishing material capable dissolving the problems of existing organic resin paints, specifically, the current situation where the organic resin paints are almost avoided since swelling and peeling occur when painting civil engineering structures (retaining walls, bridge girders, tunnel walls, etc.) that maintain a high water content at all times, furthermore, when painting a lightweight precast concrete plate containing a large amount of artificial aggregates (lightweight aggregates) having a high water absorption property.

### (2) Applying compatibility with aluminum-based material

Generally, a material containing ordinary Portland cement as the main component is not applied because it has a strong alkalinity and thus has a corrosive action on an aluminum material (including surface-treated aluminum).

In addition, a paint whose principal component is an organic resin cannot be sufficiently adhered to the sulfuric acid anodized film applied on an aluminum sash used for windows and doors, so it is avoided in painting at repair sites.

The evaluations of corrosiveness and adhesiveness to aluminum will be described below in examples.

A mixed liquid of the main agent and the curing agent described in the above table was used as a sample, applied to an aluminum plate to prepare a test specimen, and the adhesiveness was evaluated according to JIS K5600-5-6: 1999, Paint general test method, Part 5: Mechanical properties of coating film, Section 6: Adhesiveness (cross-cut method) (Note), and the corrosiveness against aluminum was evaluated by observing the condition directly after applying the sample and by a change in the appearance of the test specimen immersed in tap water for 1 month.

Note: The tape used is a packing cloth tape with strong adhesive strength out of the standard.

### (a) Evaluation procedure

An alloy A6063 (Al-Mg-Si alloy) used in aluminum sash, and the same alloy covered with an anodized film (sulfate coating (silver)) (Note 1) were used as a base material, and a mixed liquid of the main agent and the curing agent described in the above-described table was applied in an amount of 400 g/m²/twice, and cured indoors for 7 days at a temperature of 23 ± 2°C and a relative humidity of 50 ± 5%, to prepare test specimens.

As a comparative example, a mortar obtained by blending ordinary Portland cement/No. 7 silica sand/water = 1 part/3 parts/0.5 parts was applied to the above-mentioned base material at a wet film thickness of 1.5 mm to obtain a sample, and a solvent-based two-liquid ordinary temperature reaction curing type fluorine resin paint and an oily paint (Note 2) were applied to the above-described base material according to the manufacturer's standard specifications to obtain samples, and these samples were evaluated.

In the water immersion test, the test specimen was tested with the substrate exposed on the side and back surfaces.
(Note 1) Item that has been sealed
(Note 2) Solvent-based two-liquid ordinary temperature reaction curing type fluorine resin paint, manufactured by AGC Coat-Tech Co., Ltd., for finishing with a fluorine resin paint on the metal substrate
Undercoat: Bon Epocoat # 35HB, solvent-based 2-liquid ordinary temperature reaction curing type epoxy resin paint
Intermediate coat: Bonflon # 2000HB, intermediate coat, solvent-based two-liquid ordinary temperature reaction curing type urethane resin paint
Topcoat: Bonflon GT # 2000SR, topcoat, solvent-based two-liquid ordinary temperature reaction curing type fluorine resin paint

### Oily paint

Silicon modified alkyd resin paint, manufactured by Asahipen Corporation
Single coat finish, required amount = 0.1 l/m²

### (b) Judgment criteria

### • Presence or absence of corrosiveness

The condition immediately after application is visually observed.
∘: No reaction even if the coating liquid comes into contact with the base material
×: When the coating liquid comes into contact with the base material, a reaction involving generation of a gas occurs.

After the water immersion test, the exposed part of the substrate is visually observed.
∘: No abnormality is found
×: Abnormalities such as discoloration due to corrosion and traces of elution are observed.

### • Adhesiveness

According to classification described in JIS K5600-5-6: 1999, Paint general test method, Part 5: Mechanical properties of coating film, Section 6: Adhesion (cross-cut method), 8-3, Table 1.

**[Table 25]**

| | | | | Example 52 | Example 53 | Example 54 | Example 55 | Example 56 | Example 57 | Example 58 | Example 59 | Example 60 | Example 61 | Example 62 | Example 63 |
|---|---|---|---|---|---|---|---|---|---|---|---|---|---|---|---|
| Main agent (agent A) composition (Principal component blast furnace slag aqueous suspension) | | | | Example 18 | Example 18 | Example 18 | Example 18 | Example 18 | Example 18 | Example 18 | Example 18 | Example 18 | Example 18 | Example 18 | Example 18 |
| Curing agent (agent B) composition (Alkaline hydraulic reaction inducer) | | | | Example 6 | Example 7 | Example 8 | Example 9 | Example 10 | Example 11 | Example 12 | Example 13 | Example 14 | Example 15 | Example 16 | Example 17 |
| Blending ratio | | | Main agent (agent A) | 100.00 | 100.00 | 100.00 | 100.00 | 100.00 | 100.00 | 100.00 | 100.00 | 100.00 | 100.00 | 100.00 | 100.00 |
| | | | Curing agent (agent B) | 31.25 | 18.66 | 62.50 | 62.50 | 31.25 | 18.66 | 62.50 | 62.50 | 31.25 | 18.66 | 62.50 | 62.50 |
| Blast furnace slag content in mixed liquid | | | | 25.00 | 25.00 | 25.00 | 25.00 | 25.00 | 25.00 | 25.00 | 25.00 | 25.00 | 25.00 | 25.00 | 25.00 |
| Alkaline substance content in mixed liquid | | | | 12.50 | 12.50 | 12.50 | 12.50 | 12.50 | 12.50 | 12.50 | 12.50 | 12.50 | 12.50 | 12.50 | 12.50 |
| Alkaline substance content/inorganic hydraulic component | | | | 0.50 | 0.50 | 0.50 | 0.50 | 0.50 | 0.50 | 0.50 | 0.50 | 0.50 | 0.50 | 0.50 | 0.50 |
| A6063 | Adhesivenes s | Before flooding | | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 |
| | | 1 month after flooding | | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 |
| | Corrosivenes s | Immediatel y after painting | ∘ | ∘ | ∘ | ∘ | ∘ | ∘ | ∘ | ∘ | ∘ | ∘ | ∘ | ∘ | |
| | | 1 month after flooding | ∘ | ∘ | ∘ | ∘ | ∘ | ∘ | ∘ | ∘ | ∘ | ∘ | ∘ | ∘ | |
| Anodize d film (sulfuric acid film) | Adhesivenes s | Before flooding | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | |
| | | 1 month after flooding | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | |
| | Corrosivenes s | Immediatel y after painting | ∘ | ∘ | ∘ | ∘ | ∘ | ∘ | ∘ | ∘ | ∘ | ∘ | ∘ | ∘ | |
| | | 1 month after flooding | ∘ | ∘ | ∘ | ∘ | ∘ | ∘ | ∘ | ∘ | ∘ | ∘ | ∘ | ∘ | |

**[Table 26]**

| | Example 64 | Example 65 | Example 66 | Example 67 | Example 68 | Example 69 | Example 70 | Example 71 | Example 72 | Example 73 | Example 74 | Example 75 | | | |
|---|---|---|---|---|---|---|---|---|---|---|---|---|---|---|---|
| Main agent (agent A) composition (Principal component blast furnace slag aqueous suspension) | Example 19 | Example 20 | Example 21 | Example 22 | Example 23 | Example 24 | Example 25 | Example 26 | Example 27 | Example 28 | Example 29 | Example 30 | | | |
| Curing agent (agent B) composition | Example 6 | Example 6 | Example 6 | Example 6 | - | - | Example 6 | Example 6 | Example 6 | Example 6 | - | Example 6 | | | |
| (Alkaline hydraulic reaction inducer) | | | | | | | | | | | | | | | |
| Blending ratio | | | Main agent (agent A) | 100.00 | 100.00 | 100.00 | 100.00 | 100.00 | 100.00 | 100.00 | 100.00 | 100.00 | 100.00 | 100.00 | 100.00 |
| | | | Curing agent (agent B) | 31.25 | 31.25 | 31.25 | 31.25 | 0.00 | 0.00 | 31.25 | 31.25 | 31.25 | 31.25 | 0.00 | 31.25 |
| Blast furnace slag content in mixed liquid | | | | 25.00 | 25.00 | 25.00 | 25.00 | 25.00 | 25.00 | 25.00 | 25.00 | 25.00 | 25.00 | 25.00 | 25.00 |
| Alkaline substance content in mixed liquid | | | | 12.50 | 12.50 | 12.50 | 12.50 | 12.50 | 12.50 | 12.50 | 12.50 | 12.50 | 12.50 | 12.50 | 12.50 |
| Alkaline substance content/inorganic hydraulic component | | | | 0.50 | 0.50 | 0.50 | 0.50 | 0.50 | 0.50 | 0.50 | 0.50 | 0.50 | 0.50 | 0.50 | 0.50 |
| A6063 | Adhesivenes s | Before flooding | | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 |
| | | 1 month after flooding | | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 |
| | Corrosivenes s | Immediatel y after painting | | ∘ | ∘ | ∘ | ∘ | ∘ | ∘ | ∘ | ∘ | ∘ | ∘ | ∘ | ∘ |
| | | 1 month after flooding | | ∘ | ∘ | ∘ | ∘ | ∘ | ∘ | ∘ | ∘ | ∘ | ∘ | ∘ | ∘ |
| Anodize d film | Adhesivenes s | Before flooding | | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 |
| (sulfuric acid film) | | 1 month after flooding | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | |
| | Corrosivenes s | Immediatel y after painting | ∘ | ∘ | ∘ | ∘ | ∘ | ∘ | ∘ | ∘ | ∘ | ∘ | ∘ | ∘ | |
| | | 1 month after flooding | ∘ | ∘ | ∘ | ∘ | ∘ | ∘ | ∘ | ∘ | ∘ | ∘ | ∘ | ∘ | |

**[Table 27]**

| | | Example 76 | Example 77 | Example 78 | Example 79 | Example 80 | Example 81 | Example 82 | Example 83 | Example 84 | Example 85 | Example 86 | Example 87 | |
|---|---|---|---|---|---|---|---|---|---|---|---|---|---|---|
| Main agent (agent A) composition (Principal component blast furnace slag aqueous suspension) | | Example 31 | Example 32 | Example 33 | Example 34 | Example 35 | Example 36 | Example 37 | Example 38 | Example 39 | Example 40 | Example 41 | Example 42 | |
| Curing agent (agent B) composition (Alkaline hydraulic reaction inducer) | | Example 6 | Example 6 | Example 6 | - | - | - | - | - | - | Example 6 | Example 6 | Example 6 | |
| Blending ratio | Main agent (agent A) | 100.00 | 100.00 | 100.00 | 100.00 | 100.00 | 100.00 | 100.00 | 100.00 | 100.00 | 100.00 | 100.00 | 100.00 | |
| | Curing agent (agent B) | 31.25 | 31.25 | 31.25 | 0.00 | 0.00 | 0.00 | 0.00 | 0.00 | 0.00 | 31.25 | 31.25 | 31.25 | |
| Blast furnace slag content in mixed liquid | | | 25.00 | 25.00 | 25.00 | 25.00 | 25.00 | 25.00 | 25.00 | 25.00 | 25.00 | 25.00 | 25.00 | 25.00 |
| Alkaline substance content in mixed liquid | | | 12.50 | 12.50 | 12.50 | 12.50 | 12.50 | 12.50 | 12.50 | 12.50 | 12.50 | 12.50 | 12.50 | 12.50 |
| Alkaline substance content/inorganic hydraulic component | | | 0.50 | 0.50 | 0.50 | 0.50 | 0.50 | 0.50 | 0.50 | 0.50 | 0.50 | 0.50 | 0.50 | 0.50 |
| A6063 | Adhesivenes s | Before flooding | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 |
| | | 1 month after flooding | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 |
| | Corrosivenes s | Immediatel y after painting | ∘ | ∘ | ∘ | ∘ | ∘ | ∘ | ∘ | ∘ | ∘ | ∘ | ∘ | ∘ |
| | | 1 month after flooding | ∘ | ∘ | ∘ | ∘ | ∘ | ∘ | ∘ | ∘ | ∘ | ∘ | ∘ | ∘ |
| Anodize d film (sulfuric acid film) | Adhesivenes s | Before flooding | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 |
| | | 1 month after flooding | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 |
| | Corrosivenes s | Immediatel y after painting | ∘ | ∘ | ∘ | ∘ | ∘ | ∘ | ∘ | ∘ | ∘ | ∘ | ∘ | ∘ |
| | | 1 month after flooding | ○ | ○ | ○ | ○ | ○ | ○ | ○ | ○ | ○ | ○ | ○ | ○ |

**[Table 28]**

| | | | Example 88 | Example 89 | Example 90 | Example 91 | Example 92 | Example 93 | Example 94 | Example 95 | Example 96 | Example 97 | Example 98 | Example 99 |
|---|---|---|---|---|---|---|---|---|---|---|---|---|---|---|
| Main agent (agent A) compositi on | Example | | Example 43 | Example 44 | Example 45 | Example 46 | Example 47 | Example 48 | Example 49 | Example 50 | Example 51 | - | - | - |
| | Slurry 7^{(Note 1)} 59.38% | | 0.00 | 0.00 | 0.00 | 0.00 | 0.00 | 0.00 | 0.00 | 0.00 | 0.00 | 42.10 | 42.10 | 42.10 |
| | Water glass ^{(Note 2)} 60.00% | | 0.00 | 0.00 | 0.00 | 0.00 | 0.00 | 0.00 | 0.00 | 0.00 | 0.00 | 20.83 | 20.83 | 20.83 |
| | Boric acid ^{(Note 3)} | | 0.00 | 0.00 | 0.00 | 3.00 | 1.50 | 0.00 | 1.50 | 2.00 | 1.00 | 3.00 | 1.50 | 0.00 |
| | Tetrasodium pyrophosphate ^{(Note 4)} | | 0.00 | 0.00 | 0.00 | 0.00 | 1.50 | 3.00 | 1.50 | 1.00 | 2.00 | 0.00 | 1.50 | 3.00 |
| | water | | 0.00 | 0.00 | 0.00 | 0.00 | 0.00 | 0.00 | 0.00 | 0.00 | 0.00 | 34.07 | 34.07 | 34.07 |
| Curing agent (agent B) composition (Alkaline hydraulic reaction inducer) | | | Example 6 | Example 6 | Example 6 | Example 6 | Example 6 | Example 6 | Example 6 | Example 6 | Example 6 | - | - | - |
| Blending ratio | | Main agent (agent A) | 100.00 | 100.00 | 100.00 | 103.00 | 103.00 | 103.00 | 103.00 | 103.00 | 103.00 | 100.00 | 100.00 | 100.00 |
| | | Curing agent (agent B) | 31.25 | 31.25 | 31.25 | 31.25 | 31.25 | 31.25 | 31.25 | 31.25 | 31.25 | 0.00 | 0.00 | 0.00 |
| Blast furnace slag content in mixed liquid | | | 25.00 | 25.00 | 25.00 | 12.50 | 12.50 | 12.50 | 12.50 | 12.50 | 12.50 | 25.00 | 25.00 | 25.00 |
| Alumina cement content in mixed liquid | | | 0.00 | 0.00 | 0.00 | 12.50 | 12.50 | 12.50 | 12.50 | 12.50 | 12.50 | 0.00 | 0.00 | 0.00 |
| Alkaline substance content in mixed liquid | | | 12.50 | 12.50 | 12.50 | 12.50 | 12.50 | 12.50 | 12.50 | 12.50 | 12.50 | 12.50 | 12.50 | 12.50 |
| Alkaline substance content/Alumina cement content | | | 0.50 | 0.50 | 0.50 | 0.50 | 0.50 | 0.50 | 0.50 | 0.50 | 0.50 | 0.50 | 0.50 | 0.50 |
| A6063 | Adhesivenes s | Before flooding | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 |
| | | 1 month after flooding | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 |
| | Corrosivene ss | Immediatel y after painting | ○ | ○ | ○ | ○ | ○ | ○ | ○ | ○ | ○ | ○ | ○ | ○ |
| | | 1 month after flooding | ○ | ○ | ○ | ○ | ○ | ○ | ○ | ○ | ○ | ○ | ○ | ○ |
| Anodized film (sulfuric acid film) | Adhesivenes s | Before flooding | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 |
| | | 1 month after flooding | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 | Classificatio n: 0 |
| | Corrosivene ss | Immediatel y after painting | ○ | ○ | ○ | ○ | ○ | ○ | ○ | ○ | ○ | ○ | ○ | ○ |
| | | 1 month after flooding | ○ | ○ | ○ | ○ | ○ | ○ | ○ | ○ | ○ | ○ | ○ | ○ |

**[Table 29]**

| | | | | Comparative Example 26 | Comparative example 30 | Comparative Example 31 | Comparative example 5 |
|---|---|---|---|---|---|---|---|
| Main agent (agent A) composition (Principal component blast furnace slag aqueous suspension) | | | | - | Solvent-based two-liquid ordinary temperature reaction-curable fluorine resin paint | Oil-based paint | - |
| Curing agent (agent B) composition (Alkaline hydraulic reaction inducer) | | | | | | | |
| Alumina cement ^{(Note 1)} | | | | 50.00 | | | - |
| Ordinary Portland cement | | | | - | | | 50.00 |
| water | | | | 25.00 | | | 25.00 |
| Blending ratio | | Main agent (agent A) | | - | | | - |
| | | Curing agent (agent B) | | - | | | - |
| Blast furnace slag content in mixed liquid | | | | - | | | - |
| Alkaline substance content in mixed liquid | | | | - | | | - |
| Alkaline substance content/Alumina cement content | | | | - | | | - |
| A6063 | Adhesiveness | | Before flooding | ^{(Note)} Cut impossible | Classification: 1 | Classification: 4 | ^{(Note)} Cut impossible |
| | | | 1 month after flooding | ^{(Note)} Cut impossible | Classification: 2 | Classification: 5 | ^{(Note)} Cut impossible |
| | Corrosiveness | | Immediately after painting | × | ○ | ○ | × |
| | | | 1 month after flooding | × | ○ | ○ | × |
| Anodized film (sulfuric acid film) | Adhesiveness | | Before flooding | ^{(Note)} Cut impossible | Classification: 2 | Classification: 5 | ^{(Note)} Cut impossible |
| | | | 1 month after flooding | ^{(Note)} Cut impossible | Classification: 4 | Classification: 5 | ^{(Note)} Cut impossible |
| | Corrosiveness | | Immediately after painting | × | ○ | ○ | × |
| | | | 1 month after flooding | × | ○ | ○ | × |

| | | | | | | | |
|---|---|---|---|---|---|---|---|
| Note: No peeling from the base material was observed even by the stress when trying to make a cut with a cutter knife, thus, the adhesiveness was good. | | | | | | | |

* From the above, with conventional cement-based finishing materials, it is impossible to apply to aluminum-based materials due to the problem of corrosion, and with conventional organic resin-based paints, aluminum-based materials were avoided to apply due to poor adhesiveness to the anodized film, but in contrast to this, the paint of the present invention has no corrosion and has no problem in the primary and secondary adhesion performance to the anodized film, therefore, its application seems to be fully adaptable.

### (3) UV resistance

In the conventional organic resin-based paint, the coating film is formed by the bonding force of the organic resin, which is the principal component, and therefore the ultraviolet resistance depends on the resin contained therein, so that there is a limit.

On the other hand, since the coating film of the present invention depends on the crystallization of inorganic substances by the hydraulic reaction of the blast furnace slag, the ultraviolet resistance is far superior to that of the organic resin-based paint.

As a familiar specific example, RC-structured constructions exist without collapsing for 50 to 100 years while being exposed to ultraviolet ray, whereas for organic resin paints, even in fluorine resin paints with excellent UV resistance, loss of gloss, and chalking, which is a phenomenon of resin decomposition, will appear after 20 years.

For the above, a continuous irradiation promotion test with ultraviolet ray using a metal halide lamp was carried out.

In addition, unlike the accelerated weather resistance, this test is an evaluation that specializes only in deterioration due to ultraviolet energy.

### (a) Evaluation procedure

### • Models used and setting conditions

Model: Metering Weather Meter M6T, manufactured by Suga Test Instruments Co., Ltd.
Wavelength: 300-400 nm (Note 1)
Radiation intensity: 2000 W/m²
Temperature: 63 ± 3°C
Humidity: 50 ± 5% RH
Irradiation time: 200 hours continuous
Radiation exposure: 1441 MJ/m² (Note 2)

(Note 1) Refer to Fig. 2 for details on the wavelength in the region of ultraviolet emitted from a metal halide lamp.
(Note 2) Radiation exposure

### Radiation exposure by sunlight

If the average of one year radiation exposure amount by sunlight in Japan is taken as 4500 MJ/m² (*1), the radiation exposures MJ/m² by UV, visible and infrared at each wavelength (*2) are as shown in the following Reference Table 5.

**[Reference Table 5]**

| Wavelength (nm) | Constitution ratio (%) | Radiation exposure (MJ/m²) |
|---|---|---|
| 300-400 | 6.8 | 306 |
| 400-700 | 44.6 | 2007 |
| 700-3,000 | 48.6 | 2187 |
| Total | 100 | 4500 |

| | | |
|---|---|---|
| *1: JIS D 0205 Weathering resistance test method for automobile parts *2: CIE Publication No. 85 1st Edition (TC2-17) | | |

The irradiance and test time of the accelerated weathering test at that time are shown in Reference Table 6 below.

**[Reference Table 6]**

| Light source | Irradiance w/m² (300 to 400 nm) | Time corresponding to one year's radiation exposure (h) | Promotion level ^{(Note 1)} |
|---|---|---|---|
| Sunshine carbon arc ^{(Note 2)} | 78.5 | 1083.0 | 1.0 |
| xenon | 60.0 | 1417.0 | 0.7 |
| Super xenon | 180.0 | 472.0 | 2.0 |
| Conditions for this test | 2000 | 43 | 25 |

| | | | |
|---|---|---|---|
| (Note 1) This is the degree of acceleration when considering only the amount of ultraviolet irradiation, and is based on the sunshine carbon arc, which is common in the accelerated weathering resistance test. (Note 2) The sunshine carbon arc lamp type weathering resistance tester (SWOM) is a tester that uses sunshine carbon arc as a light source. | | | |

If the test time according to the amount of the radiation exposure is calculated, it is understood that the sample was exposed to ultraviolet ray equivalent to 5000 hours of the sunshine carbon arc (Sunshine carbon arc lamp type weathering tester (SWOM)), in this test.

### b) Judgment criteria

### • The presence or absence of a difference from the sample plate (comparative plate) is evaluated by visual observation.

**[Table 30]**

| | | Example 52 | Example 53 | Example 69 | Example 68 | Example 79 | Comparative Example 29 | Comparative example 32 |
|---|---|---|---|---|---|---|---|---|
| Main agent (agent A) composition (Principal component blast furnace slag aqueous suspension) | | Example 18 | Example 18 | Example 24 | Example 29 | Example 34 | ^{(Note 1)} aqueous acrylic urethane resin-based paint | ^{(Note 2)} aqueous fluorine resin paint |
| Curing agent (agent B) composition (Alkaline hydraulic reaction inducer) | | Example 6 | Example 7 | - | - | - | | |
| Blending ratio | Main agent (agent A) | 100.00 | 100.00 | 100.00 | 100.00 | 100.00 | | |
| | Curing agent (agent B) | 31.25 | 18.66 | 0.00 | 0.00 | 0.00 | | |
| Blast furnace slag content in mixed liquid | | 25.00 | 25.00 | 25.00 | 25.00 | 25.00 | | |
| Alkaline substance content in mixed liquid | | 12.50 | 12.50 | 12.50 | 12.50 | 12.50 | | |
| Alkaline substance content/inorganic hydraulic component | | 0.50 | 0.50 | 0.50 | 0.50 | 0.50 | | |
| Visual observation | | No change | No change | No change | No change | No change | Lost | Slightly lost |
| Difference from sample | | No difference | No difference | No difference | No difference | No difference | Clearly recognize difference | There is a slight difference |

| | | | | | | | | |
|---|---|---|---|---|---|---|---|---|
| (Note 1): Undercoat: Nippe Perfect Filler; Topcoat: Eau De Fresh U100 II; manufactured by Nippon Paint Co., Ltd. The coating method conforms to the manufacturer's coating specifications. (Note 2): Undercoat: Bonflon aqueous primer S; Topcoat: Bonflon aqueous W # 1500; manufactured by AGC Coat-Tech Co., Ltd. The coating method conforms to the manufacturer's coating specifications. | | | | | | | | |

* From the above, it is clear that the paint of the present invention is superior to the organic resin-based paint in ultraviolet resistance.

While there is a demand for a finishing material that extends the cycle of repainting (repair work) in the construction field for reducing the life cycle cost, it has become possible to significantly extend the current cycle in which a fluorine resin paint, which is an organic resin-based paint, is repainted (repair work) once every 30 to 40 years, thus, it can be said that this is a paint that can greatly contribute to the reduction of the life cycle cost.

### (4) Resistance to crack due to drying

### a) Resistance to crack due to drying at ordinary temperature and ordinary humidity (temperature 23 ± 2°C, humidity 50 ± 5%)

### • The evaluation procedure and the evaluation criteria are according to JIS A 6909-7-8: 2003, crack resistance test by initial drying.

The paint was applied to a slate plate at a coating amount of 400 g/m²/twice by air spraying, to obtain a test specimen.

For Comparative Example 26 and Comparative Example 5, metal trowels were used.

**[Table 31]**

| | | Example 52 | Example 53 | Example 54 | Example 55 | Example 56 | Example 57 | Example 58 | Example 59 | Example 60 | Example 61 | Example 62 | Example 63 |
|---|---|---|---|---|---|---|---|---|---|---|---|---|---|
| Main agent (agent A) composition (Principal component blast furnace slag aqueous suspension) | | Example 18 | Example 18 | Example 18 | Example 18 | Example 18 | Example 18 | Example 18 | Example 18 | Example 18 | Example 18 | Example 18 | Example 18 |
| Curing agent (agent B) composition (Alkaline hydraulic reaction inducer) | | Example 6 | Example 7 | Example 8 | Example 9 | Example 10 | Example 11 | Example 12 | Example 13 | Example 14 | Example 15 | Example 16 | Example 17 |
| Blending ratio | Main agent (agent A) | 100.00 | 100.00 | 100.00 | 100.00 | 100.00 | 100.00 | 100.00 | 100.00 | 100.00 | 100.00 | 100.00 | 100.00 |
| | Curing agent (agent B) | 31.25 | 18.66 | 62.50 | 62.50 | 31.25 | 18.66 | 62.50 | 62.50 | 31.25 | 18.66 | 62.50 | 62.50 |
| Blast furnace slag content in mixed liquid | | 25.00 | 25.00 | 25.00 | 25.00 | 25.00 | 25.00 | 25.00 | 25.00 | 25.00 | 25.00 | 25.00 | 25.00 |
| Alkaline substance content in mixed liquid | | 12.50 | 12.50 | 12.50 | 12.50 | 12.50 | 12.50 | 12.50 | 12.50 | 12.50 | 12.50 | 12.50 | 12.50 |
| Alkaline substance content/inorganic hydraulic component | 0.50 | 0.50 | 0.50 | 0.50 | 0.50 | 0.50 | 0.50 | 0.50 | 0.50 | 0.50 | 0.50 | 0.50 | |
| Resistance to crack due to drying | No cracks | No cracks | No cracks | No cracks | No cracks | No cracks | No cracks | No cracks | No cracks | No cracks | No cracks | No cracks | |

**[Table 32]**

| | | Example 64 | Example 65 | Example 66 | Example 67 | Example 68 | Example 69 | Example 70 | Example 71 | Example 72 | Example 73 | Example 74 | Example 75 |
|---|---|---|---|---|---|---|---|---|---|---|---|---|---|
| Main agent (agent A) composition (Principal component blast furnace slag aqueous suspension) | | Example 19 | Example 20 | Example 21 | Example 22 | Example 23 | Example 24 | Example 25 | Example 26 | Example 27 | Example 28 | Example 29 | Example 30 |
| Curing agent (agent B) composition (Alkaline hydraulic reaction inducer) | | Example 6 | Example 6 | Example 6 | Example 6 | - | - | Example 6 | Example 6 | Example 6 | Example 6 | - | Example 6 |
| Blending ratio | Main agent (agent A) | 100.00 | 100.00 | 100.00 | 100.00 | 100.00 | 100.00 | 100.00 | 100.00 | 100.00 | 100.00 | 100.00 | 100.00 |
| | Curing agent (agent B) | 31.25 | 31.25 | 31.25 | 31.25 | 00.00 | 00.00 | 31.25 | 31.25 | 31.25 | 31.25 | 00.00 | 31.25 |
| Blast furnace slag content in mixed liquid | | 25.00 | 25.00 | 25.00 | 25.00 | 25.00 | 25.00 | 25.00 | 25.00 | 25.00 | 25.00 | 25.00 | 25.00 |
| Alkaline substance content in mixed liquid | | 12.50 | 12.50 | 12.50 | 12.50 | 12.50 | 12.50 | 12.50 | 12.50 | 12.50 | 12.50 | 12.50 | 12.50 |
| Alkaline substance content/inorganic hydraulic component | | 0.50 | 0.50 | 0.50 | 0.50 | 0.50 | 0.50 | 0.50 | 0.50 | 0.50 | 0.50 | 0.50 | 0.50 |
| Resistance to crack due to drying | | No cracks | No cracks | No cracks | No cracks | No cracks | No cracks | No cracks | No cracks | No cracks | No cracks | No cracks | No cracks |

**[Table 33]**

| | | Example 76 | Example 77 | Example 78 | Example 79 | Example 80 | Example 81 | Example 82 | Example 83 | Example 84 | Example 85 | Example 86 | Example 87 |
|---|---|---|---|---|---|---|---|---|---|---|---|---|---|
| Main agent (agent A) composition (Principal component blast furnace slag aqueous suspension) | | Example 31 | Example 32 | Example 33 | Example 34 | Example 35 | Example 36 | Example 37 | Example 38 | Example 39 | Example 40 | Example 41 | Example 42 |
| Curing agent (agent B) composition (Alkaline hydraulic reaction inducer) | | Example 6 | Example 6 | Example 6 | - | - | - | - | - | - | Example 6 | Example 6 | Example 6 |
| Blending | Main agent (agent A) | 100.00 | 100.00 | 100.00 | 100.00 | 100.00 | 100.00 | 100.00 | 100.00 | 100.00 | 100.00 | 100.00 | 100.00 |
| ratio | Curing agent (agent B) | 31.25 | 31.25 | 31.25 | 0.00 | 0.00 | 0.00 | 0.00 | 0.00 | 0.00 | 31.25 | 0.00 | 31.25 |
| Blast furnace slag content in mixed liquid | | 25.00 | 25.00 | 25.00 | 25.00 | 25.00 | 25.00 | 25.00 | 25.00 | 25.00 | 25.00 | 25.00 | 25.00 |
| Alkaline substance content in mixed liquid | | 12.50 | 12.50 | 12.50 | 12.50 | 12.50 | 12.50 | 12.50 | 12.50 | 12.50 | 12.50 | 12.50 | 12.50 |
| Alkaline substance content/inorganic hydraulic component | | 0.50 | 0.50 | 0.50 | 0.50 | 0.50 | 0.50 | 0.50 | 0.50 | 0.50 | 0.50 | 0.50 | 0.50 |
| Resistance to crack due to drying | | No cracks | No cracks | No cracks | No cracks | No cracks | No cracks | No cracks | No cracks | No cracks | No cracks | No cracks | No cracks |

**[Table 34]**

| | | Example 88 | Example 89 | Example 90 | Example 91 | Example 92 | Example 93 | Example 94 | Example 95 | Example 96 | Example 97 | Example 98 | Example 99 |
|---|---|---|---|---|---|---|---|---|---|---|---|---|---|
| Main agent (agent A) composition | Example | Example 43 | Example 44 | Example 45 | Example 46 | Example 47 | Example 48 | Example 49 | Example 50 | Example 51 | - | - | - |
| | Slurry 7 ^{(Note 1)} 59.38 % | 0.00 | 0.00 | 0.00 | 0.00 | 0.00 | 0.00 | 0.00 | 0.00 | 0.00 | 42.10 | 42.10 | 42.10 |
| | Water glass ^{(Note 2)} 60.00% | 0.00 | 0.00 | 0.00 | 0.00 | 0.00 | 0.00 | 0.00 | 0.00 | 0.00 | 20.83 | 20.83 | 20.83 |
| | Boric acid (Note 3) | 0.00 | 0.00 | 0.00 | 3.00 | 1.50 | 0.00 | 1.50 | 2.00 | 1.00 | 3.00 | 1.50 | 0.00 |
| | Tetrasodium pyrophosphate (Note 4) | 0.00 | 0.00 | 0.00 | 0.00 | 1.50 | 3.00 | 1.50 | 1.00 | 2.00 | 0.00 | 1.50 | 3.00 |
| | water | 0.00 | 0.00 | 0.00 | 0.00 | 0.00 | 0.00 | 0.00 | 0.00 | 0.00 | 34.07 | 34.07 | 34.07 |
| Curing agent (agent B) composition (Alkaline hydraulic reaction inducer) | | Example 6 | Example 6 | Example 6 | Example 6 | Example 6 | Example 6 | Example 6 | Example 6 | Example 6 | - | - | - |
| Blending ratio | Main agent (agent A) | 100.00 | 100.00 | 100.00 | 103.00 | 103.00 | 103.00 | 103.00 | 103.00 | 103.00 | 100.00 | 100.00 | 100.00 |
| | Curing agent (agent B) | 31.25 | 31.25 | 31.25 | 31.25 | 31.25 | 31.25 | 31.25 | 31.25 | 31.25 | 0.00 | 0.00 | 0.00 |
| Blast furnace slag content in mixed liquid | | 25.00 | 25.00 | 25.00 | 12.50 | 12.50 | 12.50 | 12.50 | 12.50 | 12.50 | 25.00 | 25.00 | 25.00 |
| Alumina cement content in mixed liquid | | 0.00 | 0.00 | 0.00 | 12.50 | 12.50 | 12.50 | 12.50 | 12.50 | 12.50 | 0.00 | 0.00 | 0.00 |
| Alkaline substance content in mixed liquid | | 12.50 | 12.50 | 12.50 | 12.50 | 12.50 | 12.50 | 12.50 | 12.50 | 12.50 | 12.50 | 12.50 | 12.50 |
| Alkaline substance content/Alumina cement content | | 0.50 | 0.50 | 0.50 | 0.50 | 0.50 | 0.50 | 0.50 | 0.50 | 0.50 | 0.50 | 0.50 | 0.50 |
| Resistance to crack due to drying | | No cracks | No cracks | No cracks | No cracks | No cracks | No cracks | No cracks | No cracks | No cracks | No cracks | No cracks | No cracks |

**[Table 35]**

| | | Comparative Example 26 | Comparative example 5 | Comparative Example 29 | Comparative example 32 |
|---|---|---|---|---|---|
| Main agent (agent A) composition (Principal component blast furnace slag aqueous suspension) | | - | - | ^{(Note 1)} aqueous acrylic urethane resin-based paint | ^{(Note 2)} aqueous fluorine resin paint |
| Curing agent (agent B) composition (Alkaline hydraulic reaction inducer) | | - | - | | |
| Alumina cement ^{(Note 1)} | | 50.00 | - | | |
| Ordinary Portland cement | | - | 50.00 | | |
| water | | 25.00 | 25.00 | | |
| Blending ratio | Main agent (agent A) | - | - | | |
| | Curing agent (agent B) | - | - | | |
| Blast furnace slag content in mixed liquid | | - | - | | |
| Alkaline substance content in mixed liquid | | - | - | | |
| Alkaline substance content/Alumina cement content | | - | - | | |
| Resistance to crack due to drying | | No cracks | No cracks | No cracks | No cracks |

| | | | | | |
|---|---|---|---|---|---|
| (Note 1): Eau De Fresh U100 II; manufactured by Nippon Paint Co., Ltd. (Note 2): Bonflon aqueous W # 1500; manufactured by AGC Coat-Tech Co., Ltd. | | | | | |

### (b) Resistance to crack due to drying due to difference in coating amount

### • The evaluation procedure and the evaluation criteria are according to JIS A 6909-7-8: 2003, crack resistance test by initial drying.

The paint was applied to a slate plate at a coating amount of 200 to 1000 g/m²/2-5 times by air spraying, to obtain a test specimen.

For comparison, the topcoat material (Note 1) of Comparative Example 29 and the topcoat material (Note 2) of Comparative Example 32 were added, and these were tested.

For Comparative Example 26 and Comparative Example 5, metal trowels were used.
(Note 1) Eau De Fresh U100-2; acrylic urethane resin emulsion-based paint; manufactured by Nippon Paint Co., Ltd.
(Note 2) Bonflon aqueous W # 1500; fluorine resin emulsion-based paint; manufactured by AGC Coat-Tech Co., Ltd.

**[Table 36]**

| | | | | Example 52 | Example 53 | Example 54 | Example 55 | Example 56 | Example 57 | Example 58 | Example 59 | Example 60 | Example 61 | Example 62 | Example 63 |
|---|---|---|---|---|---|---|---|---|---|---|---|---|---|---|---|
| Main agent (agent A) composition (Principal component blast furnace slag aqueous suspension) | | | | Example 18 | Example 18 | Example 18 | Example 18 | Example 18 | Example 18 | Example 18 | Example 18 | Example 18 | Example 18 | Example 18 | Example 18 |
| Curing agent (agent B) composition (Alkaline hydraulic reaction inducer) | | | | Example 6 | Example 7 | Example 8 | Example 9 | Example 10 | Example 11 | Example 12 | Example 13 | Example 14 | Example 15 | Example 16 | Example 17 |
| Blending ratio | | Main agent (agent A) | | 100.00 | 100.00 | 100.00 | 100.00 | 100.00 | 100.00 | 100.00 | 100.00 | 100.00 | 100.00 | 100.00 | 100.00 |
| | | Curing agent (agent B) | | 31.25 | 18.66 | 62.50 | 62.50 | 31.25 | 18.66 | 62.50 | 62.50 | 31.25 | 18.66 | 62.50 | 62.50 |
| Blast furnace slag content in mixed liquid | | | | 25.00 | 25.00 | 25.00 | 25.00 | 25.00 | 25.00 | 25.00 | 25.00 | 25.00 | 25.00 | 25.00 | 25.00 |
| Alkaline substance content in mixed liquid | | | | 12.50 | 12.50 | 12.50 | 12.50 | 12.50 | 12.50 | 12.50 | 12.50 | 12.50 | 12.50 | 12.50 | 12.50 |
| Alkaline substance content/inorganic hydraulic component | | | | 0.50 | 0.50 | 0.50 | 0.50 | 0.50 | 0.50 | 0.50 | 0.50 | 0.50 | 0.50 | 0.50 | 0.50 |
| Resistance to crack due to drying | Coating amount g/m²/2 to 5 times | | 400 | No cracks | No cracks | No cracks | No cracks | No cracks | No cracks | No cracks | No cracks | No cracks | No cracks | No cracks | No cracks |
| | | | 600 | No cracks | No cracks | No cracks | No cracks | No cracks | No cracks | No cracks | No cracks | No cracks | No cracks | No cracks | No cracks |
| | | | 800 | No cracks | No cracks | No cracks | No cracks | No cracks | No cracks | No cracks | No cracks | No cracks | No cracks | No cracks | No cracks |
| | | | 1000 | Cracking | Cracking | Cracking | Cracking | Cracking | Cracking | Cracking | Cracking | Cracking | Cracking | Cracking | Cracking |

**[Table 37]**

| | | | | Example 64 | Example 65 | Example 66 | Example 67 | Example 68 | Example 69 | Example 70 | Example 71 | Example 72 | Example 73 | Example 74 | Example 75 |
|---|---|---|---|---|---|---|---|---|---|---|---|---|---|---|---|
| Main agent (agent A) composition (Principal component blast furnace slag aqueous suspension) | | | | Example 19 | Example 20 | Example 21 | Example 22 | Example 23 | Example 24 | Example 25 | Example 26 | Example 27 | Example 28 | Example 29 | Example 30 |
| Curing agent (agent B) composition (Alkaline hydraulic reaction inducer) | | | | Example 6 | Example 6 | Example 6 | Example 6 | - | - | Example 6 | Example 6 | Example 6 | Example 6 | - | Example 6 |
| Blending ratio | | Main agent (agent A) | | 100.00 | 100.00 | 100.00 | 100.00 | 100.00 | 100.00 | 100.00 | 100.00 | 100.00 | 100.00 | 100.00 | 100.00 |
| | | Curing agent (agent B) | | 31.25 | 31.25 | 31.25 | 31.25 | 0.00 | 0.00 | 31.25 | 31.25 | 31.25 | 31.25 | 0.00 | 31.25 |
| Blast furnace slag content in mixed liquid | | | | 25.00 | 25.00 | 25.00 | 25.00 | 25.00 | 25.00 | 25.00 | 25.00 | 25.00 | 25.00 | 25.00 | 25.00 |
| Alkaline substance content in mixed liquid | | | | 12.50 | 12.50 | 12.50 | 12.50 | 12.50 | 12.50 | 12.50 | 12.50 | 12.50 | 12.50 | 12.50 | 12.50 |
| Alkaline substance content/inorganic hydraulic component | | | | 0.50 | 0.50 | 0.50 | 0.50 | 0.50 | 0.50 | 0.50 | 0.50 | 0.50 | 0.50 | 0.50 | 0.50 |
| Resistance to crack due to drying | Coating amount g/m²/2 to 5 times | | 400 | No cracks | No cracks | No cracks | No cracks | No cracks | No cracks | No cracks | No cracks | No cracks | No cracks | No cracks | No cracks |
| | | | 600 | No cracks | No cracks | No cracks | No cracks | No cracks | No cracks | No cracks | No cracks | No cracks | No cracks | No cracks | No cracks |
| | | | 800 | No cracks | No cracks | No cracks | No cracks | No cracks | No cracks | No cracks | No cracks | No cracks | No cracks | No cracks | No cracks |
| | | | 1000 | Cracking | Cracking | Cracking | Cracking | Cracking | Cracking | Cracking | Cracking | Cracking | Cracking | Cracking | Cracking |

**[Table 38]**

| | Example 76 | Example 77 | Example 78 | Example 79 | Example 80 | Example 81 | Example 82 | Example 83 | Example 84 | Example 85 | Example 86 | Example | 87 | | |
|---|---|---|---|---|---|---|---|---|---|---|---|---|---|---|---|
| Main agent (agent A) composition | Example 31 | Example 32 | Example 33 | Example 34 | Example 35 | Example 36 | Example 37 | Example 38 | Example 39 | Example 40 | Example 41 | Example | 42 | | |
| (Principal component blast furnace slag aqueous suspension) | | | | | | | | | | | | | | | |
| Curing agent (agent B) composition (Alkaline hydraulic reaction inducer) | | | | Example 6 | Example 6 | Example 6 | - | - | - | - | - | - | Example 6 | Example 6 | Example 6 |
| Blending ratio | | Main agent (agent A) | | 100.00 | 100.00 | 100.00 | 100.00 | 100.00 | 100.00 | 100.00 | 100.00 | 100.00 | 100.00 | 100.00 | 100.00 |
| | | Curing agent (agent B) | | 31.25 | 31.25 | 31.25 | 0.00 | 0.00 | 0.00 | 0.00 | 0.00 | 0.00 | 31.25 | 31.25 | 31.25 |
| Blast furnace slag content in mixed liquid | | | | 25.00 | 25.00 | 25.00 | 25.00 | 25.00 | 25.00 | 25.00 | 25.00 | 25.00 | 25.00 | 25.00 | 25.00 |
| Alkaline substance content in mixed liquid | | | | 12.50 | 12.50 | 12.50 | 12.50 | 12.50 | 12.50 | 12.50 | 12.50 | 12.50 | 12.50 | 12.50 | 12.50 |
| Alkaline substance content/inorganic hydraulic component | | | | 0.50 | 0.50 | 0.50 | 0.50 | 0.50 | 0.50 | 0.50 | 0.50 | 0.50 | 0.50 | 0.50 | 0.50 |
| Resistance to crack due to drying | Coating amount g/m²/2 to 5 times | | 400 | No cracks | No cracks | No cracks | No cracks | No cracks | No cracks | No cracks | No cracks | No cracks | No cracks | No cracks | No cracks |
| | | | 600 | No cracks | No cracks | No cracks | No cracks | No cracks | No cracks | No cracks | No cracks | No cracks | No cracks | No cracks | No cracks |
| | | | 800 | No cracks | No cracks | No cracks | No cracks | No cracks | No cracks | No cracks | No cracks | No cracks | No cracks | No cracks | No cracks |
| | | | 1000 | Cracking | Cracking | Cracking | Cracking | Cracking | Cracking | Cracking | Cracking | Cracking | No cracks | No cracks | No cracks |

**[Table 39]**

| | | Example 88 | Example 89 | Example 90 | Example 91 | Example 92 | Example 93 | Example 94 | Example 95 | Example 96 | Example 97 | Example 98 | Example 99 | | | |
|---|---|---|---|---|---|---|---|---|---|---|---|---|---|---|---|---|
| Main agent (agent A) composition | Example | Example 43 | Example 44 | Example 45 | Example 46 | Example 47 | Example 48 | Example 49 | Example 50 | Example 51 | - | - | - | | | |
| | Slurry 7 ^{(Note 1)} 59.38% | 0.00 | 0.00 | 0.00 | 0.00 | 0.00 | 0.00 | 0.00 | 0.00 | 0.00 | 42.10 | 42.10 | 42.10 | | | |
| | | Water 60.00% glass ^{(Note 2)} | | | 0.00 | 0.00 | 0.00 | 0.00 | 0.00 | 0.00 | 0.00 | 0.00 | 0.00 | 20.83 | 20.83 | 20.83 |
| | | Boric acid ^{(Note 3)} | | | 0.00 | 0.00 | 0.00 | 3.00 | 1.50 | 0.00 | 1.50 | 2.00 | 1.00 | 3.00 | 1.50 | 0.00 |
| | | Tetrasodium pyrophosphate ^{(Note 4)} | | | 0.00 | 0.00 | 0.00 | 0.00 | 1.50 | 3.00 | 1.50 | 1.00 | 2.00 | 0.00 | 1.50 | 3.00 |
| | | water | | | 0.00 | 0.00 | 0.00 | 0.00 | 0.00 | 0.00 | 0.00 | 0.00 | 0.00 | 34.07 | 34.07 | 34.07 |
| Curing agent (agent B) composition (Alkaline hydraulic reaction inducer) | | | | | Example 6 | Example 6 | Example 6 | Example 6 | Example 6 | Example 6 | Example 6 | Example 6 | Example 6 | - | - | - |
| Blending ratio | | | Main agent (agent A) | | 100.00 | 100.00 | 100.00 | 103.00 | 103.00 | 103.00 | 103.00 | 103.00 | 103.00 | 100.00 | 100.00 | 100.00 |
| | | | Curing agent (agent B) | | 31.25 | 31.25 | 31.25 | 31.25 | 31.25 | 31.25 | 31.25 | 31.25 | 31.5 | 0.00. | 0.00. | 0.00. |
| Blast furnace slag content in mixed liquid | | | | | 25.00 | 25.00 | 25.00 | 12.50 | 12.50 | 12.50 | 12.50 | 12.50 | 12.50 | 25.00 | 25.00 | 25.00 |
| Alumina cement content in mixed liquid | | | | | 0.00 | 0.00 | 0.00 | 12.50 | 12.50 | 12.50 | 12.50 | 12.50 | 12.50 | 0.00 | 0.00 | 0.00 |
| Alkaline substance content in mixed liquid | | | | | 12.50 | 12.50 | 12.50 | 12.50 | 12.50 | 12.50 | 12.50 | 12.50 | 12.50 | 12.50 | 12.50 | 12.50 |
| Alkaline substance content/Alumina cement content | | | | | 0.50 | 0.50 | 0.50 | 0.50 | 0.50 | 0.50 | 0.50 | 0.50 | 0.50 | 0.50 | 0.50 | 0.50 |
| Resistance to crack due to drying | Coating amount g/m²/2 to 5 times | | | 400 | No cracks | No cracks | No cracks | No cracks | No cracks | No cracks | No cracks | No cracks | No cracks | No cracks | No cracks | No cracks |
| | | | | 600 | No cracks | No cracks | No cracks | No cracks | No cracks | No cracks | No cracks | No cracks | No cracks | Cracking | Cracking | Cracking |
| | | | | 800 | No cracks | No cracks | No cracks | No cracks | No cracks | No cracks | No cracks | No cracks | No cracks | Cracking | Cracking | Cracking |
| | | | | 1000 | Cracking | Cracking | Cracking | Cracking | Cracking | Cracking | Cracking | Cracking | Cracking | Cracking | Cracking | Cracking |

**[Table 40]**

| | | | | Comparative Example 26 | Comparative example 5 | Comparative Example 29 | Comparative example 32 |
|---|---|---|---|---|---|---|---|
| Main agent (agent A) composition (Principal component blast furnace slag aqueous suspension) | | | | - | - | ^{(Note 1)} aqueous acrylic urethane resin-based paint | ^{(Note 2)} aqueous fluorine resin paint |
| Curing agent (agent B) composition (Alkaline hydraulic reaction inducer) | | | | - | - | | |
| Alumina cement (Note 1) | | | | 50.00 | - | | |
| Ordinary Portland cement | | | | - | 50.00 | | |
| water | | | | 25.00 | 25.00 | | |
| Blending ratio | | Main agent (agent A) | | - | - | | |
| | | Curing agent (agent B) | | - | - | | |
| Blast furnace slag content in mixed liquid | | | | - | - | | |
| Alkaline substance content in mixed liquid | | | | - | - | | |
| Alkaline substance content/Alumina cement content | | | | - | - | | |
| Resistance to crack due to drying | Coating amount g/m²/2 to 5 times | | 400 | No cracks | No cracks | No cracks | No cracks |
| | | | 600 | No cracks | No cracks | No cracks | No cracks |
| | | | 800 | Cracking | Cracking | No cracks | No cracks |
| | | | 1000 | Cracking | Cracking | Cracking | Cracking |

| | | | | | | | |
|---|---|---|---|---|---|---|---|
| (Note 1): Eau De Fresh U100 II; manufactured by Nippon Paint Co., Ltd. | | | | | | | |

* From the above, the paint of the present invention does not cause the cracking phenomenon in the drying process, which is a weak point of the hydraulic reaction of inorganic substances, and satisfies the film-forming property as a paint.

Furthermore, it can be said that a thick film finish is possible because cracks due to surface drying under a thick film are less likely to occur than conventional organic resin-based paints.

### (5) Development of hardness of coating film

In general, organic resin-based paints for construction have plasticity and low hardness because priority is given to film-forming properties, but the paint of the present invention has high hardness because film-forming properties depend on the hydraulic reaction of inorganic substances.

Below, a mixed liquid of the main agent and the curing agent described in the above table was used as a sample, and applied to a slate plate at a coating amount of 400 g/m²/twice by air spraying, and left under the drying conditions of temperature 23 ± 2°C and humidity 50 ± 5% for 24 hours and 7 days, and the hardness after these periods was evaluated according to "JIS. K. 5600-5-4: 1999, Paint general test method, Part 5: Mechanical properties of coating film, Section 4: Scratch hardness (pencil method)", and the results are described.

For comparison, the topcoat material (Note 1) of Comparative Example 29 and the topcoat material (Note 2) of Comparative Example 32 were added, and they were tested.
(Note 1) Eau De Fresh U100-2; acrylic urethane resin emulsion-based paint; manufactured by Nippon Paint Co., Ltd.
(Note 2) Bonflon aqueous W #1500; fluorine resin emulsion-based paint; manufactured by AGC Coat-Tech Co., Ltd.

**[Table 41]**

| | Example 52 | Example 53 | Example 54 | Example 55 | Example 56 | Example 57 | Example 58 | Example 59 | Example 60 | Example 61 | Example 62 | Example 63 | |
|---|---|---|---|---|---|---|---|---|---|---|---|---|---|
| Main agent (agent A) composition (Principal component blast furnace slag aqueous suspension) | Example 18 | Example 18 | Example 18 | Example 18 | Example 18 | Example 18 | Example 18 | Example 18 | Example 18 | Example 18 | Example 18 | Example 18 | |
| Curing agent (agent B) composition | Example 6 | Example 7 | Example 8 | Example 9 | Example 10 | Example 11 | Example 12 | Example 13 | Example 14 | Example 15 | Example 16 | Example 17 | |

| (Alkaline hydraulic reaction inducer) | | | | | | | | | | | | | |
|---|---|---|---|---|---|---|---|---|---|---|---|---|---|
| Blending ratio | Main agent (agent A) | 100.00 | 100.00 | 100.00 | 100.00 | 100.00 | 100.00 | 100.00 | 100.00 | 100.00 | 100.00 | 100.00 | 100.00 |
| | Curing agent (agent B) | 31.25 | 18.66 | 62.50 | 62.50 | 31.25 | 18.66 | 62.50 | 62.50 | 31.25 | 18.66 | 62.50 | 62.50 |
| Blast furnace slag content in mixed liquid | | 25.00 | 25.00 | 25.00 | 25.00 | 25.00 | 25.00 | 25.00 | 25.00 | 25.00 | 25.00 | 25.00 | 25.00 |
| Alkaline substance content in mixed liquid | | 12.50 | 12.50 | 12.50 | 12.50 | 12.50 | 12.50 | 12.50 | 12.50 | 12.50 | 12.50 | 12.50 | 12.50 |
| Alkaline substance content/inorganic hydraulic component | | 0.50 | 0.50 | 0.50 | 0.50 | 0.50 | 0.50 | 0.50 | 0.50 | 0.50 | 0.50 | 0.50 | 0.50 |
| Pencil hardness | 24 hours later | 4H | 4H | 4H | 4H | 4H | 4H | 4H | 4H | 4H | 4H | 4H | 4H |
| | 7 days later | 6H or more | 6H or more | 6H or more | 6H or more | 6H or more | 6H or more | 6H or more | 6H or more | 6H or more | 6H or more | 6H or more | 6H or more |

**[Table 42]**

| | | Example 64 | Example 65 | Example 66 | Example 67 | Example 68 | Example 69 | Example 70 | Example 71 | Example 72 | Example 73 | Example 74 | Example 75 |
|---|---|---|---|---|---|---|---|---|---|---|---|---|---|
| Main agent (agent A) composition (Principal component blast furnace slag aqueous suspension) | | Example 19 | Example 20 | Example 21 | Example 22 | Example 23 | Example 24 | Example 25 | Example 26 | Example 27 | Example 28 | Example 29 | Example 30 |
| Curing agent (agent B) composition (Alkaline hydraulic reaction inducer) | | Example 6 | Example 6 | Example 6 | Example 6 | - | - | Example 6 | Example 6 | Example 6 | Example 6 | - | Example 6 |
| | Main agent (agent A) | 100.00 | 100.00 | 100.00 | 100.00 | 100.00 | 100.00 | 100.00 | 100.00 | 100.00 | 100.00 | 100.00 | 100.00 |
| Blending ratio | Curing agent (agent B) | 31.25 | 31.25 | 31.25 | 31.25 | 0.00 | 0.00 | 31.25 | 31.25 | 31.25 | 31.25 | 0.00 | 31.25 |
| Blast furnace slag content in mixed liquid | | 25.00 | 25.00 | 25.00 | 25.00 | 25.00 | 25.00 | 25.00 | 25.00 | 25.00 | 25.00 | 25.00 | 25.00 |
| Alkaline substance content in mixed liquid | | 12.50 | 12.50 | 12.50 | 12.50 | 12.50 | 12.50 | 12.50 | 12.50 | 12.50 | 12.50 | 12.50 | 12.50 |
| Alkaline substance content/inorganic hydraulic component | | 0.50 | 0.50 | 0.50 | 0.50 | 0.50 | 0.50 | 0.50 | 0.50 | 0.50 | 0.50 | 0.50 | 0.50 |
| Pencil hardness | 24 hours later | 4H | 4H | 4H | 3H | 3H | 4H | 4H | 4H | 2H | 2H | 4H | 4H |
| | 7 days later | 6H or more | 6H or more | 6H or more | 4H | 4H | 6H or more | 6H or more | 6H or more | 4H | 4H | 6H or more | 6H or more |

**[Table 43]**

| | | Example 76 | Example 77 | Example 78 | Example 79 | Example 80 | Example 81 | Example 82 | Example 83 | Example 84 | Example 85 | Example 86 | Example 87 |
|---|---|---|---|---|---|---|---|---|---|---|---|---|---|
| Main agent (agent A) composition (Principal component blast furnace slag aqueous suspension) | | Example 31 | Example 32 | Example 33 | Example 34 | Example 35 | Example 36 | Example 37 | Example 38 | Example 39 | Example 40 | Example 41 | Example 42 |
| Curing agent (agent B) composition (Alkaline hydraulic reaction inducer) | | Example 6 | Example 6 | Example 6 | | | | | | | Example 6 | Example 6 | Example 6 |
| Blending ratio | Main agent (agent A) | 100.00 | 100.00 | 100.00 | 100.00 | 100.00 | 100.00 | 100.00 | 100.00 | 100.00 | 100.00 | 100.00 | 100.00 |
| | Curing agent (agent B) | 31.25 | 31.25 | 31.25 | 0.00 | 0.00 | 0.00 | 0.00 | 0.00 | 0.00 | 31.25 | 31.25 | 31.25 |
| Blast furnace slag content in mixed liquid | | 25.00 | 25.00 | 25.00 | 25.00 | 25.00 | 25.00 | 25.00 | 25.00 | 25.00 | 25.00 | 25.00 | 25.00 |
| Alkaline substance content in mixed liquid | | 12.50 | 12.50 | 12.50 | 12.50 | 12.50 | 12.50 | 12.50 | 12.50 | 12.50 | 12.50 | 12.50 | 12.50 |
| Alkaline substance content/inorganic hydraulic component | | 0.50 | 0.50 | 0.50 | 0.50 | 0.50 | 0.50 | 0.50 | 0.50 | 0.50 | 0.50 | 0.50 | 0.50 |
| Pencil hardness | 24 hours later | 4H | 3H | 3H | 3H | 3H | 3H | 3H | 2H | 2H | 4H | 4H | 4H |
| | 7 days later | 6H or more | 4H | 4H | 4H | 4H | 4H | 4H | 4H | 4H | 6H or more | 6H or more | 6H or more |

**[Table 44]**

| | | Example 88 | Example 89 | Example 90 | Example 91 | Example 92 | Example 93 | Example 94 | Example 95 | Example 96 | Example 97 | Example 98 | Example 99 |
|---|---|---|---|---|---|---|---|---|---|---|---|---|---|
| Main agent (agent A) composition | Example | Example 43 | Example 44 | Example 45 | Example 46 | Example 47 | Example 48 | Example 49 | Example 50 | Example 51 | - | - | - |
| | Slurry 7 ^{(Note 1)} 59.38 % | 0.00 | 0.00 | 0.00 | 0.00 | 0.00 | 0.00 | 0.00 | 0.00 | 0.00 | 42.10 | 42.10 | 42.10 |
| | Water 60.00% glass ^{(Note 2)} | 0.00 | 0.00 | 0.00 | 0.00 | 0.00 | 0.00 | 0.00 | 0.00 | 0.00 | 20.83 | 20.83 | 20.83 |
| | Boric acid ^{(Note 3)} | 0.00 | 0.00 | 0.00 | 3.00 | 1.50 | 0.00 | 1.50 | 2.00 | 1.00 | 3.00 | 1.50 | 0.00 |
| | Tetrasodium pyrophosphate ^{(Note 4)} | 0.00 | 0.00 | 0.00 | 0.00 | 1.50 | 3.00 | 1.50 | 1.00 | 2.00 | 0.00 | 1.50 | 3.00 |
| | water | 0.00 | 0.00 | 0.00 | 0.00 | 0.00 | 0.00 | 0.00 | 0.00 | 0.00 | 34.07 | 34.07 | 34.07 |
| Curing agent (agent B) composition (Alkaline hydraulic reaction inducer) | | Example 6 | Example 6 | Example 6 | Example 6 | Example 6 | Example 6 | Example 6 | Example 6 | Example 6 | - | - | - |
| Blending ratio | Main agent (agent A) | 100.00 | 100.00 | 100.00 | 103.00 | 103.00 | 103.00 | 103.00 | 103.00 | 103.00 | 100.00 | 100.00 | 100.00 |
| | Curing agent (agent B) | 31.25 | 31.25 | 31.25 | 31.25 | 31.25 | 31.25 | 31.25 | 31.25 | 31.25 | 0.00 | 0.00 | 0.00 |
| Blast furnace slag content in mixed liquid | | 25.00 | 25.00 | 25.00 | 12.50 | 12.50 | 12.50 | 12.50 | 12.50 | 12.50 | 25.00 | 25.00 | 25.00 |
| Alumina cement content in mixed liquid | | 0.00 | 0.00 | 0.00 | 12.50 | 12.50 | 12.50 | 12.50 | 12.50 | 12.50 | 0.00 | 0.00 | 0.00 |
| Alkaline substance content in mixed liquid | | 12.50 | 12.50 | 12.50 | 12.50 | 12.50 | 12.50 | 12.50 | 12.50 | 12.50 | 12.50 | 12.50 | 12.50 |
| Alkaline substance content/Alumina cement content | | 0.50 | 0.50 | 0.50 | 0.50 | 0.50 | 0.50 | 0.50 | 0.50 | 0.50 | 0.50 | 0.50 | 0.50 |
| Pencil hardness | 24 hours later | 4H | 4H | 4H | 4H | 4H | 4H | 4H | 4H | 4H | 4H | 4H | 4H |
| | 7 days later | 6H or more | 6H or more | 6H or more | 6H or more | 6H or more | 6H or more | 6H or more | 6H or more | 6H or more | 6H or more | 6H or more | 6H or more |

**[Table 45]**

| | Comparative Example 26 | Comparative example 5 | Comparative Example 29 | Comparative example 32 | |
|---|---|---|---|---|---|
| Main agent (agent A) composition (Principal component blast furnace slag aqueous suspension) | - | - | ^{(Note 1)}aqueous acrylic urethane resin-based paint | ^{(Note 2)}aqueous fluorine resin paint | |
| Curing agent (agent B) composition (Alkaline hydraulic reaction inducer) | - | - | | | |
| Alumina cement ^{(Note 1)} | | 50.00 | | | |
| Ordinary Portland cement | | | 50.00 | | |
| water | | 25.00 | 25.00 | | |
| Blending ratio | Main agent (agent A) | | | | |
| | Curing agent (agent B) | | | | |
| Blast furnace slag content in mixed liquid | | | | | |
| Alkaline substance content in mixed liquid | | | | | |
| Alkaline substance content/Alumina cement content | | | | | |
| Pencil hardness | 24 hours later | 6H or more | 6H or more | 4B or less | 4B or less |
| | 7 days later | 6H or more | 6H or more | 2B | 2B |

| | | | | | |
|---|---|---|---|---|---|
| (Note 1): Eau De Fresh U100 II; manufactured by Nippon Paint Co., Ltd. (Note 2): Bonflon aqueous W # 1500; manufactured by AGC Coat-Tech Co., Ltd. | | | | | |

* From the above, the paint of the present invention develops hardness quickly, and it is possible to realize the coating film hardness that cannot be found with conventional organic resin-based paints.

It can be said that this is the result of efficient functioning of the hydraulic reaction of a blast furnace slag contained in the paint.

### (6) Use as modifier for organic resin and organic resin paint

Among the above cases, it was found that it was possible to prepare a one-part formulation in the form of a mixture of the main agent composition containing as the main component a blast furnace slag aqueous suspension containing a hydraulic binder with the alkaline curing agent composition that induces a hydraulic reaction containing sodium silicate as the main component, in Examples 68, 69, 74, 79, 80, 81, 82, 83, 84, 97, 98 and 99 of the paint of the present invention, therefore, it is conceivable that it will be used as a modifier for the adhesion strength of ready-made paints and emulsion resins and the hardness of the coating film.

Hence, the slurry 6 of the sodium silicate-containing blast furnace slag aqueous suspension was added to a general-purpose emulsion resin and a ready-made paint, and the appearance (maintenance of transparency), the change of adhesiveness, and the change of hardness of the coating film, and further, the blocking property of the coating film, and the like, were tested.

### (a) Addition to general-purpose organic resin

### • Sample preparation

Water was added to each general-purpose emulsion resin to adjust the solid content to 30%, and the slurry 6 was added so that the blast furnace slag content was 5% and 10% with respect to the resin solid content, and it was stirred at a revolution of 1500 rpm with a desktop disper, to give a sample.

### • Evaluation method

(a) Miscibility: Observation during sample preparation
   Evaluation criteria: ∘ No abnormality/∘△ Slightly thickened
(b) Appearance of dried coating film: On an MDF board coated with a black paint, the sample prepared above was applied three times with a short hair roller, and dried indoors (at ordinary temperature) for 14 days, and the surfaces of once-applied coating, twice-applied coating and three times-applied coating were visually observed.
   Evaluation criteria: ∘ if there is transparency/o if the gloss disappears evenly
(c) Blocking property of coating film: The sample prepared above was applied twice onto an MDF board with a short hair roller, and dried indoors (at ordinary temperature) for 14 days, to obtain test specimens which were then put together on the coated surfaces, and a load of 1500 kg/m² was applied for 6 days, and the degree of blocking was observed.
   Evaluation criteria: ∘ It peels off just by touching/△ It peels off when a weak force is applied/▲ It peels off when a strong force is applied/× It cannot be peeled off by human power
(d) Hardness of coating film: The sample prepared above was applied twice to a slate plate with an air spray, and dried indoors (at ordinary temperature) for 14 days, to obtain a test specimen, which was then applied to the following evaluation.
   Evaluation Criteria: The results of evaluation according to "JIS K 5600-5-4: 1999, Paint general test method, Part 5: Mechanical properties of coating film, Section 4: Scratch hardness (pencil method)" are described.
(e) Storage stability: The sample prepared by the above method was placed in a closed container (glass bottle) and allowed to stand still in a room at room temperature (18 to 24°C) for 3 months, and then, the state was observed.
   Evaluation criteria: ∘ Flowable liquid without aggregates and increase in viscosity/× Poorly flowable liquid with aggregates and increase in viscosity.

**[Table 46]**

| | | | Example 100 | Example 101 | Example 102 | Example 103 | Example 104 | Example 105 | Example 106 | Example 107 | Comparative Example 33 | Comparative Example 34 | Comparative Example 35 | Comparative Example 36 |
|---|---|---|---|---|---|---|---|---|---|---|---|---|---|---|
| Slurry 6 | | | 3.75 | 7.50 | 3.75 | 7.50 | 3.75 | 7.50 | 3.75 | 7.50 | 0.00 | 0.00 | 0.00 | 0.00 |
| resin | A: styrene/acrylic (Note 1) resin | | 66.67 | 66.67 | 0.00 | 0.00 | 0.00 | 0.00 | 0.00 | 0.00 | 66.67 | 0.00 | 0.00 | 0.00 |
| | B: acrylic resin (Note 2) | | 0.00 | 0.00 | 66.67 | 66.67 | 0.00 | 0.00 | 0.00 | 0.00 | 0.00 | 66.67 | 0.00 | 0.00 |
| | C: styrene/acrylic (Note 3) resin | | 0.00 | 0.00 | 0.00 | 0.00 | 54.55 | 54.55 | 0.00 | 0.00 | 0.00 | 0.00 | 54.55 | 0.00 |
| | D: styrene/acrylic (Note 4) resin | | 0.00 | 0.00 | 0.00 | 0.00 | 0.00 | 0.00 | 60.00 | 60.00 | 0.00 | 0.00 | 0.00 | 60.00 |
| water | | | 29.58 | 25.83 | 29.58 | 25.83 | 41.70 | 37.95 | 36.25 | 32.50 | 33.33 | 33.33 | 45.45 | 40.0 |
| total | | | 100.00 | 100.00 | 100.00 | 100.00 | 100.00 | 100.00 | 100.00 | 100.00 | 100.00 | 100.00 | 100.00 | 100.00 |
| Blast furnace slag content % | | | 1.73 | 3.47 | 1.73 | 3.47 | 1.73 | 3.47 | 1.73 | 3.47 | 0.00 | 0.00 | 0.00 | 0.00 |
| Resin solid content concentration % | | | 30.00 | 30.00 | 30.00 | 30.00 | 30.00 | 30.00 | 30.00 | 30.00 | 30.00 | 30.00 | 30.00 | 30.00 |
| Blast furnace slag content/resin solid content concentration | | | 0.06 | 0.12 | 0.06 | 0.12 | 0.06 | 0.12 | 0.06 | 0.12 | 0.00 | 0.00 | 0.00 | 0.00 |
| Miscibility | | | ∘△ | ∘△ | ∘ | ∘ | ∘ | ∘ | ∘ | ∘ | - | - | - | - |
| Appearance dry coating film ^{(Note 2)} | of transparency | Once | ∘ | ∘ | ∘ | ∘ | ∘ | ∘ | ∘ | ∘ | ∘ | ∘ | ∘ | ∘ |
| | | Twice | ∘ | ∘ | ∘ | ∘ | ∘ | ∘ | ∘ | ∘ | ∘ | ∘ | ∘ | ∘ |
| | | 3 times | ∘ | ∘ | ∘ | ∘ | ∘ | ∘ | ∘ | ∘ | ∘ | ∘ | ∘ | ∘ |
| | gloss | Once | ∘ | ∘ | ∘ | ∘ | ∘ | ∘ | ∘ | ∘ | | | | |
| | | Twice | ∘ | ∘ | ∘ | ∘ | ∘ | ∘ | ∘ | ∘ | - | - | - | - |
| | | 3 times | ∘ | ∘ | ∘ | ∘ | ∘ | ∘ | ∘ | ∘ | | | | |
| Coating film blocking property | | | ∘ | ∘ | ▲ | ∘ | △ | ∘ | △ | ∘ | × | × | × | × |
| Coating film hardness | | | 3H | 4H | H | 2H | 2H | 4H | 2H | 4H | 4B or less | 2B | 4B | 4B |
| Storage stability | | | ∘ | ∘ | ∘ | ∘ | ∘ | ∘ | ∘ | ∘ | ∘ | ∘ | ∘ | ∘ |

| | | | | | | | | | | | | | | |
|---|---|---|---|---|---|---|---|---|---|---|---|---|---|---|
| (Note 1): A: Yodosol AD81; styrene/acrylic resin; Tg = 20°C; NV = 45%, ? = 8; manufactured by Henkel Technologies Japan Co., Ltd. (Note 2): B: Yodosol AD93; acrylic resin; Tg = -10°C; NV = 45%, ? = 8.5; manufactured by Henkel Technologies Japan Co., Ltd. (Note 3): C: PEGAR 861; styrene/acrylic resin; Tg = 0°C; NV = 55%, ? = 8.5; manufactured by Koatsu Gas Kogyo Co., Ltd. (Note 4): D: PEGAR 862; styrene/acrylic resin; Tg = 0°C; NV = 50%, ? = 8; manufactured by Koatsu Gas Kogyo Co., Ltd. | | | | | | | | | | | | | | |

* From the above results, it can be said that when a small amount of the blast furnace slag aqueous suspension is added to general-purpose resins, the hardness of the coating film and the blocking property of the coating film are significantly improved, and the appearance is not differing from that of the non-added coating film, therefore, the blast furnace slag aqueous suspension has utility value as a modifier for a resin.

### (b) Addition to commercially available paint

### • Sample preparation

The slurry 6 was added to a commercially available paint so that the amount of a blast furnace slag was 5% and 10% with respect to 100% by weight of the paint liquid, and stirred with a desktop disper at a revolution of 1500 rpm, to obtain a sample.

### • Evaluation method

(a) Appearance of dried coating film: The sample prepared above was applied twice with a short hair roller, and dried indoors (at ordinary temperature) for 14 days, and the surfaces of once-applied coating and twice-applied coating were visually observed.
   Evaluation criteria: ∘ No difference from non-colored products/△ Gloss disappears but bottom gloss exists/∘ Gloss disappears uniformly/ Gloss disappears uniformly and there is perfect matte feeling
(b) Hardness of coating film: The sample prepared above was applied twice to a slate plate with an air spray, and dried indoors (at ordinary temperature) for 14 days, to obtain a test specimen, which was then applied to the following evaluation.
   Evaluation Criteria: The results of evaluation according to "JIS K 5600-5-4: 1999, Paint general test method, Part 5: Mechanical properties of coating film, Section 4: Scratch hardness (pencil method)" are described.

**[Table 47]**

| | | | Example 108 | Example 109 | Example 110 | Example 111 | Example 112 | Example 113 | Comparative Example 37 | Comparative Example 38 | Comparative Example 39 | Comparative Example 40 | Comparative Example 41 | Comparative Example 42 |
|---|---|---|---|---|---|---|---|---|---|---|---|---|---|---|
| Slurry 6 slag 40% | | | 11.11 | 22.22 | 11.11 | 22.22 | 11.11 | 22.22 | 0.00 | 0.00 | 0.00 | 0.00 | 0.00 | 0.00 |
| resin | A: Acrylic urethane (Note 1) resin paint | | 88.89 | 77.78 | 0.00 | 0.00 | 0.00 | 0.00 | 100.00 | 0.00 | 0.00 | 81.00 | 0.00 | 0.00 |
| | B: Acrylic silicone (Note 2) resin paint | | 0.00 | 0.00 | 88.89 | 77.78 | 0.00 | 0.00 | 0.00 | 100.00 | 0.00 | 0.00 | 81.00 | 0.00 |
| | C: Fluorine (Note 3) resin paint | | 0.00 | 0.00 | 0.00 | 0.00 | 88.89 | 77.78 | 0.00 | 0.00 | 100.00 | 0.00 | 0.00 | 81.00 |
| Blast furnace slag (Note 4) | | | 0.00 | 0.00 | 0.00 | 0.00 | 0.00 | 0.00 | 0.00 | 0.00 | 0.00 | 9.00 | 9.00 | 9.00 |
| water | | | 0.00 | 0.00 | 0.00 | 0.00 | 0.00 | 0.00 | 0.00 | 0.00 | 0.00 | 10.00 | 10.00 | 10.00 |
| total | | | 100.00 | 100.00 | 100.00 | 100.00 | 100.00 | 100.00 | 100.00 | 100.00 | 100.00 | 100.00 | 100.00 | 100.00 |
| Blast furnace slag content % | | | 4.44 | 8.89 | 4.44 | 8.89 | 4.44 | 8.89 | 0.00 | 0.00 | 0.00 | 9.00 | 9.00 | 9.00 |
| Coating liquid concentration % | | | 88.89 | 77.78 | 88.89 | 77.78 | 88.89 | 77.78 | 100.00 | 100.00 | 100.00 | 81.00 | 81.00 | 81.00 |
| Blast furnace slag content/coating liquid content | | | 0.05 | 0.11 | 0.05 | 0.11 | 0.05 | 0.11 | 0.00 | 0.00 | 0.00 | 0.11 | 0.11 | 0.11 |
| Appearance of dry coating film | color | Once | ∘ | ∘ | ∘ | ∘ | ∘ | ∘ | | | | ∘ | ∘ | ∘ |
| | | Twice | ∘ | ∘ | ∘ | ∘ | ∘ | ∘ | - | - | - | ∘ | ∘ | ∘ |
| | gloss | Once | ∘ | ⊚ | ∘ | ⊚ | ∘ | ⊚ | Glossy | Glossy | Glossy | △ | △ | △ |
| | | Twice | ∘ | ⊚ | ∘ | ⊚ | ∘ | ⊚ | Glossy | Glossy | Glossy | △ | △ | △ |
| Coating film hardness | 4H | 4H | 4H | 4H | 4H | 4H | 2B | B | 2B | 4H | 4H | 4H | | |

| | | | | | | | | | | | | | | |
|---|---|---|---|---|---|---|---|---|---|---|---|---|---|---|
| (Note 1): Eau De Fresh U100 II; aqueous acrylic urethane resin paint; manufactured by Nippon Paint Co., Ltd. (Note 2): Eau De Fresh SiI100 III; aqueous acrylic silicone resin paint; manufactured by Nippon Paint Co., Ltd. (Note 3): Bonflon aqueous W # 1500; aqueous fluorine resin paint; manufactured by AGC Coat-Tech Co., Ltd. (Note 4): JIS A 6206 standard product 4000 | | | | | | | | | | | | | | |

* From the above, a coating film with a complete matte feel can be obtained by simply adding a small amount of the blast furnace slag aqueous suspension to a commercially available paint. In general, it is difficult to make a perfect mat with aqueous paints, and only matte with a glossy bottom can be obtained. Further, when a powder type matte material is used, it is necessary to disperse it in a liquid such as water before adding it in order to improve dispersion in the paint, then, if the slurry 6 of the blast furnace slag aqueous suspension of the present invention is used, a sufficient matting effect can be obtained only by adding a small amount of it directly to the paint.

Further, a phenomenon is observed in which the hardness of the coating film is dramatically improved by adding the slurry 6 of the blast furnace slag aqueous suspension. This phenomenon is considered to be a proof that the potential hydraulic reactivity of the blast furnace slag as the content of the slurry 6 of the blast furnace slag aqueous suspension was sufficiently induced by sodium silicate and imparted the property for solidifying inorganic substances.

In the above example, the blast furnace slag according to JIS A6206 standard product 4000 is used, but the present invention is not limited to this.

All types of the blast furnace slag described in [Reference Table 1] and all qualities of the blast furnace slag described in [Reference Table 2] are inclusive.

### Industrial Applicability

The present invention can be applied not only to applications that require strength, hardness, and acid resistance, which are merits of conventional inorganic two-part paints, but also to various applications requiring thin films for which the inorganic two-part paints are believed difficult to be used.

Specifically, the exterior of a structure is currently treated with an organic resin-based paint whose principal component is an organic resin that is easily affected by ultraviolet (UV) deterioration for the purpose of maintaining beauty and protecting the structure, however, the effect of maintaining beauty and protecting the structure is short since it depends on the organic resin that is easily affected by ultraviolet (UV) deterioration, while by treating with the blast furnace slag-type two-part or one-part paint of the present invention, the effect of maintaining beauty and protecting the structure can be maintained for a long period of time since it is not affected by ultraviolet (UV) deterioration.

In addition, for materials with poor hardness and strength in building materials and industrial products and the like, the surface of the material can be modified to hardness and strength close to those of minerals and metals by simply coating it, so it can be utilized also for the application of surface treatment of the materials.

Further, the blast furnace slag-based two-part or one-part paint of the present invention is not limited to so-called paint applications, but it can also be used as a modifier that improves hardness and strength for organic resins and organic resin paints.

## Claims

1. A blast furnace slag-type two-part paint in which
a stabilized blast furnace slag aqueous suspension containing blast furnace slags described below is contained as the principal component of the main agent,
an alkaline liquid having dissolved therein sodium silicate, sodium carbonate, or potassium carbonate that induces a hydraulic reaction of the suspension serves as the hydraulic reaction inducer, and
the main agent and the hydraulic reaction inducer are packaged separately:
<Principal components of the main agent>
(A) 0.5 to 42% by weight of a high-blast-furnace-slag-content blast furnace slag suspension having a blast furnace slag content of 10 to 60% by weight or more, with the total weight of the blast furnace slag aqueous suspension being 100% by weight;
(B) 0.1 to 20% by weight of a blocking agent containing a phosphorus-containing compound in the blast furnace slag aqueous suspension, with the total weight of the blast furnace slag aqueous suspension being 100% by weight;
(C) 0.3 to 5% by weight of a blocking agent differing from a phosphorus-containing compound in the blast furnace slag aqueous suspension, with the total weight of the blast furnace slag aqueous suspension being 100% by weight;
(D) water retention agent;
(E) interfacial tension adjuster;
(F) viscosity (tenacious property) adjuster;
(G) color pigment;
(H) functional pigment;
(I) extender pigment;
(J) antibacterial agent, preservative, antirust agent;
(K) solvent.

2. The blast furnace slag-type two-part paint according to claim 1, wherein said blocking agent containing a phosphorus-containing compound is a blocking agent containing a phosphorus-containing compound selected from optional compounds capable of reacting with at least one metaphosphoric acid, phosphorous acid, phosphoric acid, phosphonic acid and water to form any of these compounds, the paint containing 0.1 to 20% by weight of the blocking agent containing a phosphorus-containing compound, with the total weight of the blast furnace slag aqueous suspension being 100% by weight.

3. The blast furnace slag-type two-part paint according to claim 2, wherein said compound capable of forming metaphosphoric acid, phosphorous acid, phosphoric acid or phosphonic acid is selected from phosphorus pentoxide, pyrophosphoric acid, tripolyphosphoric acid, aminotrimethylenephosphonic acid, 2-aminoethylphosphonic acid, 1-hydroxyethylidene-1,1-diphosphonic acid, ethylenediaminetetramethylenephosphonic acid, tetramethylenediaminetetramethylenephosphonic acid, hexamethylenediaminetetramethylenephosphonic acid, pentamethylenediethylenetriamine phosphonate, phostricarboxylic acid, N-(phosphonomethyl) iminodiacetic acid, 2-carboxyethylphosphonic acid, and 2-hydroxyphosphonocarboxylic acid, and further, selected from sodium metaborate, sodium tetraborate, boron sodium oxide-tetrahydrate and the like as borate compounds other than phosphoric acid type compounds.

4. The blast furnace slag-type two-part paint according to claim 1, wherein said blocking agent composed of boric acid or a borate compound differing from a phosphorus-containing compound in the blast furnace slag aqueous suspension is contained in an amount of 0.3 to 5% by weight, with the total weight of the blast furnace slag aqueous suspension being 100% by weight.

5. The blast furnace slag-type two-part paint according to any one of claims 1 to 4, wherein said hydraulic reaction inducer that induces a hydraulic reaction of the main agent is **characterized by** being composed of a substance which has high solubility in water containing sodium silicate, sodium carbonate, or potassium carbonate, and turns into a high-alkaline aqueous solution.

6. The blast furnace slag-type two-part paint according to any one of claims 1 to 5, wherein a calcium salt compound with which a free calcium ion that causes precipitation of efflorescence is likely to exist when made into an aqueous solution or a substance that changes to calcium hydroxide is not used as the hydraulic reaction inducer that induces a hydraulic reaction of the main agent.

7. A blast furnace slag-type one-part paint in which
a stabilized blast furnace slag aqueous suspension containing blast furnace slags described below is contained as the principal component of the main agent,
a hydraulic reaction inducer containing sodium silicate as the main component is used, and
the main agent and the hydraulic reaction inducer are packaged together:
<Principal components of the main agent>
(A) 0.5 to 42% by weight of a high-blast-furnace-slag-content blast furnace slag suspension having a blast furnace slag content of 10 to 60% by weight or more, with the total weight of the blast furnace slag aqueous suspension being 100% by weight;
(B) 0.1 to 20% by weight of a blocking agent containing a phosphorus-containing compound in the blast furnace slag aqueous suspension, with the total weight of the blast furnace slag aqueous suspension being 100% by weight;
(C) 0.3 to 5% by weight of a blocking agent differing from a phosphorus-containing compound in the blast furnace slag aqueous suspension, with the total weight of the blast furnace slag aqueous suspension being 100% by weight;
(D) water retention agent;
(E) interfacial tension adjuster;
(F) viscosity (tenacious property) adjuster;
(G) color pigment;
(H) functional pigment;
(I) extender pigment;
(J) antibacterial agent, preservative, antirust agent;
(K) solvent.
